# EUROPEAN PATENT APPLICATION

(11) **EP 4 098 696 A1**
(43) Date of publication of application: **07.12.2022**
(21) Application number: 21760751.4
(22) Date of filing: 24.02.2021
(51) Int. Cl.: C08L 33/14

(54) **THERMOSETTING RESIN COMPOSITION AND TRANSESTERIFICATION REACTION CATALYST**

(30) Priority: 28.02.2020 WO PCT/JP2020/008327; 25.06.2020 JP 2020109577
(71) Applicant: Kyoeisha Chemical Co., Ltd., Osaka-shi, Osaka 541-0054 (JP)
(72) Inventor: MORIWAKI, Yuya, Nara-shi, Nara 630-8453 (JP); MATSUDA, Tomoya, Nara-shi, Nara 630-8453 (JP); ASADA, Kosuke, Nara-shi, Nara 630-8453 (JP); DONKAI, Masaru, Nara-shi, Nara 630-8453 (JP); NAKAGAWA, Hiroki, Nara-shi, Nara 630-8453 (JP); MAEO, Keiji, Nara-shi, Nara 630-8453 (JP); YOSHIDA, Narutoshi, Nara-shi, Nara 630-8453 (JP); TAKENAKA, Naomi, Nara-shi, Nara 630-8453 (JP)
(74) Representative: Isarpatent
(86) International application number: PCT/JP2021/006733
(87) International publication number: WO 2021/172307

(57) **Abstract**

Provided is a thermosetting resin composition that has high reactivity, can be adapted to various curing conditions, and has extremely high versatility.

The thermosetting resin composition contains a resin component (A) containing -COOR (R is an alkyl group having 50 or less carbon atoms) and a hydroxy group, and a transesterification catalyst (B). A curing start temperature is 130°C or lower, and a gel fraction when cured under a condition of baking at 150°C for 30 minutes is 80% or more.

## Description

### Technical Field

The present invention relates to a thermosetting resin composition and a transesterification reaction catalyst.

### Background Art

The present inventors have studied a thermosetting resin composition in which a transesterification reaction is a curing reaction (PTL 1 to PTL 3). Through such a study, it is clear that a thermosetting resin composition having performance equivalent to or higher than that of curing using a melamine resin or an isocyanate compound, which is a known curing agent, can be provided.

In such a thermosetting resin composition in which a transesterification reaction is a curing reaction, a composition having higher reactivity is further required. That is, it may be required to cope with cases where a component that inhibits the curing reaction is present in the system, curing at a low temperature is required, or short-time curing is required. Further, it may be necessary to examine an application to an ambient temperature curable resin composition. A known thermosetting resin composition can be sufficiently cured under general conditions, but good curing performance cannot be ensured in a wide range including the above cases.

In a polycondensation reaction of a thermosetting polyester resin, a phosphorus-based compound is blended (PTL 4 to PTL 6). Further, since in manufacturing of the polyester resin, a metal compound as a transesterification reaction catalyst is often used, the metal compound and the phosphorus-based compound may coexist in a polycondensation step.

### Citation List

### Patent Literature

PTL 1: Japanese Patent No. 6398026
PTL 2: WO 2019/069783
PTL 3: WO 2019/139069
PTL 4: WO 2002/068497
PTL 5: JP-A-2017-39941
PTL 6: WO 018/035337

### Summary of Invention

### Technical Problem

In view of the above, an object of the present invention is to provide a thermosetting resin composition that has high reactivity, can be adapted to various curing conditions, and has extremely high versatility.

### Solution to Problem

The present invention relates to a thermosetting resin composition containing: a resin component (A) containing - COOR (R is an alkyl group having 50 or less carbon atoms) and a hydroxy group; and a transesterification catalyst (B), in which a curing start temperature is 130°C or lower, and a gel fraction when cured under a condition of baking at 150°C for 30 minutes is 80% or more.

In the above thermosetting resin composition, the transesterification catalyst (B) preferably contains a compound (B-1) containing at least one metal element selected from the group consisting of zinc, tin, titanium, aluminum, zirconium, and iron, and at least one compound (B-2) selected from the group consisting of an organophosphorus compound, urea, alkylated urea, thiourea, alkylated thiourea, a sulfoxide compound, a quaternary ammonium compound, a quaternary phosphonium compound, and pyridine, quinoline, isoquinoline, phenanthroline, and a derivative thereof.

The present invention also relates to a thermosetting resin composition containing: a resin component (A) containing -COOR (R is an alkyl group having 50 or less carbon atoms) and a hydroxy group; and a transesterification catalyst (B), in which the transesterification catalyst (B) is a zirconium compound.

The present invention also relates to a thermosetting resin composition containing: a resin component (A) containing -COOR (R is an alkyl group having 50 or less carbon atoms) and a hydroxy group; and a transesterification catalyst (B), in which the transesterification catalyst (B) contains a compound (B-1) containing at least one metal element selected from the group consisting of zinc, tin, titanium, aluminum, zirconium, and iron, and at least one compound (B-2) selected from the group consisting of an organophosphorus compound, urea, alkylated urea, thiourea, alkylated thiourea, a sulfoxide compound, a quaternary ammonium compound, a quaternary phosphonium compound, and pyridine, quinoline, isoquinoline, phenanthroline, and a derivative thereof.

The present invention also relates to a transesterification catalyst containing: a compound (B-1) containing at least one metal element selected from the group consisting of zinc, tin, titanium, aluminum, zirconium, and iron; and at least one compound (B-2) selected from the group consisting of an organophosphorus compound, urea, alkylated urea, thiourea, alkylated thiourea, a sulfoxide compound, a quaternary ammonium compound, a quaternary phosphonium compound, phenanthroline, and a phenanthroline derivative.

### Advantageous Effect

Since the thermosetting resin composition according to the present invention has excellent curing reactivity, good curing performance such as low-temperature curing and short-time curing can be obtained. Further, the thermosetting resin composition according to the present invention can also be applied to an ambient temperature curable resin composition.

In addition, the transesterification catalyst according to the present invention has excellent transesterification ability, and has good curing performance even in mixing with a component that inhibits transesterification reactivity.

### Brief Description of Drawings

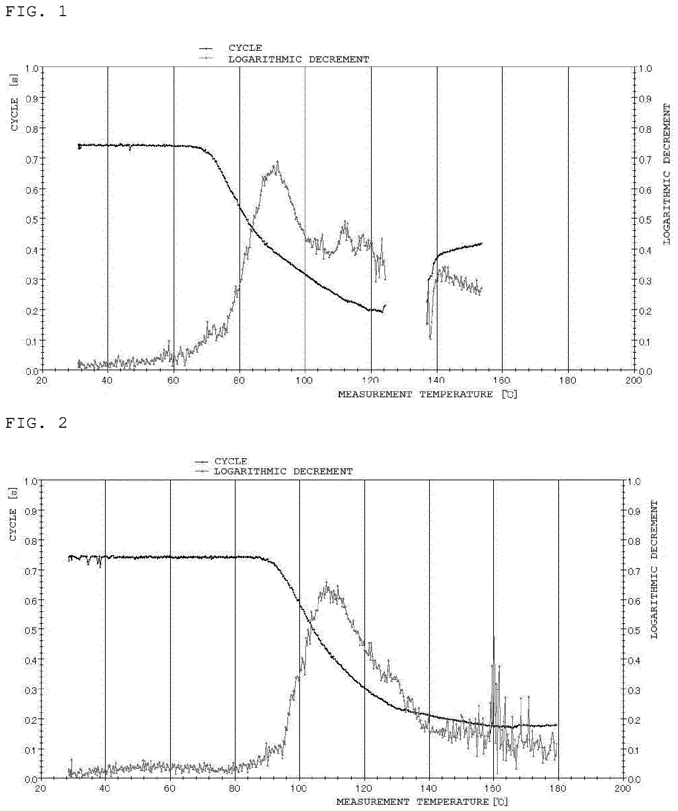

[FIG. 1] FIG. 1 is data of a rigid pendulum tester according to Example 1.
[FIG. 2] FIG. 2 is data of a rigid pendulum tester according to Example 2.

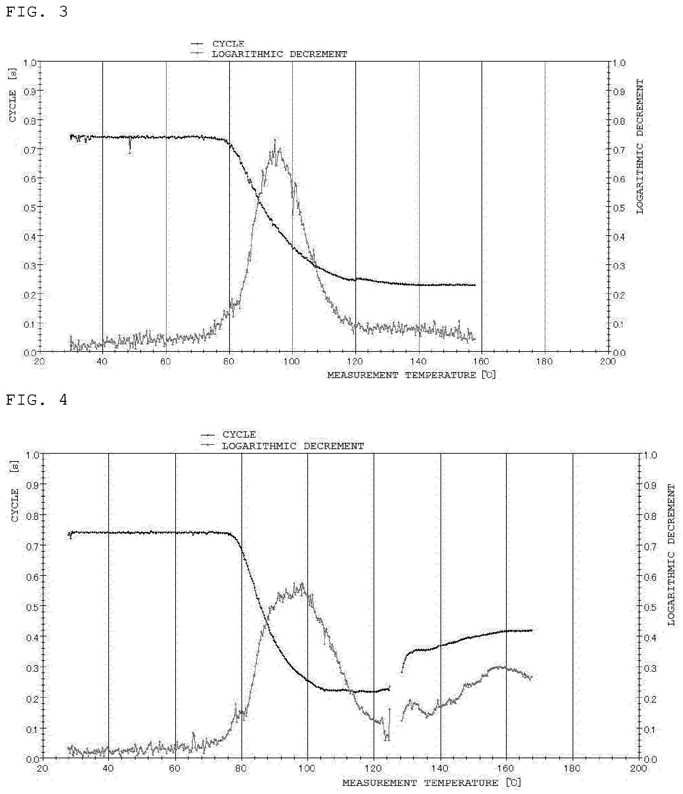

[FIG. 3] FIG. 3 is data of a rigid pendulum tester according to Example 3.
[FIG. 4] FIG. 4 is data of a rigid pendulum tester according to Example 4.

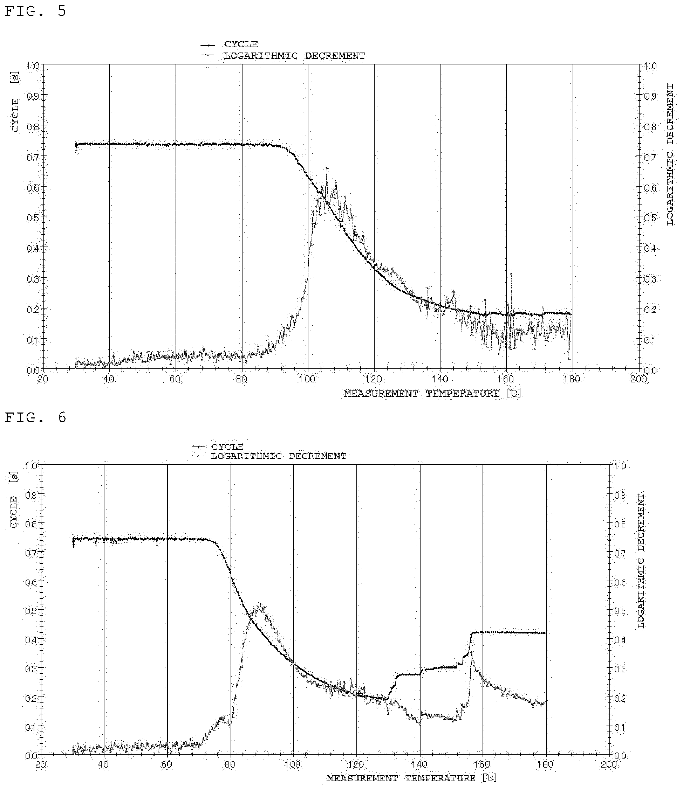

[FIG. 5] FIG. 5 is data of a rigid pendulum tester according to Example 5.
[FIG. 6] FIG. 6 is data of a rigid pendulum tester according to Example 6.

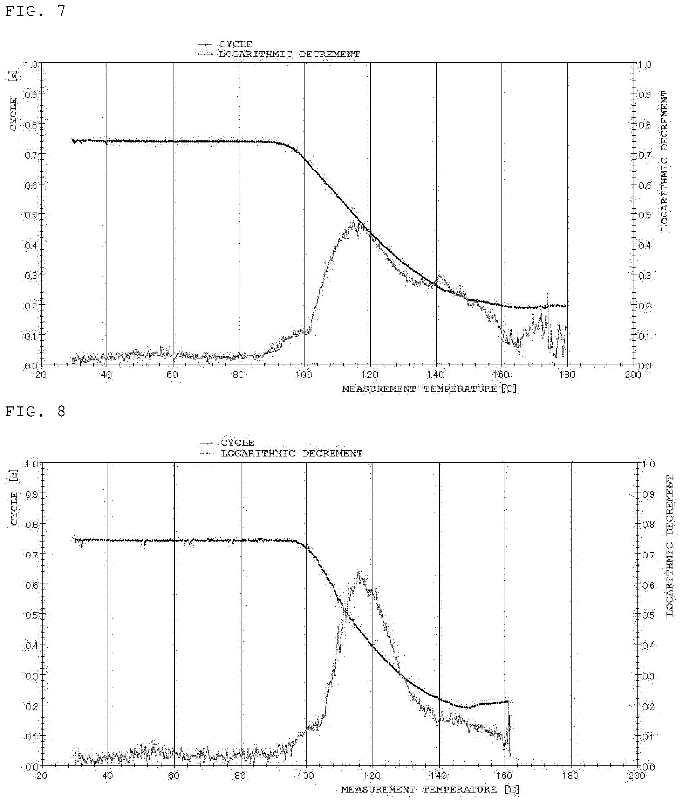

[FIG. 7] FIG. 7 is data of a rigid pendulum tester according to Example 7.
[FIG. 8] FIG. 8 is data of a rigid pendulum tester according to Example 8.

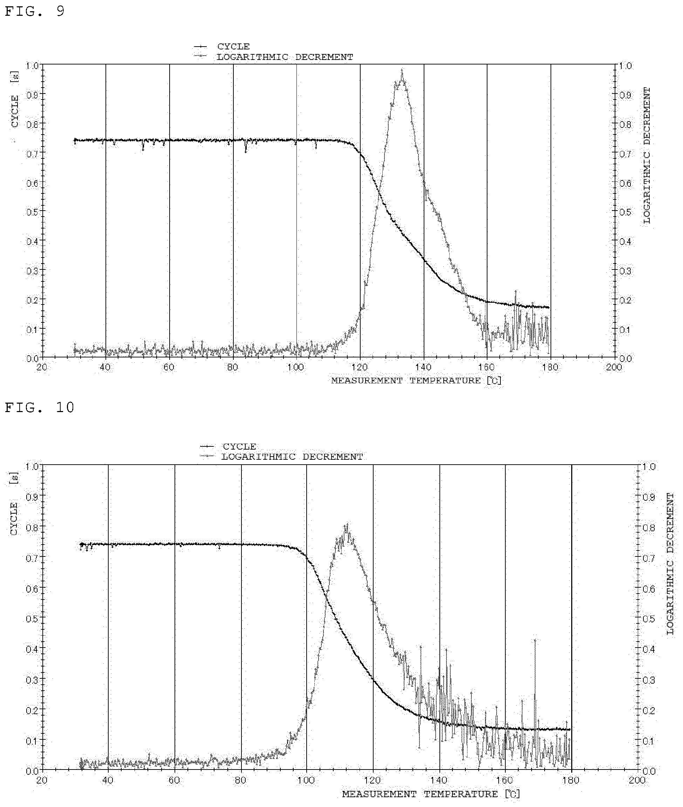

[FIG. 9] FIG. 9 is data of a rigid pendulum tester according to Example 9.
[FIG. 10] FIG. 10 is data of a rigid pendulum tester according to Example 10.

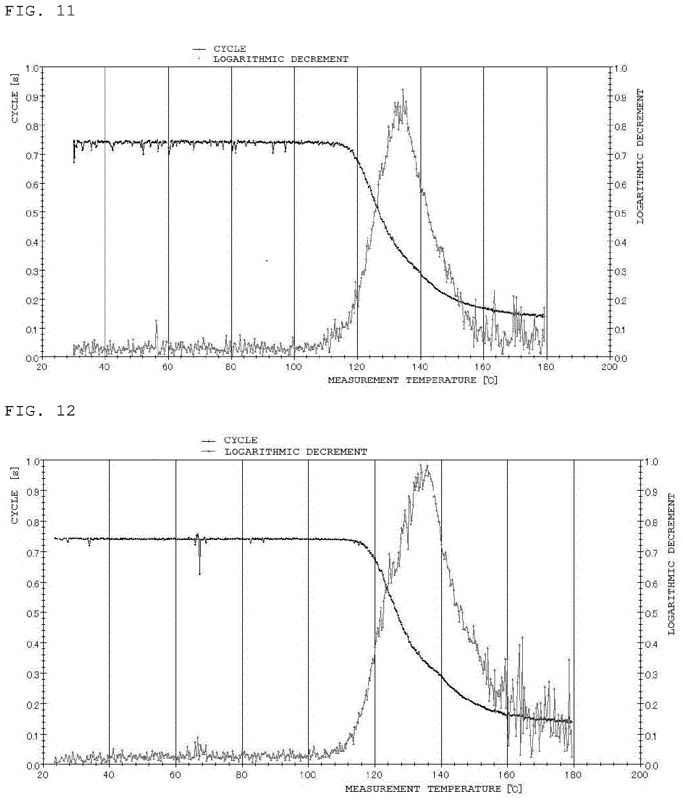

[FIG. 11] FIG. 11 is data of a rigid pendulum tester according to Example 11.
[FIG. 12] FIG. 12 is data of a rigid pendulum tester according to Example 12.

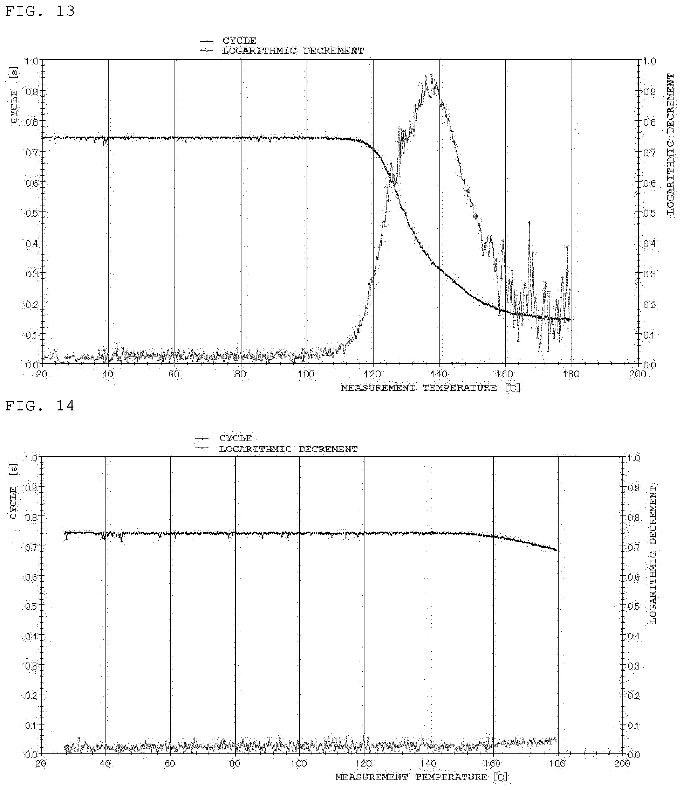

[FIG. 13] FIG. 13 is data of a rigid pendulum tester according to Example 13.
[FIG. 14] FIG. 14 is data of a rigid pendulum tester according to Comparative Example 1.

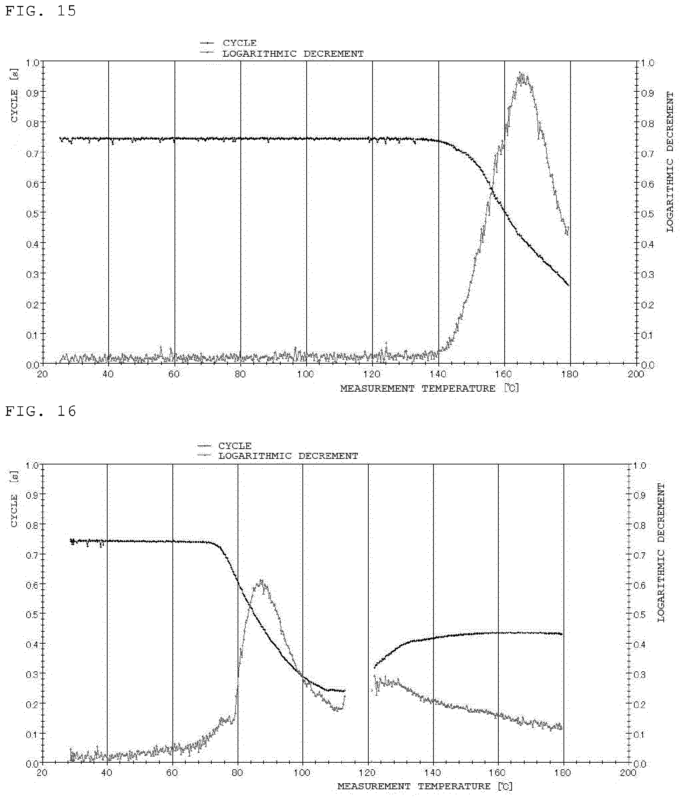

[FIG. 15] FIG. 15 is data of a rigid pendulum tester according to Comparative Example 2.
[FIG. 16] FIG. 16 is data of a rigid pendulum tester according to Example 14.

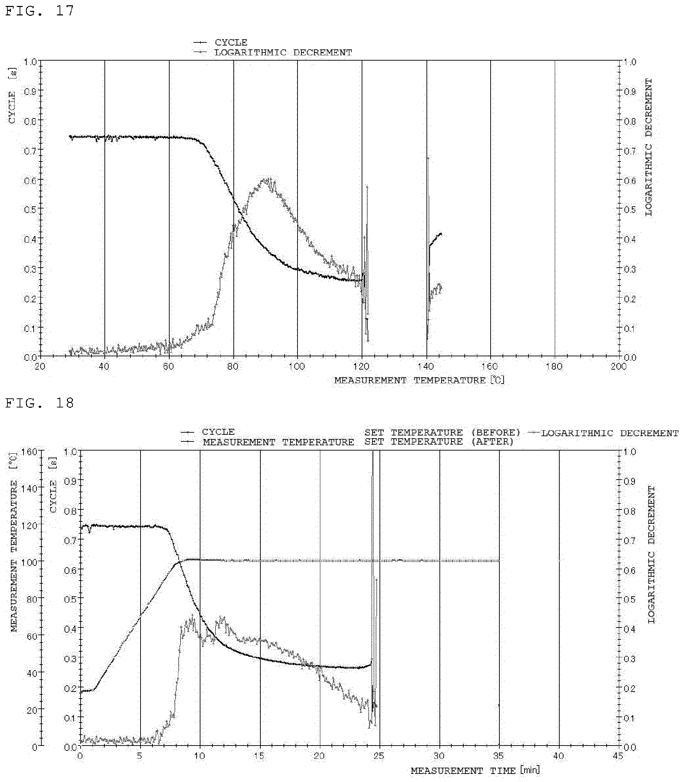

[FIG. 17] FIG. 17 is data of a rigid pendulum tester according to Example 15.
[FIG. 18] FIG. 18 is data of a rigid pendulum tester according to Example 16.

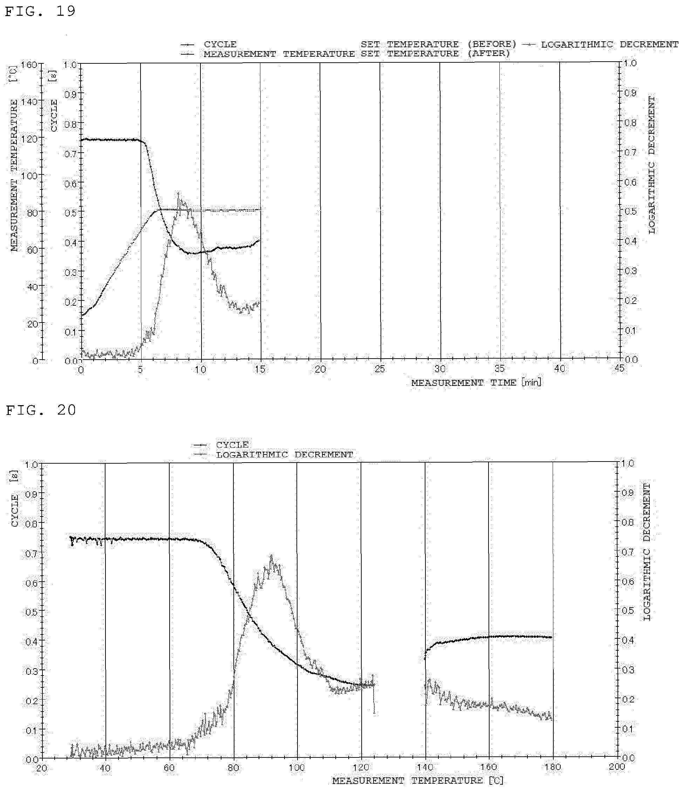

[FIG. 19] FIG. 19 is data of a rigid pendulum tester according to Example 17.
[FIG. 20] FIG. 20 is data of a rigid pendulum tester according to Example 18.

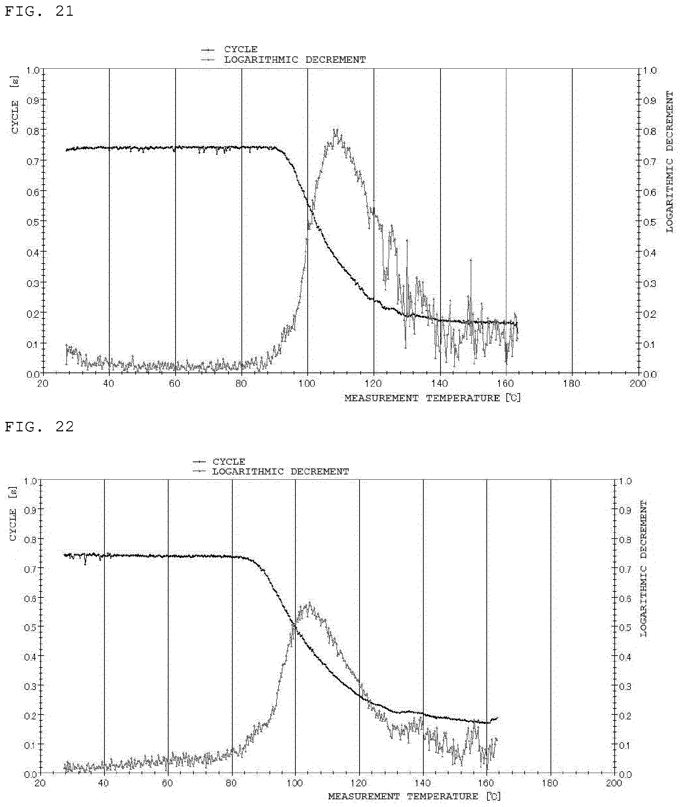

[FIG. 21] FIG. 21 is data of a rigid pendulum tester according to Example 19.
[FIG. 22] FIG. 22 is data of a rigid pendulum tester according to Example 20.

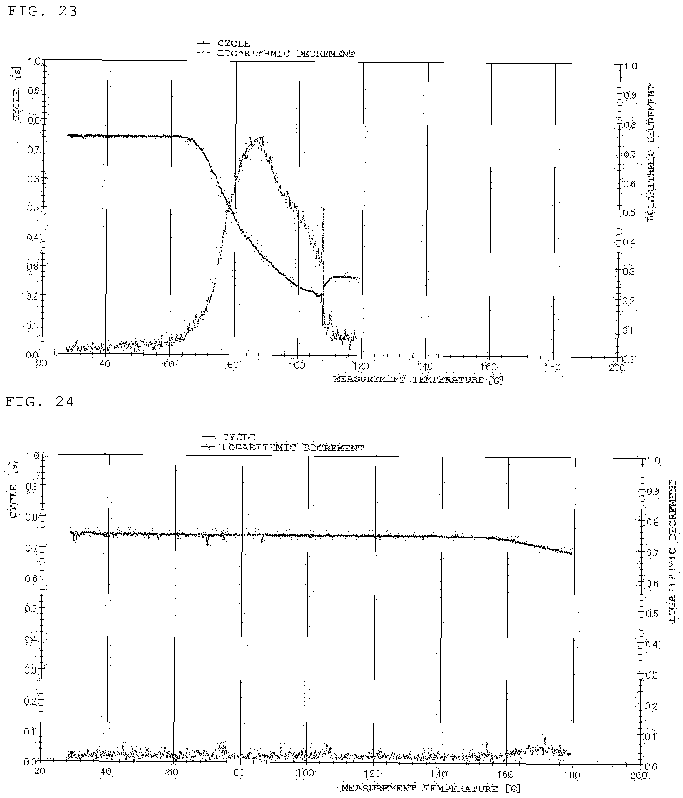

[FIG. 23] FIG. 23 is data of a rigid pendulum tester according to Example 21.
[FIG. 24] FIG. 24 is data of a rigid pendulum tester according to Comparative Example 3.

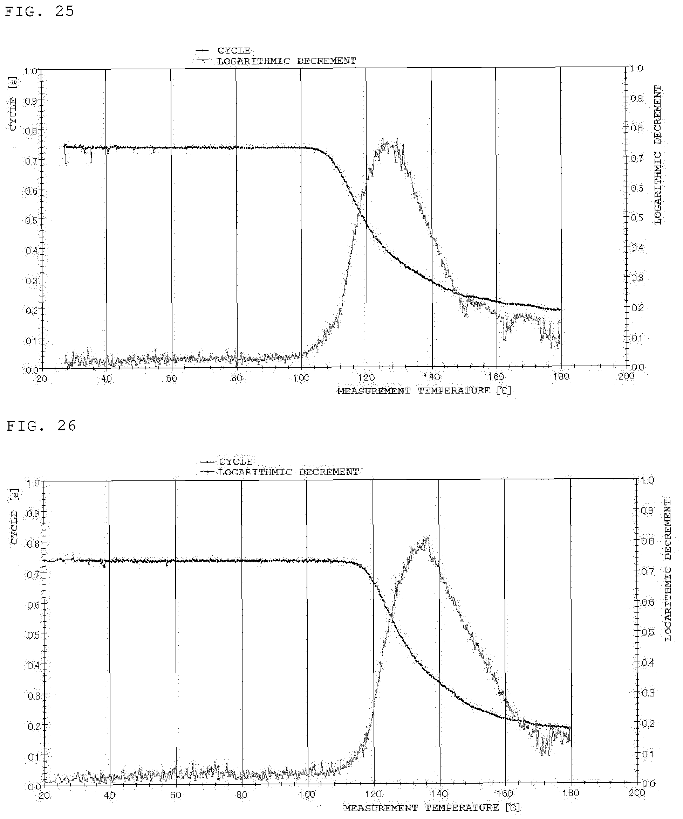

[FIG. 25] FIG. 25 is data of a rigid pendulum tester according to Example 22.
[FIG. 26] FIG. 26 is data of a rigid pendulum tester according to Example 23.

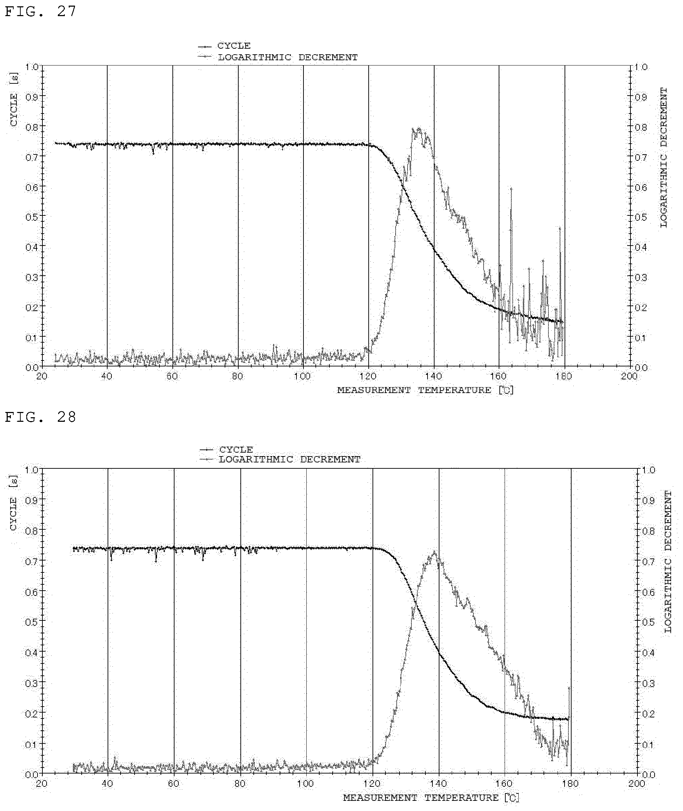

[FIG. 27] FIG. 27 is data of a rigid pendulum tester according to Example 24.
[FIG. 28] FIG. 28 is data of a rigid pendulum tester according to Example 25.

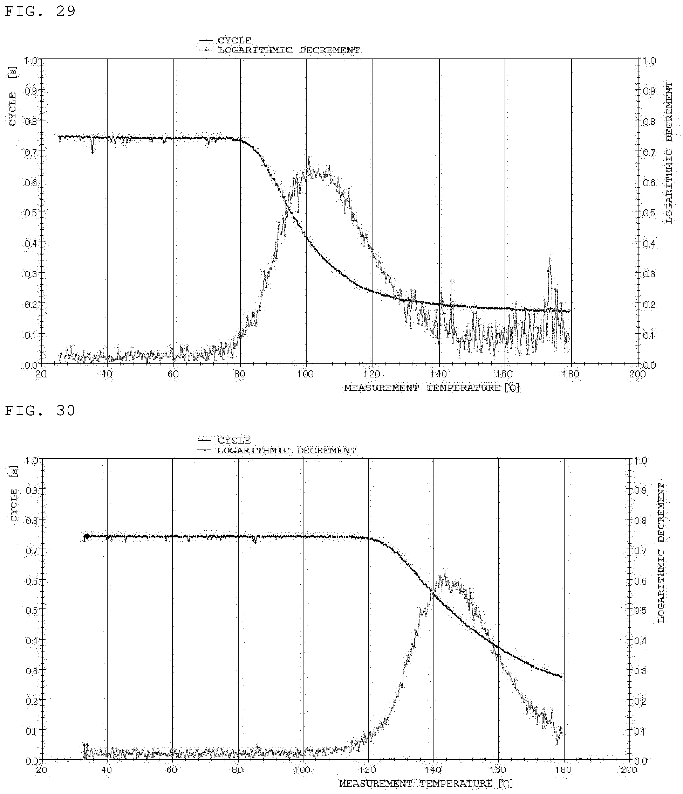

[FIG. 29] FIG. 29 is data of a rigid pendulum tester according to Example 26.
[FIG. 30] FIG. 30 is data of a rigid pendulum tester according to Example 27.

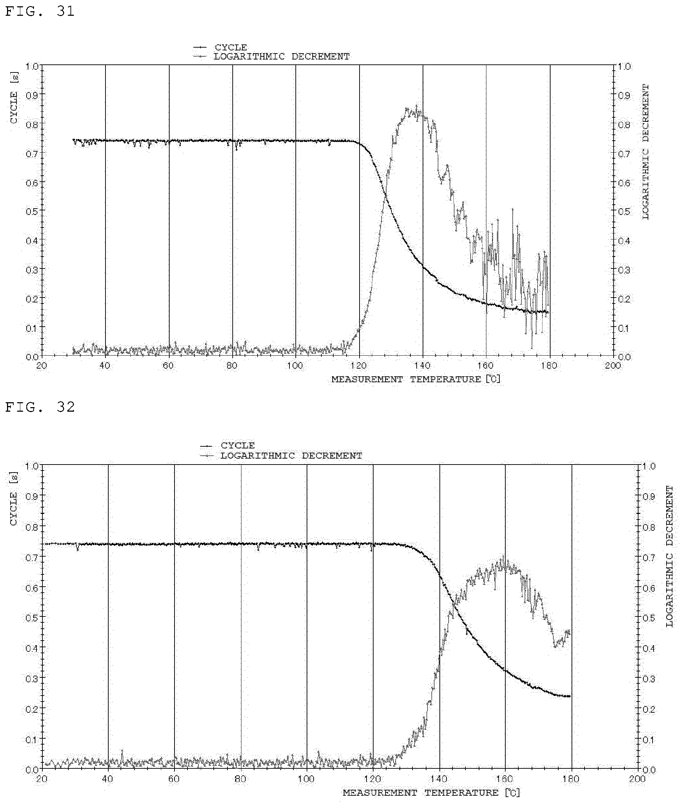

[FIG. 31] FIG. 31 is data of a rigid pendulum tester according to Example 28.
[FIG. 32] FIG. 32 is data of a rigid pendulum tester according to Example 29.

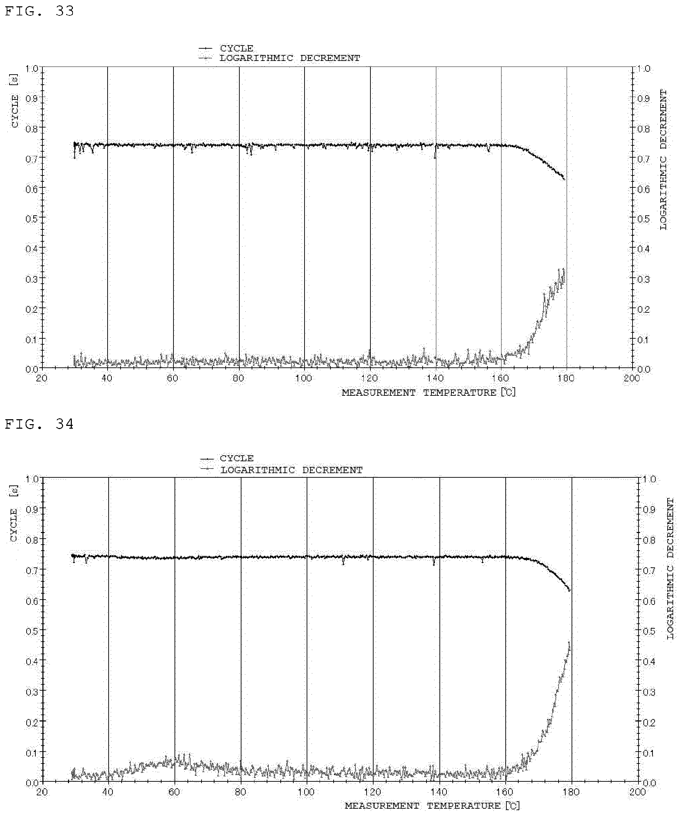

[FIG. 33] FIG. 33 is data of a rigid pendulum tester according to Example 30.
[FIG. 34] FIG. 34 is data of a rigid pendulum tester according to Example 31.
[FIG. 35] FIG. 35 is data of a rigid pendulum tester according to Example 32.
[FIG. 36] FIG. 36 is data of a rigid pendulum tester according to Example 33.

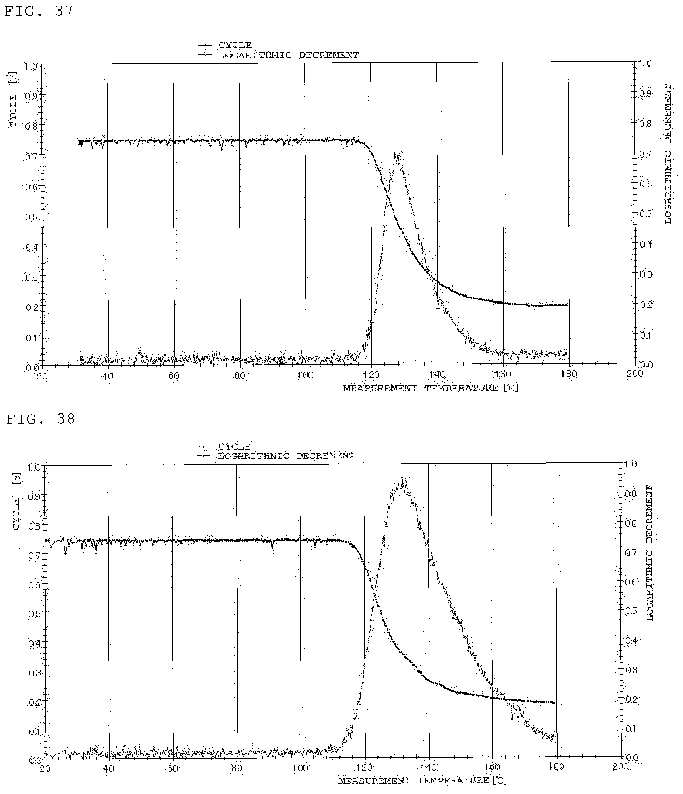

[FIG. 37] FIG. 37 is data of a rigid pendulum tester according to Example 34.
[FIG. 38] FIG. 38 is data of a rigid pendulum tester according to Example 35.
[FIG. 39] FIG. 39 is data of a rigid pendulum tester according to Example 36.
[FIG. 40] FIG. 40 is data of a rigid pendulum tester according to Example 37.

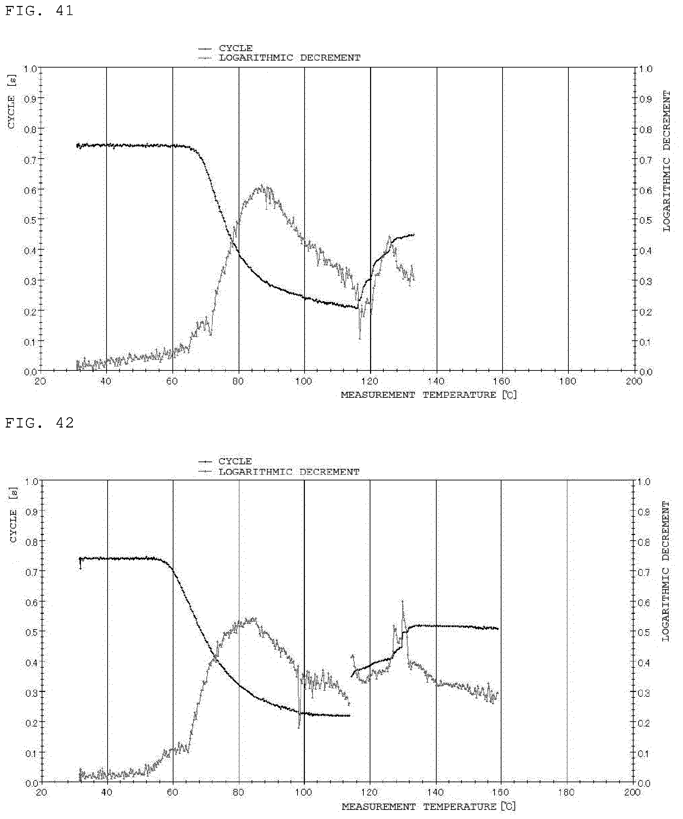

[FIG. 41] FIG. 41 is data of a rigid pendulum tester according to Example 38.
[FIG. 42] FIG. 42 is data of a rigid pendulum tester according to Example 39.

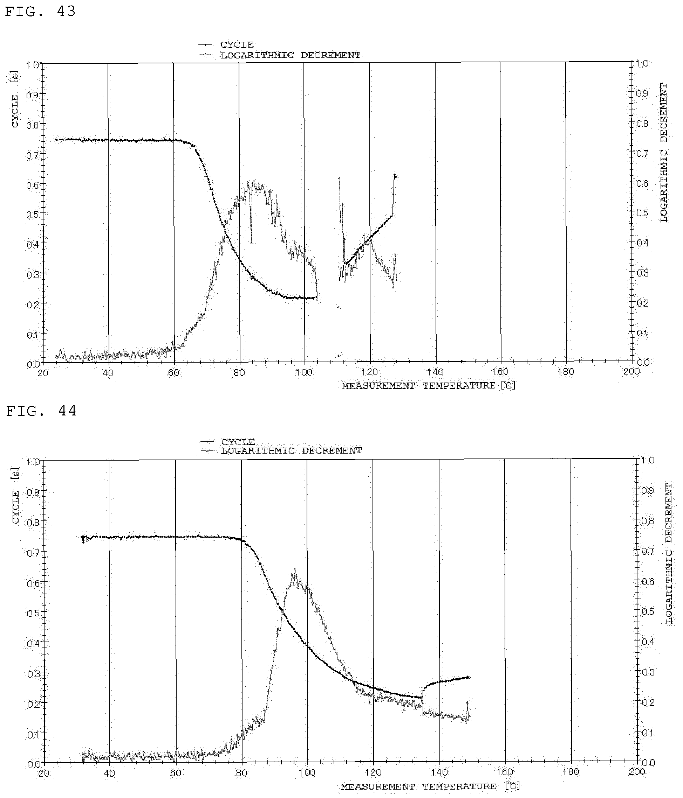

[FIG. 43] FIG. 43 is data of a rigid pendulum tester according to Example 40.
[FIG. 44] FIG. 44 is data of a rigid pendulum tester according to Example 41.

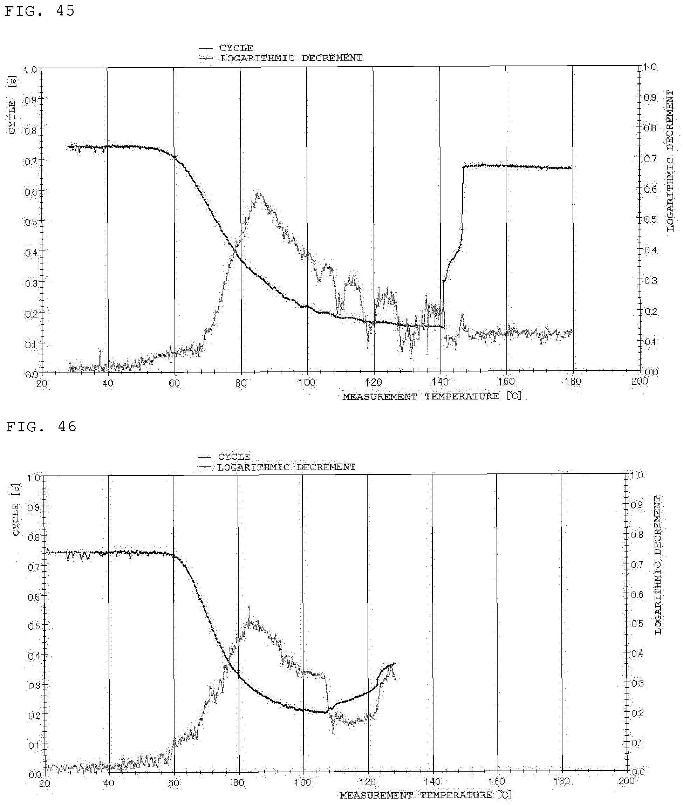

[FIG. 45] FIG. 45 is data of a rigid pendulum tester according to Example 42.
[FIG. 46] FIG. 46 is data of a rigid pendulum tester according to Example 43.

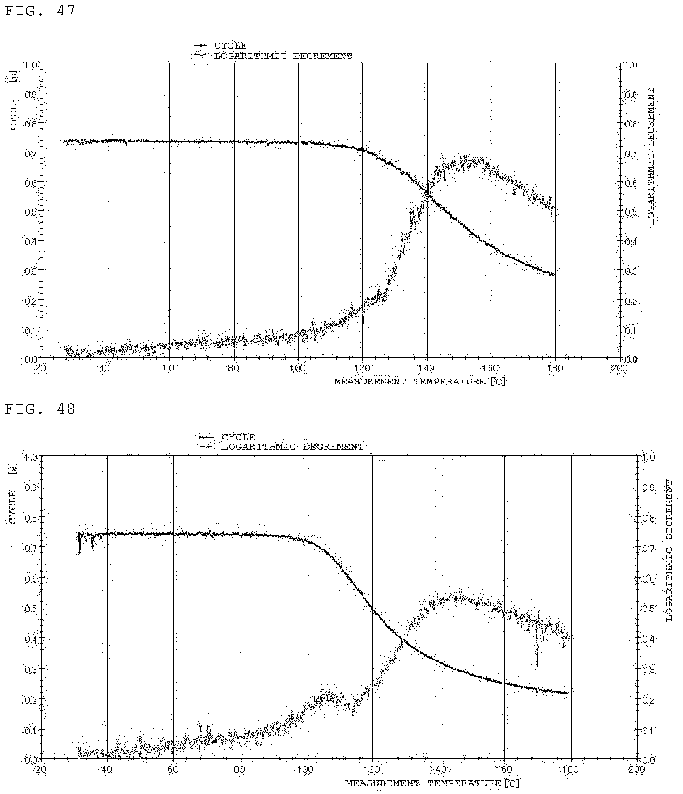

[FIG. 47] FIG. 47 is data of a rigid pendulum tester according to Example 44.
[FIG. 48] FIG. 48 is data of a rigid pendulum tester according to Example 45.

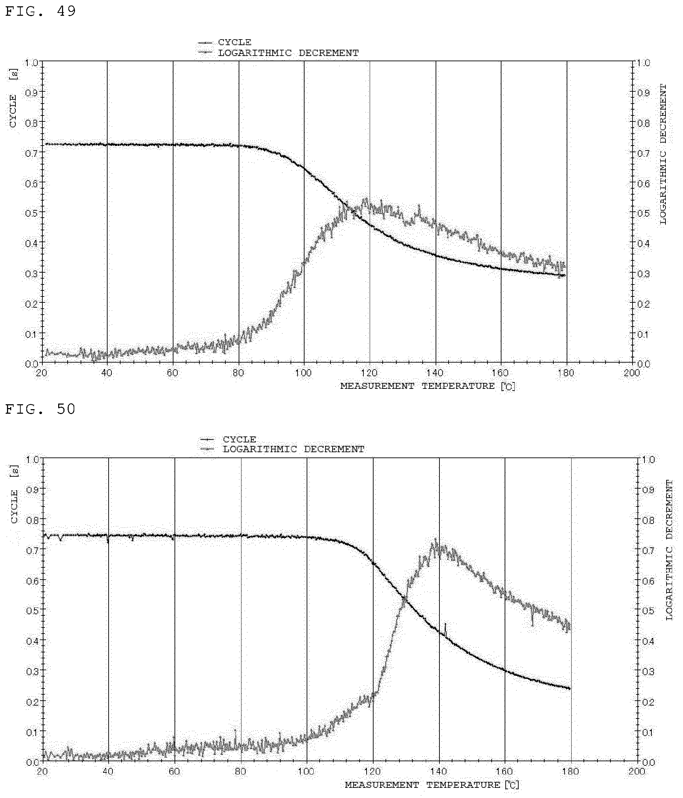

[FIG. 49] FIG. 49 is data of a rigid pendulum tester according to Example 46.
[FIG. 50] FIG. 50 is data of a rigid pendulum tester according to Example 47.

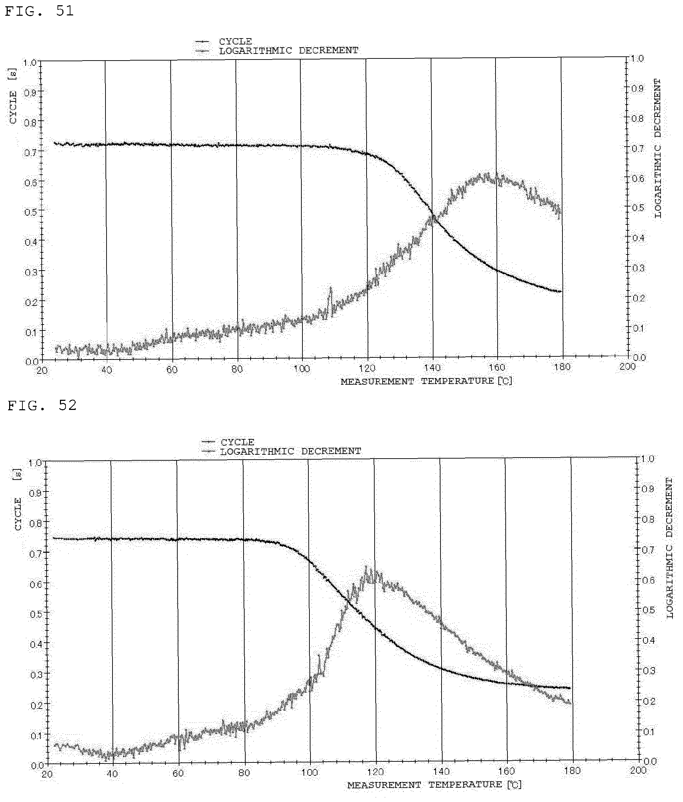

[FIG. 51] FIG. 51 is data of a rigid pendulum tester according to Example 48.
[FIG. 52] FIG. 52 is data of a rigid pendulum tester according to Example 49.

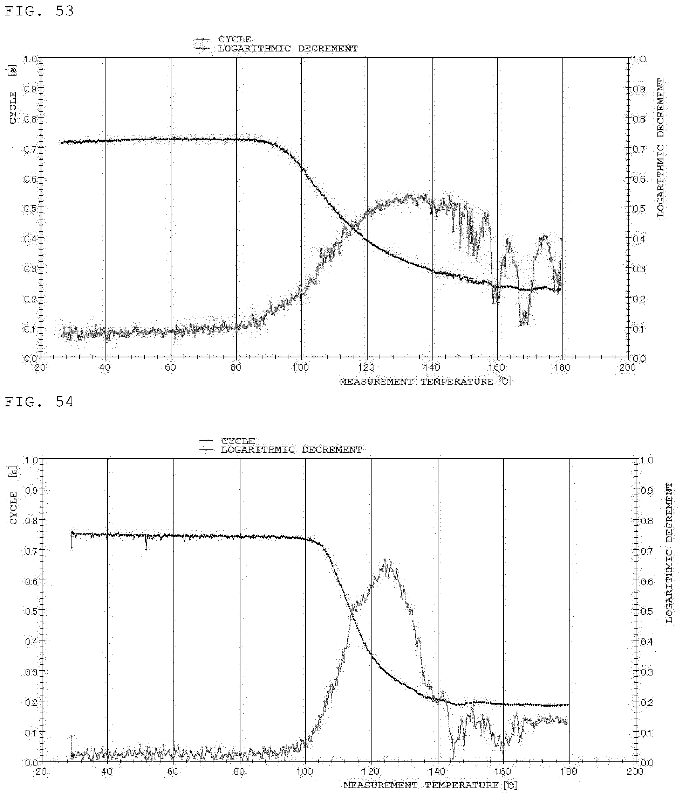

[FIG. 53] FIG. 53 is data of a rigid pendulum tester according to Example 50.
[FIG. 54] FIG. 54 is data of a rigid pendulum tester according to Example 51.

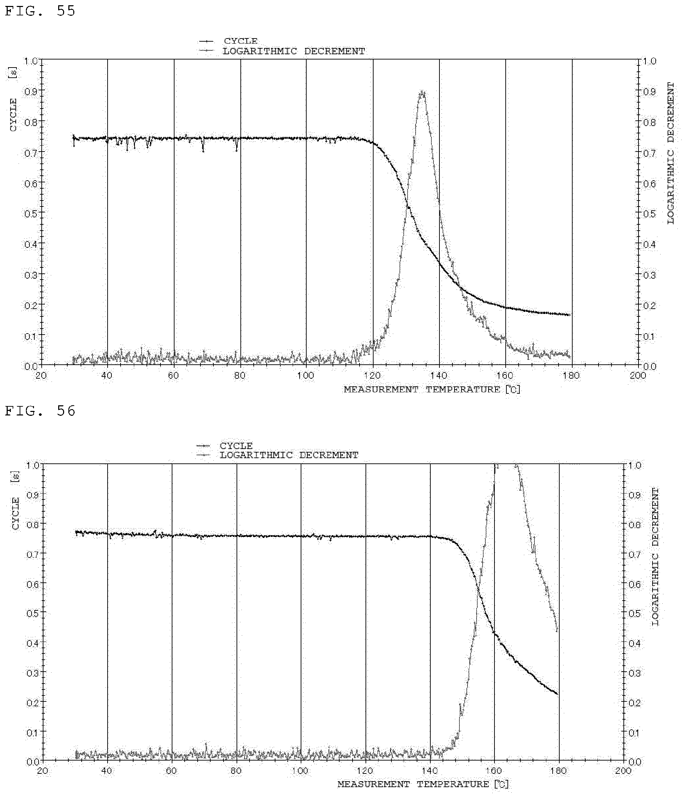

[FIG. 55] FIG. 55 is data of a rigid pendulum tester according to Example 52.
[FIG. 56] FIG. 56 is data of a rigid pendulum tester according to Comparative Example 4.

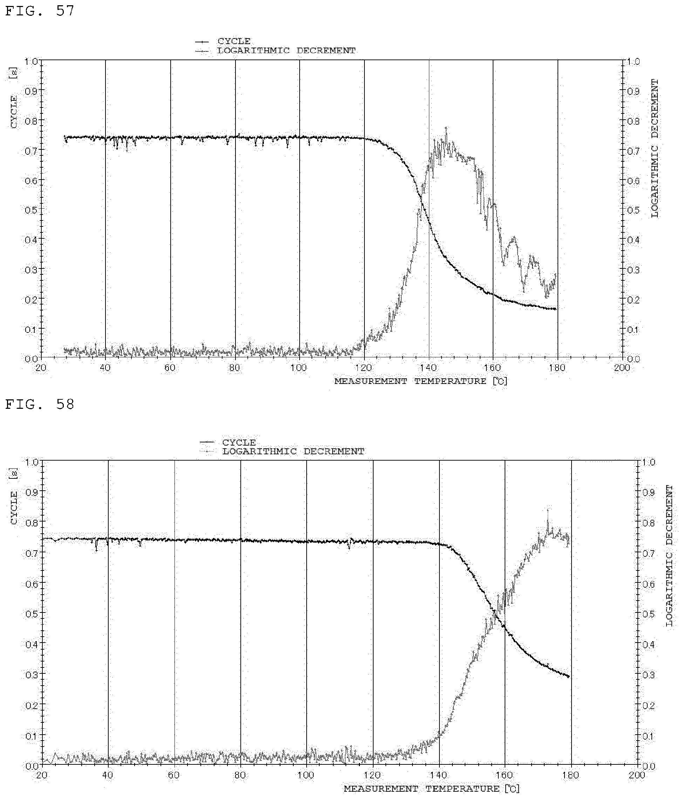

[FIG. 57] FIG. 57 is data of a rigid pendulum tester according to Example 53.
[FIG. 58] FIG. 58 is data of a rigid pendulum tester according to Comparative Example 5.

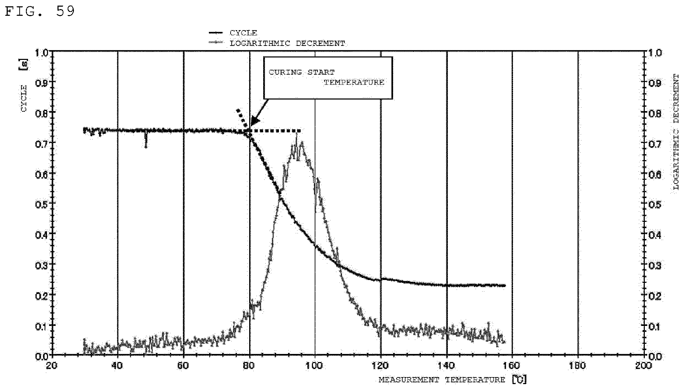

[FIG. 59] FIG. 59 is a diagram showing a method for reading a curing start temperature in a rigid pendulum test in the present description.

### Description of Embodiments

Hereinafter, the present invention will be detailed.

In a thermosetting resin composition according to the present invention, a curing start temperature is 130°C or lower, and a gel fraction when cured under a condition of baking at 150°C for 30 minutes is 80% or more. That is, the thermosetting resin composition has a low curing start temperature of 130°C or lower, and can obtain sufficient physical properties such as strength even after curing. A thermosetting resin composition in which a transesterification reaction is a curing reaction and which has such excellent curing performance has not been known in the related art.

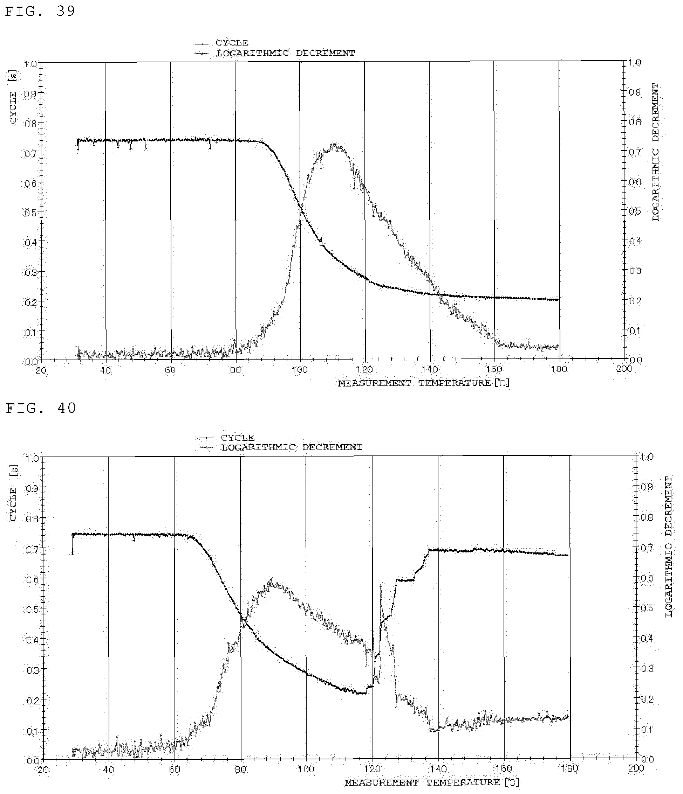

The curing start temperature refers to a decrease start temperature in a cycle when a rigid pendulum test is executed under a temperature increase condition of 3°C/min, and is a value obtained by measuring a curing start point as shown in FIG. 40.

The thermosetting resin composition in which the above value is 130°C or lower has high reactivity. Therefore, not only curing at a low temperature can be performed, but also suitable curing reactivity can be obtained when the composition is used for an application requiring short-time curing or when the composition is made into an ambient temperature curable resin composition.

The curing start temperature is more preferably 120°C or lower, and still more preferably 100°C or lower. In particular, when the curing start temperature is 80°C or lower, the composition can also be used for an ambient temperature curable resin composition.

Further, it is also essential that the thermosetting resin composition according to the present invention has a gel fraction of 80% or more when cured under a condition of baking at 150°C for 30 minutes. That is, when the curing start temperature is low, a subsequent reaction rate may be slow. In such a case, a crosslinking reaction does not sufficiently proceed, and it is difficult to obtain a cured product having good physical properties. On the other hand, when the gel fraction is within the above range, the cured product can have good physical properties.

The gel fraction is measured by dissolving a film obtained by baking and curing in an acetone reflux for 30 minutes using a Soxhlet and measuring a remaining wt% of the film.

The gel fraction is more preferably 90% or more, and still more preferably 95% or more.

The gel fraction is more preferably 80% or more under a condition of baking at 120°C for 30 minutes, and still more preferably 80% or more under a condition of baking at 100°C for 30 minutes.

In order to obtain a thermosetting resin composition satisfying the above performance, it is important to select a transesterification catalyst (B) to be used. That is, by selecting a catalyst having a particularly high effect of promoting the reactivity, a thermosetting resin composition having the above performance can be obtained.

In addition to the selection of the transesterification catalyst (B), a resin composition that easily causes curing reactivity is selected for a resin component (A). By appropriately combining these, a thermosetting resin composition having the curing start temperature and the gel fraction described above can be obtained.

Hereinafter, the selection of the transesterification catalyst (B) and the selection of the resin composition, which are important for obtaining the thermosetting resin composition according to the present invention, will be detailed.

### (Transesterification catalyst (B))

In the thermosetting resin composition according to the present invention, it is most preferable that a metal compound catalyst is used as a transesterification catalyst (B). The transesterification reactivity of the metal compound catalyst can be obtained by selecting a metal species, using the metal compound catalyst in combination with other compounds, or the like. Further, required performance can be appropriately obtained in combination with a resin composition, which is preferable.

It is preferable that the above-mentioned metal compound catalyst is a compound (B-1) containing at least one metal element selected from the group consisting of zinc, tin, titanium, aluminum, zirconium and iron. Such compounds have a suitable transesterification reactivity, which is preferable. Among them, zinc and zirconium are preferable because they have particularly excellent transesterification reactivity.

Among the above compounds, a zirconium compound has an extremely excellent transesterification ability, and is particularly preferable in that the above thermosetting resin composition can be easily obtained using the zirconium compound.

The zirconium compound is also preferable in that when used as a transesterification catalyst, a very high transesterification ability can be obtained even when a compound (B-2) to be detailed below is not used in combination.

It is a novel invention to use a zirconium compound as a transesterification catalyst in a thermosetting resin composition in which a transesterification reaction is a curing reaction. Therefore, a thermosetting resin composition containing the resin component (A) containing - COOR (R is an alkyl group having 50 or less carbon atoms) and a hydroxy group, and the zirconium compound as the transesterification catalyst (B) is also one of the present invention.

Examples of the metal compound catalyst include various metal compounds such as zinc acetate, zinc acrylate, zinc acetylacetonate, zinc trifluoromethanesulfonate, zinc oxide, aluminum isopropylate, iron chloride, zinc dithiocarbamate, tetraisopropyl titanate, dibutyltin dilaurate, dibutyltin dioctoate, monobutyltinic acid, zirconium butoxide, zirconium acetylacetonate, and zirconia. Further, a zinc cluster catalyst (for example, ZnTAC 24 (trade name) manufactured by Tokyo Chemical Industry Co., Ltd.) or the like can also be used.

Further, two or more of the above compounds may be used in combination.

The metal compound catalyst is particularly preferably a metal salt compound, and use of metal acetylacetonate as an anion component is preferable in that excellent transesterification ability tends to be obtained as compared with the same type of metal compound. For example, zinc acetylacetoneate and zirconium acetylacetoneate can be used particularly suitably. In particular, zirconium acetylacetoneate exhibits extremely good catalytic performance.

When zinc oxide is to be used, it is preferable to use one obtained by dispersing zinc oxide in acetylacetone. It is considered that by dispersing zinc oxide in acetylacetone, zinc acetylacetonate is generated.

The zinc oxide and acetylacetone are preferably contained at a ratio of 1:0.5 to 1:10 (weight ratio). Particularly suitable results can be obtained by mixing the compounds at such a ratio.

The lower limit is more preferably 1:0.8, and still more preferably 1:1. The upper limit is more preferably 1:5, and still more preferably 1:3.

When the metal compound is used as a catalyst, the use of at least one compound (B-2) selected from the group consisting of an organophosphorus compound, urea, alkylated urea, thiourea, alkylated thiourea, a sulfoxide compound, a quaternary ammonium compound, a quaternary phosphonium compound, and pyridine, quinoline, isoquinoline, phenanthroline, and a derivative thereof in combination is more preferable in that the catalyst performance is improved.

The use of a metal compound activated by using these compounds in combination is particularly preferable in that the above-mentioned curing start temperature and gel fraction can be obtained.

Although an action for obtaining such an effect is not clear, it is presumed that the coordination of the compound (B-2) with a metal compound improves the catalytic activity. Therefore, as the compound (B-2), it is preferable to select a compound that can be coordinated with a metal compound.

By improving a catalysis in the transesterification reaction, the transesterification reaction can be carried out at a lower temperature. Therefore, a reaction temperature can be lowered, and an energy efficiency can be improved. Further, it can also be used when a transesterification reaction of a compound having low heat resistance is carried out.

According to the study of the present inventors, it is clear that a transesterification reaction in the related art has reduced reactivity in a state where a carboxyl group is present in the system. Therefore, when an attempt is made to use a transesterification reaction in an aqueous curable resin composition in which a carboxyl group is present, curing at a high temperature is required.

Through the study of the present inventors, it is clear that such a problem is remarkably improved by using the compound (B-2) in addition to the metal compound. That is, accordingly, the catalytic activity can be further improved, and the reaction can be carried out in a range of 80°C to 150°C. Even in a system in which the reaction hardly proceeds due to various factors, the reaction can proceed. For example, it is preferable in that the reaction can proceed even in a system in which a carboxyl group is present. Therefore, it can be suitably used as a catalyst for a transesterification reaction in an aqueous thermosetting resin composition.

As a thermosetting resin composition in the related art in which a transesterification reaction is a thermosetting reaction, a thermosetting resin composition in which the transesterification reaction is carried out by using an acid catalyst is known. However, such a thermosetting resin composition has various problems due to the presence of an acid.

For example, an amine compound may be used as an additive such as a pigment dispersant. Further, when a coating material is made aqueous, introducing an acid group such as a carboxylic acid group or a sulfonic acid group into a resin and neutralizing it with an amine compound or the like to make the coating material water-soluble have been widely performed. In this case, combination use with an acidic catalyst was difficult. This has been a problem that hinders a thermosetting resin composition in which a transesterification catalyst is a curing reaction from being made aqueous. The transesterification catalyst (B) is also preferable in that since a good curing reaction can be carried out without using an acid catalyst, a thermosetting resin composition to which a basic compound is added can be obtained.

In addition, even when the thermosetting resin composition according to the present invention is used as a solvent-based coating material composition, an aqueous coating material may be used in combination as a partial layer among multiple coating films. In this case, when the multiple coating films are heated and cured at the same time, amines, ammonia, and the like may be generated from the other layers forming the multiple coating films. The catalyst is preferable in that good curing can be performed even in such a case.

The transesterification catalyst according to the present invention preferably uses the composition as a catalyst in the transesterification reaction under a normal pressure. Further, in a curable resin composition in which a transesterification reaction is a curing reaction, it is preferably used as a transesterification catalyst.

As described above, the transesterification catalyst (B) preferably contains at least one compound (B-2) selected from the group consisting of an organophosphorus compound, urea, alkylated urea, thiourea, alkylated thiourea, a sulfoxide compound, a quaternary ammonium compound, a quaternary phosphonium compound, and pyridine, quinoline, isoquinoline, phenanthroline, and a derivative thereof. Hereinafter, these compounds will be detailed.

The above-mentioned organophosphorus compound is not particularly limited, and examples thereof may include phosphoric acid, phosphorous acid, phosphonic acid, phosphinic acid, phosphonous acid, organic phosphine oxide, organic phosphine compounds and their various esters, amides, and salts. Ester may be ester of alkyl, branched alkyl, substituted alkyl, bifunctional alkyl, alkyl ether, aryl, and substituted aryl. Amide may be amide of alkyl, branched alkyl, substituted alkyl, bifunctional alkyl, alkyl ether, aryl, and substituted aryl.

Among these, at least one compound selected from the group consisting of phosphonate ester, phosphate amide, and an organic phosphine oxide compound is particularly preferable. The most satisfactory transesterification catalyst function is obtained by using these organophosphorus compounds. Further specifically, organic phosphine oxide compounds such as triphenylphosphine oxide, trioctylphosphine oxide, and tricyclohexylphosphine oxide; phosphate amide compounds such as hexamethylphosphoric acid triamide and tris (N, N-tetramethylene) phosphate triamide; organic phosphine sulfide compounds such as triphenylphosphine sulfide, tributylphosphine sulfide, and trioctylphosphine sulfide, and the like can be suitably used.

The above-mentioned alkylated urea is not particularly limited, and examples thereof may include urea, dimethylurea, dimethylpropylene urea, and the like. Meanwhile, alkylated urea may have a cyclic structure as in dimethylpropylene urea or the like.

The above-mentioned alkylated thiourea is not particularly limited, and examples thereof include dimethylthiourea, trimethylthiourea, tetramethylthiourea, diethylthiourea, and dibutylthiourea.

Examples of the above-mentioned sulfoxide compound may include dimethyl sulfoxide, diphenyl sulfoxide, and the like.

As the quaternary ammonium compound, a compound represented by the following general formula (i) is preferably used. 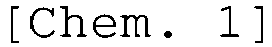 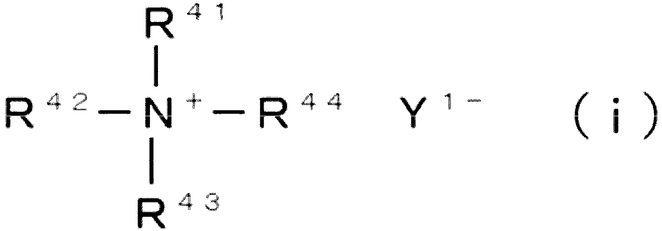 (In the formula (i), R⁴¹ to R⁴⁴ each independently represent a monovalent hydrocarbon group or a monovalent hydrocarbon group to which a functional group inert to the reaction is bonded, and Y¹⁻ represents a monovalent anion. R⁴¹ to R⁴⁴ may be the same group or different groups.)

When R⁴¹ to R⁴⁴ are hydrocarbon groups, examples thereof include an alkyl group, a cycloalkyl group, an alkenyl group, a cycloalkenyl group, and an aryl group. An alkyl group and an aryl group are preferable. The number of carbon atoms in each of R⁴¹ to R⁴⁴ is preferably 1 to 100, and more preferably 4 to 30.

The functional group when R⁴¹ to R⁴⁴ are monovalent hydrocarbon groups to which a functional group inert to the reaction is bonded is appropriately selected depending on a reaction condition, and examples thereof include a halogen atom, an alkoxycarbonyl group, an acyloxy group, a nitrile group, an acyl group, a carboxyl group, and an alkoxyl group.

Examples of the quaternary ammonium (R⁴¹R⁴²R⁴³R⁴⁴N⁺) in the formula (i) include tetramethylammonium, tetraethylammonium, tetra-n-propylammonium, tetra-n-butylammonium, methyltri-n-octylammonium, n-dodecyltrimethylammonium, n-dodecyltri-n-butylammonium, cetyltrimethylammonium, trimethylbenzylammonium, triethylbenzylammonium, cetylbenzyldimethylammonium, trimethyl-2-hydroxyethaneaminium, cetylpyridinium, n-dodecylpyridinium, phenyltrimethylammonium, phenyltriethylammonium, N-benzylpicolinium, pentamethonium, and hexamethonium.

Examples of Y¹⁻ in the general formula (i) include a fluorine ion, a chlorine ion, a bromine ion, an iodine ion, a sulfate ion, a nitrate ion, a phosphate ion, a perchlorate ion, a hydrogen sulfate ion, a hydroxide ion, an acetate ion, a benzoate ion, a benzenesulfonate ion, and a p-toluenesulfonate ion. A fluorine ion, a chlorine ion, a bromine ion, an iodine ion, a hydroxide ion, and an acetate ion are preferable, a fluorine ion, a chlorine ion, a bromine ion, an iodine ion, and a hydroxide ion are more preferable, and a chlorine ion or a bromine ion is still more preferable.

From the viewpoint of versatility and reactivity, the compound represented by the general formula (i) is preferably a combination of the following quaternary ammonium (R⁴¹R⁴²R⁴³R⁴⁴N⁺) and the following Y¹⁻.

Quaternary ammonium (R⁴¹R⁴²R⁴³R⁴⁴N⁺): tetramethylammonium, tetra-n-butylammonium, n-dodecyltrimethylammonium, n-dodecyltri-n-butylammonium, triethylbenzylammonium, trimethyl-2-hydroxyethaneaminium.

Y¹⁻: fluorine ion, chlorine ion, bromine ion, iodine ion, hydroxide ion, and acetate ion.

From the viewpoint of reactivity, industrial availability, price, and ease of handling, the quaternary ammonium compound is preferably at least one selected from the group consisting of tetramethylammonium chloride, tetra-n-butylammonium fluoride, tetra-n-butylammonium iodide, tetra-n-butylammonium hydroxide, tetra-n-butylammonium acetate, n-dodecyltrimethylammonium bromide, n-dodecyltri-n-butylammonium bromide, triethylbenzylammonium chloride, and trimethyl-2-hydroxyethaneaminium chloride (choline chloride).

Examples of the quaternary phosphonium compound include a compound represented by the following general formula (ii). 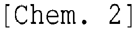 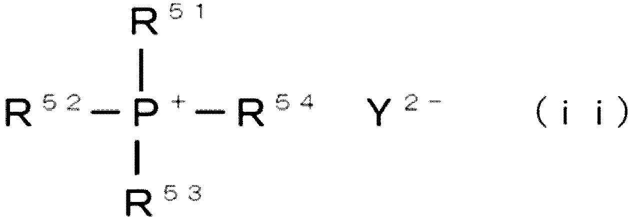 (In the formula (ii), R⁵¹ to R⁵⁴ each independently represent a monovalent hydrocarbon group, and Y²⁻ represents a monovalent anion. R⁵¹ to R⁵⁴ may be the same group or different groups.)

Examples of the hydrocarbon group in R⁵¹ to R⁵⁴ include an alkyl group, a cycloalkyl group, an alkenyl group, a cycloalkenyl group, and an aryl group. An alkyl group and an aryl group are preferable.

Examples of quaternary phosphonium (R⁵¹R⁵²R⁵³R⁵⁴P⁺) in the general formula (ii) include tetraethylphosphonium, tetra-n-butylphosphonium, ethyltri-n-octylphosphonium, cetyltriethylphosphonium, cetyltri-n-butylphosphonium, n-butyltriphenylphosphonium, n-amyltriphenylphosphonium, methyltriphenylphosphonium, benzyltriphenylphosphonium, and tetraphenylphosphonium.

Examples of Y²⁻ include a chlorine ion, a fluorine ion, a bromine ion, an iodine ion, a sulfate ion, a nitrate ion, a phosphate ion, a perchlorate ion, a hydrogen sulfate ion, a hydroxide ion, an acetate ion, a benzoate ion, a benzenesulfonate ion, and a p-toluenesulfonate ion. A fluorine ion, a chlorine ion, a bromine ion, and a hydroxide ion are preferable.

From the viewpoint of reactivity and industrial availability, the quaternary phosphonium compound is preferably at least one selected from the group consisting of tetra-n-butylphosphonium hydroxide, tetrabutylphosphonium bromide and tetrabutylphosphonium chloride.

Examples of the pyridine derivative include dimethylaminopyridine and nicotinic acid ester.

Examples of the quinoline derivative include 8-hydroxyquinoline and 2-methyl-8-quinolinol.

It is preferable that a transesterification catalyst contains the compound (B-1) and the compound (B-2) at a ratio of (B-1):(B-2) = 100:1 to 1:100 (weight ratio). Particularly suitable results can be obtained by mixing the compounds at such a ratio. The lower limit is more preferably 50:1 and further preferably 10:1. The upper limit is more preferably 1:50 and further preferably 1:10.

It is preferable that the compound (B-1) be contained in a ratio of 0.01 wt% to 50 wt% with respect to the amount of a compound related to a reaction in a reaction system at the time of causing a reaction.

It is preferable that the compound (B-2) be contained in a ratio of 0.01 wt% to 50 wt% with respect to the amount of a compound related to a reaction in a reaction system at the time of causing a reaction.

The resin composition according to the present invention is preferable in that the above physical properties can be particularly suitably obtained by a method in which as the transesterification catalyst (B), (1) the zirconium compound is used, or (2) the compound (B-1) and the compound (B-2) are used.

When the transesterification catalysts of the above (1) and (2) are used and a resin composition having particularly high transesterification reactivity is selected and used, it is possible to obtain a resin composition having properties that the curing start temperature is 130°C or lower and the gel fraction when cured under a condition of baking at 150°C or lower for 30 minutes is 80% or more.

It is a novel invention to use the transesterification catalyst of the above (2) in a thermosetting resin composition in which a transesterification reaction is a curing reaction. Therefore, a thermosetting resin composition containing the resin component (A) containing - COOR (R is an alkyl group having 50 or less carbon atoms) and a hydroxy group and the transesterification catalyst of the above (2) as the transesterification catalyst (B) is also one of the present invention.

Further, when zinc acetylacetonate is used as the transesterification catalyst and a resin composition having particularly high transesterification reactivity is selected and used, it is possible to obtain a resin composition having properties that the curing start temperature is 100°C or lower and the gel fraction when cured under a condition of baking at 100°C or lower for 30 minutes is 80% or more.

Among the above transesterification catalysts containing the compound (B-1) and the compound (B-2), the transesterification catalyst containing the compound (B-1) containing at least one metal element selected from the group consisting of zinc, tin, titanium, aluminum, zirconium, and iron and at least one compound (B-2) selected from the group consisting of an organophosphorus compound, urea, alkylated urea, thiourea, alkylated thiourea, a sulfoxide compound, a quaternary ammonium compound, a quaternary phosphonium compound, and phenanthroline and a derivative thereof is a novel transesterification catalyst. Therefore, such a catalyst is also one of the present invention.

The transesterification catalyst according to the present invention has an excellent transesterification ability, and as described above, enables the transesterification reaction of the thermosetting resin composition at a lower temperature.

Further, the transesterification catalyst according to the present invention can be suitably used not only for low-temperature curing but also as a transesterification catalyst in a thermosetting resin composition in which curing is caused by a transesterification reaction, and can also be used for curing at a high temperature of 180°C or higher. For example, phenanthroline exhibits excellent performance even in short-time curing at a high temperature.

The transesterification catalyst according to the present invention can be used not only as a transesterification catalyst in a curing reaction of a resin composition but also as a transesterification catalyst in a transesterification reaction carried out in a synthesis reaction.

That is, the transesterification catalyst according to the present invention is not particularly limited in use, and can be used for any purpose such as a curable resin composition in which transesterification is a curing reaction, or a transesterification reaction in organic synthesis. For example, in a carboxylic acid ester compound such as (meth)acrylic acid ester, the transesterification catalyst according to the present invention can also be used in a reaction in which an alkyl group is substituted (for example, a reaction in which methyl (meth)acrylate is converted into butyl (meth)acrylate).

### (Resin composition)

Hereinafter, the resin composition that can be used in the curable resin composition according to the present invention will be detailed. The composition of the curable resin composition is not limited to those exemplified below. Further, the curable resin composition according to the present invention also includes a curable resin composition that becomes a resin by being cured. That is, the curable resin composition according to the present invention also includes a curable resin composition that changes into a resin by a thermal reaction even when the composition itself contains only a low molecular weight compound.

The resin component (A) used in the present invention contains -COOR (R is an alkyl group having 50 or less carbon atoms) and a hydroxy group.

That is, in the present invention, any known compound or novel compound containing the functional groups can be used.

Examples of the resin component include an acrylic resin, a polyester resin, a polyether resin, a urethane resin, and a silicone resin containing a necessary functional group. In addition, a mixture of the resins may be used. Further, at least a part of the component may be a low molecular weight compound.

The resin component may be a mixture of a compound (A-1) containing two or more -COOR (R is an alkyl group having 50 or less carbon atoms) groups and a compound (A-2) containing a hydroxy group. Alternatively, the resin component may contain, as a part or all thereof, a compound (A-3) containing one or more -COOR (R is an alkyl group having 50 or less carbon atoms) groups and one or more hydroxy groups. Further, in addition to the resin composition essentially containing (A-3), (A-1) and/or (A-2) may be contained.

R in the resin according to the present invention may be any one of primary, secondary, and tertiary alkyl groups as long as it has 50 or less carbon atoms. R is more preferably a primary or secondary alkyl group, and most preferably a primary alkyl group.

More specifically, those containing a known ester group such as a methyl ester group, an ethyl ester group, a benzyl ester group, an n-propyl ester group, an isopropyl ester group, an n-butyl ester group, an isobutyl ester group, a sec-butyl ester group, and a t-butyl group can be used. Since R is preferably produced as an alcohol during the transesterification reaction and volatilizes, the alkyl group preferably has 20 or less carbon atoms, and more preferably has 10 or less carbon atoms. A boiling point of the alcohol that volatilizes in the curing reaction is preferably 300°C or lower, and more preferably 200°C or lower.

Hereinafter, the resin and the low molecular weight compound that can be used in the present invention will be exemplified. The present invention is not limited to those using the following resins and low molecular weight compounds, and can use those exemplified below and the compounds containing the above functional groups in combination as necessary.

### (1) Polymer obtained by polymerization of unsaturated bond

A polymer obtained by polymerization of an unsaturated bond, such as an acrylic resin, is a resin widely used in the field of thermosetting resins such as coating materials and adhesives, and when a monomer containing a hydroxy group or an alkyl ester group is used, the functional group is present in the resin in a ratio of the used monomer. Therefore, it is easy to control the amount of the functional group in the resin and to adjust the physical properties of the resin, and the resin can be easily used for the purpose of the present invention.

In particular, when a hydroxy group and an alkyl ester group are introduced, the hydroxy group and the alkyl ester group can be introduced by the following monomers (1-1) and (1-2) .

### (1-1) Hydroxy group-containing monomer

The hydroxy group-containing monomer is not particularly limited, and examples thereof may include the following:
various hydroxy group-containing vinyl ethers such as 2-hydroxyethyl vinyl ether, 3-hydroxypropyl vinyl ether, 2-hydroxypropyl vinyl ether, 4-hydroxybutyl vinyl ether, 3-hydroxybutyl vinyl ether, 2-hydroxy-2-methylpropyl vinyl ether, 5-hydroxypentyl vinyl ether, or 6-hydroxyhexyl vinyl ether; or addition reaction products of these various vinyl ethers mentioned above and ε-caprolactone;
various hydroxy group-containing allyl ethers such as 2-hydroxyethyl (meth)allyl ether, 3-hydroxypropyl (meth)allyl ether, 2-hydroxypropyl (meth)allyl ether, 4-hydroxybutyl(meth)allyl ether, 3-hydroxybutyl(meth)allyl ether, 2-hydroxy-2-methylpropyl(meth)allyl ether, 5-hydroxypentyl (meth)allyl ether, or 6-hydroxyhexyl (meth)allyl ether; or addition reaction products of these various allyl ethers mentioned above and ε-caprolactone;
or various hydroxy group-containing (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, polyethylene glycol mono(meth)acrylate, or polypropylene glycol mono(meth)acrylate; or addition reaction main components of these various (meth)acrylates mentioned above and ε-caprolactone.

In addition, when the hydroxy group-containing monomer as the monomer does not directly contain a hydroxy group and contains a hydroxy group via a linking chain having 5 or more molecules, the hydroxy group easily moves in the resin. Therefore, it is preferable from the viewpoint of easily carrying out a reaction.

### (1-2) Alkyl ester group-containing monomer

As the alkyl ester group-containing monomer, many types of monomers containing alkyl ester group and polymerizable unsaturated bond are known, and typically, a compound represented by the following general formula can be exemplified.

### (1-2-a) Compound represented by following general formula (1)

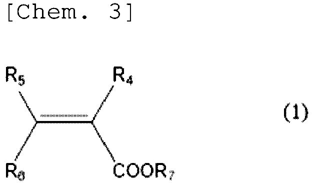

(In the formula, R₄, R₅, and R₆ each represent hydrogen, an alkyl group, a carboxyl group, or an alkyl ester group.
R₇ represents a hydrocarbon group having 50 or less carbon atoms.)

Such a compound represented by the above general formula (1) may be an ester derivative of a known unsaturated carboxylic acid such as (meth)acrylic acid, crotonic acid, itaconic acid, maleic acid or fumaric acid.

The most typical example of the monomer containing an alkyl ester group and a polymerizable unsaturated bond represented by the above general formula (1) is an ester of (meth)acrylic acid and an alcohol, and examples thereof include methyl (meth)acrylate, ethyl (meth)acrylate, n-propyl (meth)acrylate, benzyl (meth)acrylate, isopropyl (meth)acrylate, n-butyl (meth)acrylate, isobutyl (meth)acrylate, sec-butyl (meth)acrylate, and t-butyl (meth)acrylate.

Since t-butyl (meth)acrylate is an ester of a tertiary alkyl, the transesterification reaction rate is fast, and therefore the curing reaction proceeds efficiently. Therefore, it is a very preferable raw material, which is superior in crosslinking reactivity to the primary alkyl ester or the secondary alkyl ester, for donating an ester group to achieve the object of the present invention.

### (1-2-b) Compound represented by following general formula (4)

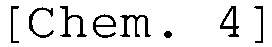

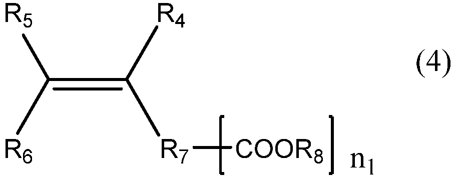

n₁: 1 to 10
(In the formula, R₄, R₅, and R₆ are the same as or different from each other and each are hydrogen, an alkyl group, a carboxyl group, an alkyl ester group or a structure represented by R₇-[COOR₈]n₁;
R₇ is an aliphatic, an alicyclic or an aromatic alkylene group having 50 or less atoms in a main chain, may contain, in the main chain, one or more functional groups selected from the group consisting of an ester group, an ether group, an amide group, and urethane, and may have a side chain;
R₈ is an alkyl group having 50 or less carbon atoms; and
in the compound represented by the general formula (4), the R₇-[COOR₈]n₁ group may be a lactone structure represented by the following general formula (4-1).) 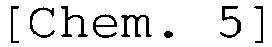 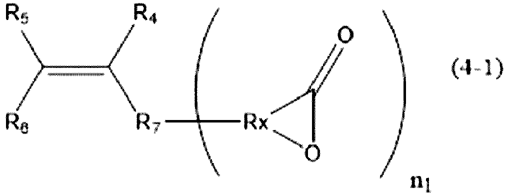
(Rₓ is a hydrocarbon group having 2 to 10 carbon atoms which may have a branched chain.)

The polymer obtained using the monomer represented by the general formula (4) can be made particularly excellent in transesterification reactivity. Therefore, it is particularly preferable to obtain a resin composition in which the curing start temperature is 130°C or lower and the gel fraction when cured under a condition of baking at 150°C for 30 minutes is 80% or more.

The monomer represented by the general formula (4) is more preferably a monomer in which R₈ contains a primary or secondary alkyl ester. The primary or secondary alkyl ester group derived from such a monomer easily reacts with a hydroxy group, and thus can sufficiently achieve the object of the present invention.

With such a compound, a polymer can be obtained by a polymerization reaction using an unsaturated bond. When the polymer obtained in this way is used in the thermosetting resin composition in which a transesterification reaction is a curing reaction, an alkyl ester group and a main chain formed based on polymerization of an unsaturated bond are present apart from each other via a linking group. Therefore, the alkyl ester group can move relatively freely. Therefore, the present inventors have found that the alkyl ester group and the hydroxy group are likely to approach each other, and the transesterification reactivity is improved. When the reactivity of the transesterification reaction as described above is improved, short-time curing and a decrease in curing temperature can be implemented, and usefulness of the thermosetting resin composition due to the transesterification reaction can be enhanced.

The alkyl ester group is not particularly limited, and those containing a known ester group such as a methyl ester group, an ethyl ester group, a benzyl ester group, an n-propyl ester group, an isopropyl ester group, an n-butyl ester group, an isobutyl ester group, and a sec-butyl ester group can be used. The alkyl group preferably has 50 or less carbon atoms. Since the alkyl group is preferably produced as an alcohol during the transesterification reaction and volatilizes, the alkyl group preferably has 20 or less carbon atoms, and more preferably 10 or less carbon atoms. A boiling point of the alcohol that volatilizes in the curing reaction is preferably 300°C or lower, and more preferably 200°C or lower.

The alkyl group in the alkyl ester group (that is, R₈ in the above general formula (4)) is an alkyl group having 50 or less carbon atoms, but the number of carbon atoms is preferably within the range of 1 to 20, more preferably within the range of 1 to 10, still more preferably within the range of 1 to 6, and most preferably within the range of 1 to 4. Such a range is preferable in that the curing reaction can suitably proceed.

The case where the alkyl ester group is a lactone group is also included in the present invention. The ester group of such a lactone group can also cause the transesterification reaction of the present invention and can be utilized for curing reaction. Such a compound has the chemical structure of the above (4-1).

Specific examples of the structure represented by the general formula (4) include those represented by the following. 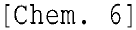 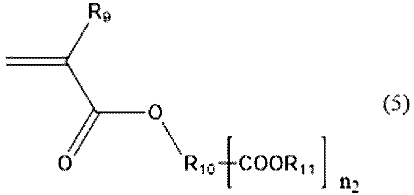
n₂: 1 to 10
(In the formula, R₉ is H or a methyl group;
R₁₀ is an alkylene group having 48 or less atoms in a main chain, may contain, in the main chain, an ester group, an ether group and/or an amide group, and may have a side chain;
R₁₁ is an alkyl group having 50 or less carbon atoms.)

Such a compound is a derivative of (meth) acrylic acid and can be obtained by a known synthesis method using (meth) acrylic acid or a derivative thereof as a raw material.

The number of atoms in the main chain of R₁₀ is more preferably 40 or less, still more preferably 30 or less, and further more preferably 20 or less. The atom that may be contained in the main chain of R₁₀ is not particularly limited, and an oxygen atom, a nitrogen atom, a sulfur atom, a silicon atom and the like in addition to a carbon atom may be contained. More specifically, in the main chain of R₁₀, an ether group, an ester group, an amino group, an amide group, a thioether group, a sulfonate group, a thioester group, a siloxane group, etc. in addition to an alkyl group may be contained.

Specific examples of the structure represented by the general formula (5) include a compound represented by the following general formula (12). 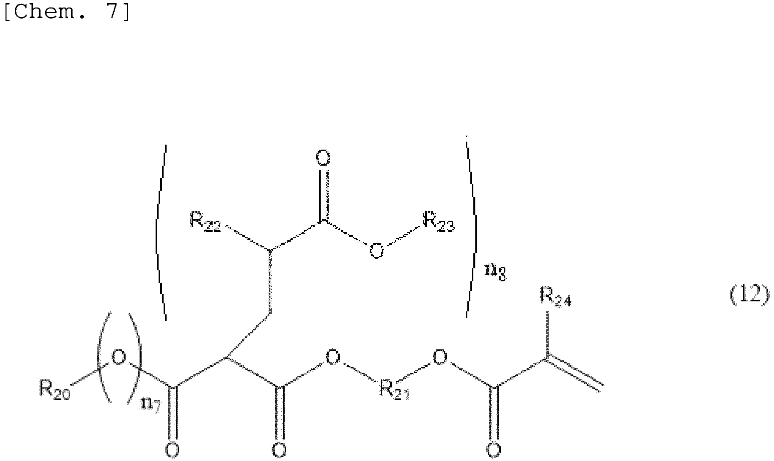
(In the formula, R₂₀ is an alkyl group having 1 to 50 carbon atoms;
R₂₁ is an alkylene group having 44 or less atoms in a main chain, may contain, in the main chain, an ester group, an ether group and/or an amide group, and may have a side chain;
R₂₂ is H or a methyl group;
R₂₃ is an alkyl group having 50 or less carbon atoms;
R₂₄ is H or a methyl group;
n₇ is 0 or 1; and
n₈ is 1 or 2.)

The compound represented by the general formula (12) can be synthesized by reacting a compound which generates an active anion such as a malonic acid ester or an acetoacetic acid ester having an unsaturated bond in the molecule with an unsaturated compound containing an alkyl ester group.

That is, malonic acid esters and acetoacetic acid have a methylene group interposed between carboxy carbons, and this methylene group is easily anionized and widely known as a group which readily produces anion reaction. A compound having an unsaturated bond in alkyl group of malonic acid ester or acetoacetic ester (for example, ester compounds of malonic acid or acetoacetic acid with an unsaturated monomer containing a hydroxy group as detailed below as a hydroxy group-containing monomer) is reacted with an alkyl ester compound containing an unsaturated group to synthesis a compound containing both of an unsaturated group and an alkyl ester group.

Only the alkyl ester group in the compound having such a structure can be easily changed by using a raw material used widely, and as a result, the curing reactivity can be easily adjusted. In addition, it is particularly preferable in that the curing reactivity can be adjusted by changing the reaction ratio to an active methylene group.

The compound which can be used as the "alkyl ester compound containing an unsaturated group" used in the above reaction is not particularly limited, and examples thereof include (meth)acrylic acid alkyl ester, methylene malonate alkyl ester, and lactone compounds containing an unsaturated group (for example, γ-crotonolactone, 5,6-dihydro-2H-pyran-2-one).

The reaction can be carried out under basic conditions, and for example, can be carried out in an organic solvent in the presence of an alkali metal salt and a crown ether.

An example of such a synthesis reaction is shown below.

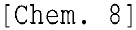

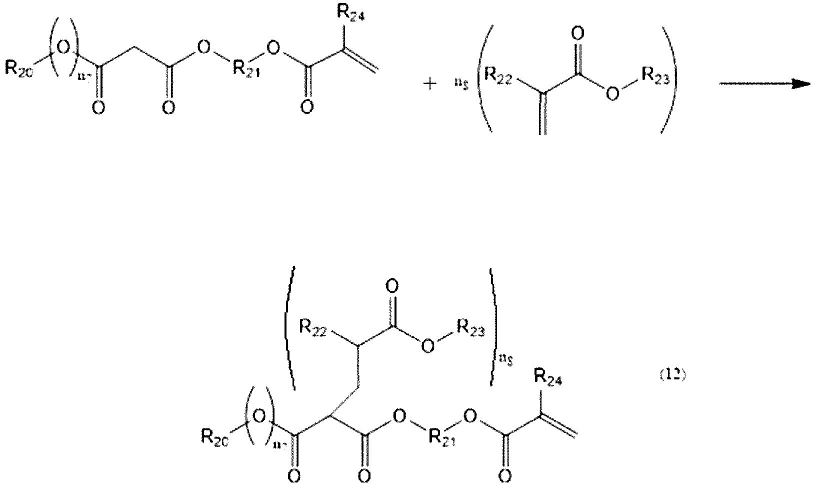

The alkyl ester compound represented by the above general formula (4) can also be obtained by esterification of a carboxylic acid corresponding to this compound.

That is, the compound represented by the following general formula (4-2) is a carboxylic acid corresponding to the alkyl ester compound represented by the general formula (4) . 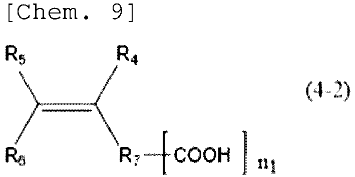
n1: 1 to 10
(In the formula, R₄, R₅, and R₆ are the same as or different from each other, and each represent hydrogen, an alkyl group, a carboxyl group, an alkyl ester group or a structure represented by the following R₇-[COOH]n₁;
R₇ is an aliphatic, an alicyclic or an aromatic alkylene group having 50 or less atoms in a main chain, may contain, in the main chain, one or more functional groups selected from the group consisting of an ester group, an ether group, an amide group, and urethane, and may have a side chain.)

Known compounds exist as the compound represented by the general formula (4-2). Such known compounds can also be converted to unsaturated group-containing ester compounds of the present invention by carrying out a usual esterification reaction (for example, reaction with an alcohol corresponding to the alkyl group of the target alkyl ester).

### (1-2-b-X)

The compound represented by the general formula (4) may be a compound containing a functional group represented by the following general formula (31) and an unsaturated group. 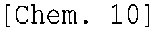 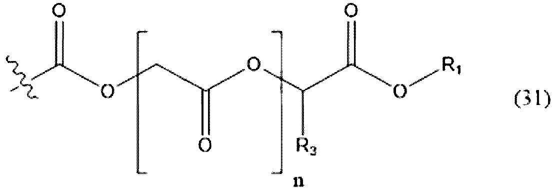
n=0 to 20
R₁ is an alkyl group having 50 or less carbon atoms.
R₃ is hydrogen or an alkyl group having 10 or less carbon atoms.

That is, in a compound represented by the general formula (4), a COOR₈ group may have a structure as represented by the above general formula (31).

An ester group represented by the above general formula (31) has high reactivity in a transesterification reaction for unknown reasons. Therefore, a thermosetting resin composition having a more excellent curing performance than that in the related art can be obtained by using an ester compound containing the functional group as a portion or the entirety of a resin component.

Therefore, it is preferably used as a resin for obtaining the thermosetting resin composition in which the curing start temperature is 130°C or lower and the gel fraction when cured under a condition of baking at 150°C for 30 minutes is 80% or more.

### (Regarding structure of general formula (31))

The structure of the above general formula (31) is based on an α-substituted carboxylic acid ester skeleton.

In the general formula (31), n is 0 to 20.

A lower limit of n is more preferably 1. An upper limit of n is more preferably 5.

Further, the compound may be a mixture of a plurality of components having different values of n in the above general formula (31). In this case, an average value nav of n is preferably 0 to 5. A lower limit of nav is more preferably 1. An upper limit of nav is more preferably 3. The measurement of nav can be performed by NMR analysis. Further, the value of n can also be measured by NMR analysis.

Here, n may be 0, but it is further preferable that the value of n exceeds 0 because a thermosetting resin composition having higher reactivity can be obtained.

That is, when n is 1 or greater, it is possible to achieve curing at a lower temperature and more suitably exhibit the effects of the present invention.

In the above general formula (31), any alkyl group having 50 or less carbon atoms can be used as R₁, and may be any one of primary, secondary, and tertiary alkyl groups.

The alkyl group (that is, R₁ in the general formula) in the alkyl ester group is an alkyl group having 50 or less carbon atoms, but the number of carbon atoms is preferably within the range of 1 to 20, more preferably within the range of 1 to 10, still more preferably within the range of 1 to 6, and most preferably within the range of 1 to 4. Such a range is preferable in that the curing reaction can suitably proceed.

Specific examples of the alkyl ester group include those containing a known ester group such as a methyl ester group, an ethyl ester group, a benzyl ester group, an n-propyl ester group, an isopropyl ester group, an n-butyl ester group, an isobutyl ester group, a sec-butyl ester group, and a t-butyl alkyl group.

A compound containing the above functional group (31) can be obtained by reacting an ester compound with a carboxylic acid or a carboxylic acid salt compound corresponding to the structure of a target compound, the ester compound being a compound in which an active group X is introduced at an α-position of a carbonyl group having the structure of the following general formula (32). 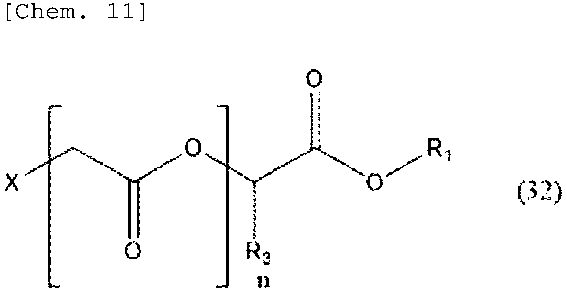 (In the formula, X represents halogen or a hydroxy group.)

The above reaction is represented by general formulas as follows.

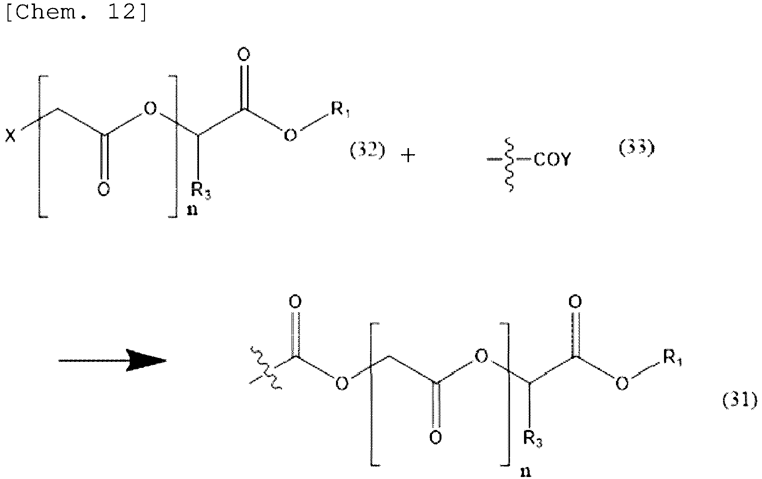

In the above general formula, the above-mentioned reaction can be performed on any carboxylic acid when a compound that can be used as a raw material represented by the general formula (33) is a carboxylic acid or a carboxylic acid derivative that can cause the above-mentioned reaction. Examples of the carboxylic acid derivatives include those in which Y is OM (carboxylic acid salt), OC=OR (acid anhydride), Cl (acid chloride), and the like. In the case of the above carboxylic acid salt of Y=OM, examples of the carboxylic acid salt may include sodium salt, potassium salt, amine salt, zinc salt, and the like. Meanwhile, in a case where a compound is used as a monomer of a polymer, a compound containing an unsaturated group can be used as a compound represented by the general formula (33) .

A compound represented by the above general formula (32) can be a compound having a skeleton corresponding to a target structure represented by the general formula (31).

In addition, a method for manufacturing a compound represented by the above general formula (32) is not particularly limited. Among compounds represented by the above general formula (32), a compound of n=0 is a compound containing an active group represented by X at an α-position, and examples thereof may include various α-hydroxy acids and α-halogenated carboxylic acids. Specifically, examples thereof may include methyl chloroacetate, ethyl chloroacetate, methyl bromoacetate, ethyl bromoacetate, t-butyl bromoacetate, methyl 2-chloropropionate, methyl glycolate, methyl lactate, ethyl lactate, butyl lactate, and the like.

An example of a method for manufacturing a compound of n=1 or greater among compounds represented by the above general formula (32) will be described below.

Meanwhile, contents to be described below are an example of a manufacturing method, and the present invention is not limited to a compound obtained by the following manufacturing method.

For example, a compound can be obtained by a reaction between a carboxylic acid containing halogen at an α-position, a salt thereof, or a derivative thereof and a carboxylic acid alkyl ester containing halogen or a hydroxy group at an α-position. When this is represented by general formulas, the following is obtained.

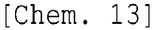

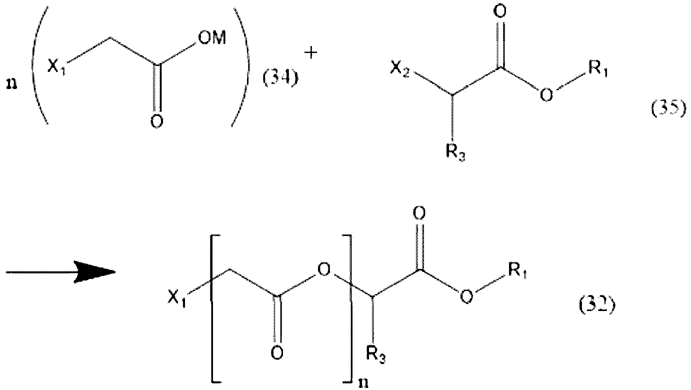

Examples of the carboxylic acid containing halogen at an α-position, a salt thereof, or a derivative thereof may include an alkali metal salt (potassium salt, sodium salt, or the like), an acid anhydride, an acid chloride, and the like of the carboxylic acid. As a specific compound represented by the above general formula (34), sodium chloroacetate or the like can be used.

Examples of the carboxylic acid alkyl ester containing halogen or a hydroxy group at an α-position may include an alkyl ester of an α-substituted carboxylic acid compound such as chloroacetic acid, bromoacetic acid, or lactic acid. An alkyl group of the above alkyl ester is not particularly limited and may be an alkyl group having 1 to 50 carbon atoms.

Such an alkyl group may be any one of primary to tertiary alkyl groups, and specific examples thereof may include a methyl group, an ethyl group, a benzyl group, an n-propyl group, an isopropyl group, an n-butyl group, an isobutyl group, a sec-butyl group, a t-butyl group, and the like.

In the above reaction, it is preferable that X₁ and X₂ are of different types. It is preferable to select a combination of functional groups so that X₁ remains unreacted on the assumption that X₁ and X₂ have different reactivities as different types of functional groups. Specifically, a combination of X₁ as a chloro group and X₂ as a bromo group is particularly preferable.

In addition, the value of n can be adjusted by adjusting a mixing ratio of two types of raw materials in the above reaction. In the above reaction, a mixture of a plurality of different types of compounds having different values of n is generally obtained. Regarding a compound represented by the above general formula (4), only a compound having a specific value of n by refining the compound may be used, or a mixture of a plurality of types of compounds having different values of n may be used.

A chemical structure represented by the above general formula (31) can be formed by reacting a compound represented by the above general formula (32) with various carboxylic acid compounds. Thus, when a carboxylic acid containing an unsaturated group is used as the "compound containing a carboxylic acid group", a compound containing the functional group represented by the above general formula (31) and a polymerizable unsaturated group can be obtained.

Specifically, for example, when the compound represented by the above general formula (32) is reacted with (meth)acrylic acid, a compound represented by the following general formula (36) is obtained. 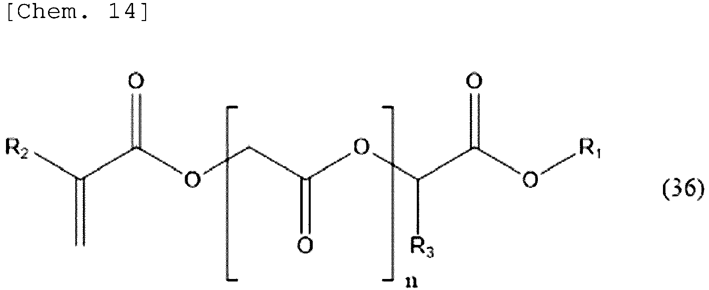 (In the formula, R₁ is an alkyl group having 50 or less carbon atoms.
R₂ is hydrogen or a methyl group.
R₃ is hydrogen or an alkyl group having 10 or less carbon atoms.
n is 1 to 20.)

R₁ in the compound represented by the above general formula (36) may be any one of primary, secondary, and tertiary alkyl groups as long as R₁ has 50 or less carbon atoms. However, R₁ is more preferably a primary or secondary alkyl group, and most preferably a primary alkyl group.

### (1-2-b-Y)

A compound represented by the above general formula (4) may be a compound containing a functional group represented by the following general formula (41) and/or a functional group represented by the following general formula (42), and an unsaturated group. 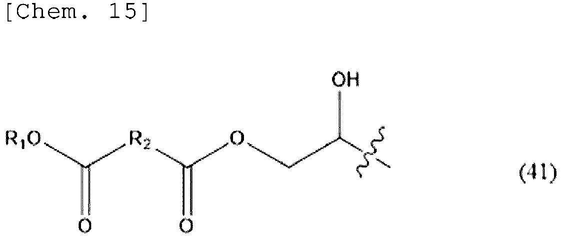 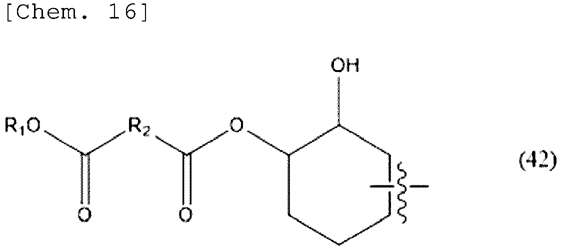
(In any one of the above general formula (41) and general formula (42), R₁ is an alkyl group having 50 or less carbon atoms.
R₂ is an alkylene group having 50 or less carbon atoms that may contain an oxygen atom or a nitrogen atom as a portion thereof.)

That is, in a compound represented by the general formula (4), a COOR₈ group may have a structure represented by the general formula (41) and/or a structure represented by the general formula (42).

Therefore, it is preferably used as a resin for obtaining the thermosetting resin composition in which the curing start temperature is 130°C or lower and the gel fraction when cured under a condition of baking at 150°C for 30 minutes is 80% or more.

The alkyl group (that is, R₁ in the general formula) in the alkyl ester group is an alkyl group having 50 or less carbon atoms, but the number of carbon atoms is preferably within the range of 1 to 20, more preferably within the range of 1 to 10, still more preferably within the range of 1 to 6, and most preferably within the range of 1 to 4. Such a range is preferable in that the curing reaction can suitably proceed.

Specific examples of the alkyl group include those containing a known ester group such as a methyl ester group, an ethyl ester group, a benzyl ester group, an n-propyl ester group, an isopropyl ester group, an n-butyl ester group, an isobutyl ester group, a sec-butyl ester group, and a t-butyl alkyl group.

The R₂ group in the above general formula (41) is an alkylene group having 50 or less carbon atoms that may contain an oxygen atom or a nitrogen atom as a portion thereof, and specifically, may include a methylene group, an ethylene group, an n-propylene group, an i-propylene group, an n-butylene group, or a cyclic structure such as a benzene ring or a cyclohexyl ring (carbon chains 1 to 50). Among them, an ethylene group is particularly preferable because the ethylene group is made from an inexpensive raw material and has an excellent reactivity.

Examples of the compound having a structure represented by the above general formula (41) may include a compound represented by the following general formula (43). 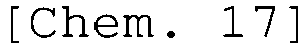 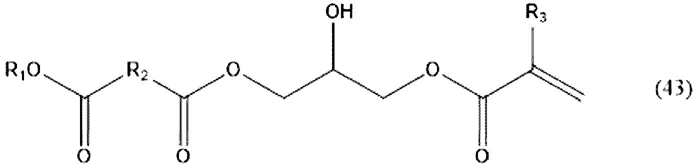 (In the formula, R₁ is an alkyl group having 50 or less carbon atoms.

R₂ is an alkylene group having 50 or less carbon atoms that may contain an oxygen atom or a nitrogen atom as a portion thereof.

R₃ is hydrogen or a methyl group.)

Among ester compounds represented by the above general formula (43), an ester compound represented by the following general formula (45) is more preferable.

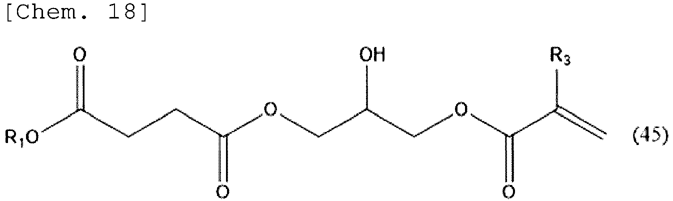

A method for manufacturing an ester compound containing the functional group represented by the above general formula (41) is not particularly limited, but examples of the method may include a method of reacting an epoxy compound with a compound containing an alkyl ester group and a carboxyl group. When this is represented by a general formula, the following reaction is shown.

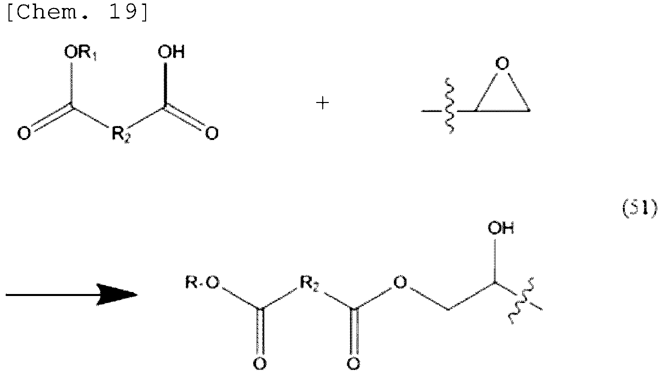

In the above-mentioned reaction, a compound containing an alkyl ester group and a carboxyl group to be used can be manufactured by a reaction between acid anhydride and alcohol such as the following reaction.

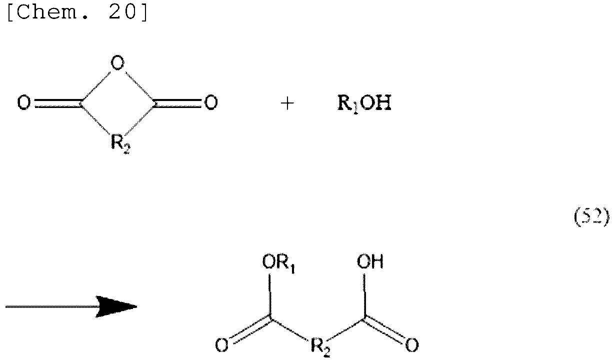

Acid anhydride which is a raw material in the reaction represented by the above-mentioned general formula (52) is not particularly limited, and various dibasic anhydride such as succinic anhydride, maleic anhydride, phthalic anhydride, hexahydrophthalic anhydride, methylhexahydrophthalic anhydride, benzoic anhydride, and itaconic anhydride having a cyclic structure can be used. The reaction represented by the above general formula (52) is a well-known general reaction and can be performed under general reaction conditions and the like.

Meanwhile, a compound containing an alkyl ester group and a carboxyl group which is used in a synthesis method represented by the above general formula (51) is not limited to a compound obtained by a method of the above general formula (52), and compounds obtained by other methods may also be used.

In the synthesis method represented by the above general formula (51), an epoxy compound is used as an essential component. The above epoxy compound is not particularly limited as long as it has an unsaturated double bond and an epoxy group, and any epoxy compound can be used.

Any known epoxy compound can be used as an epoxy compound that can be used in the above-mentioned reaction, and examples thereof may include glycidyl methacrylate, 4-hydroxybutyl acrylate glycidyl ether, trimethylolpropane triglycidyl ether, and the like.

For example, when epichlorohydrin is used, an epoxy group can be introduced into a compound having various skeletons by reacting the epichlorohydrin with a phenol compound, a carboxylic acid compound, a hydroxy group-containing compound, or the like. A compound containing the functional group represented by the general formula (41) can be obtained by performing the above-mentioned reaction on such any epoxy compound. A general formula of such a reaction is shown below.

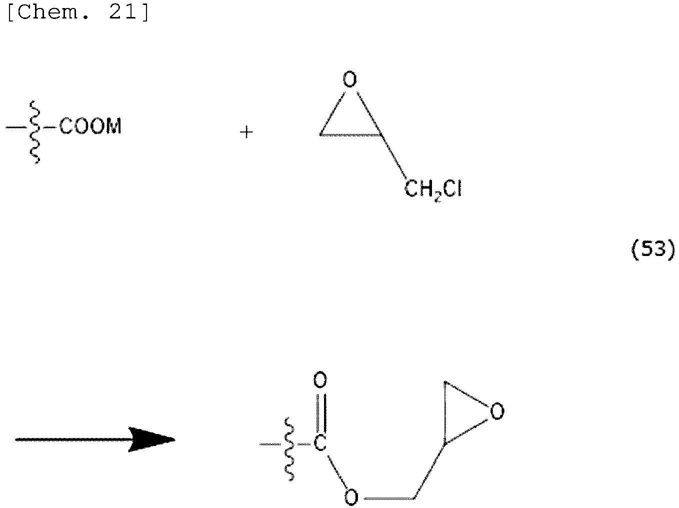

Examples of the hydroxy carboxylic acid containing the above carboxyl group and unsaturated group may include (meth)acrylic acid and the like.

Further, the above-mentioned epoxy compound may be a cyclic epoxy compound.

That is, in a case where a cyclic epoxy compound is used as an epoxy compound, a compound having a structure represented by the general formula (42) can be obtained by the following reaction.

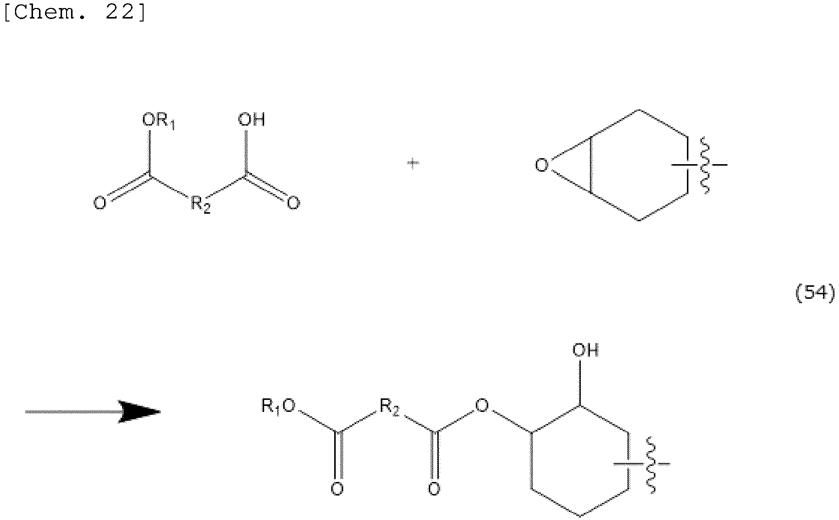

Examples of an alicyclic epoxy compound that can be used for the above-mentioned general formula may include 3,4-epoxycyclohexylmethylmethacrylate, 3',4'-epoxycyclohexylmethyl 3,4-epoxycyclohexanecarboxylate, and the like.

Specific examples of the above-mentioned compound containing a functional group represented by the general formula (41) and/or a compound represented by the general formula (42), and an unsaturated group may include a compound represented by the following general formula, and the like.

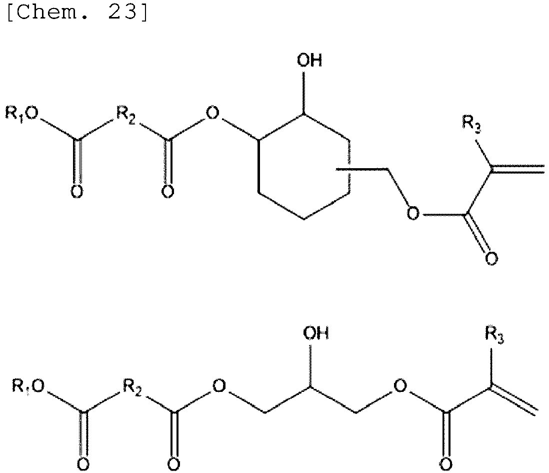

Examples of specific chemical structures of compounds represented by the general formula (4) that can be synthesized by the methods exemplified above are shown below. It is to be noted that the present invention is not limited to the compounds exemplified below. 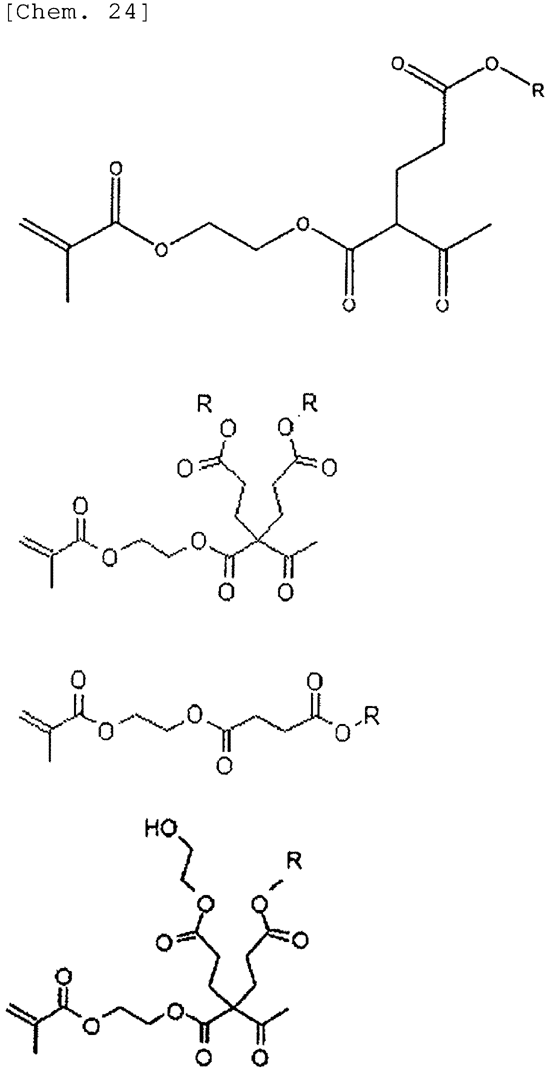 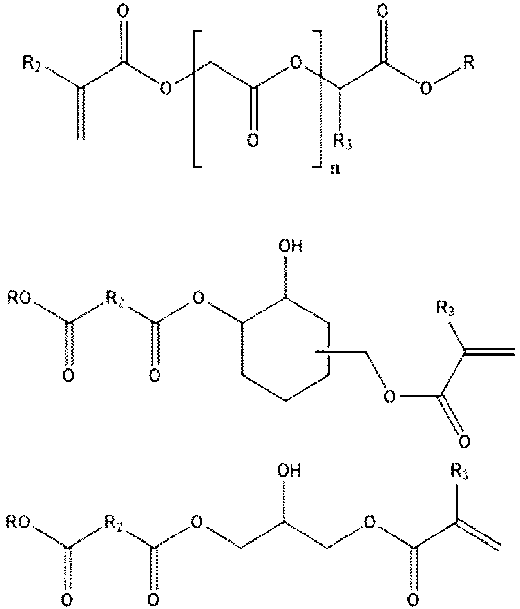 (In the above-mentioned general formula, R is an alkyl group having 50 or less carbon atoms)

Also in the compound represented by the above general formula, R in the general formula is an alkyl group having 50 or less carbon atoms, but the number of carbon atoms is preferably within the range of 1 to 20, more preferably within the range of 1 to 10, still more preferably within the range of 1 to 6, and most preferably within the range of 1 to 4. Such a range is preferable in that the curing reaction can suitably proceed.

### (1-3) Other monomers

A polymer used in the present invention can also be a homopolymer or a copolymer composed of only the monomers shown in (1-1) and (1-2) described above, or can also be a copolymer using other monomers.

Other monomers that can be used in the above-mentioned polymer are not particularly limited, and any monomer containing a polymerizable unsaturated group can be used. Monomers that can be used are shown below.

Various α-olefins such as ethylene, propylene or butene-1;
various halogenated olefins except fluoroolefin such as vinyl chloride or vinylidene chloride;
various aromatic vinyl compounds such as styrene, α-methylstyrene or vinyltoluene; various amino group-containing amide unsaturated monomers such as N-dimethylaminoethyl (meth)acrylamide, N-diethylaminoethyl (meth)acrylamide, N-dimethylaminopropyl (meth)acrylamide or N-diethylaminopropyl (meth)acrylamide;
various dialkylaminoalkyl (meth)acrylates such as dimethylaminoethyl (meth)acrylate or diethylaminoethyl (meth)acrylate; various amino group-containing monomers such as tert-butylaminoethyl (meth)acrylate, tertbutylaminopropyl (meth)acrylate, aziridinylethyl (meth)acrylate, pyrrolidinylethyl (meth)acrylate or piperidinylethyl (meth)acrylate;
various carboxyl group-containing monomers such as (meth)acrylic acid, crotonic acid, itaconic acid, maleic acid or fumaric acid; various epoxy group-containing monomers such as glycidyl (meth)acrylate, β-methylglycidyl (meth)acrylate or (meth)allyl glycidyl ether; mono- or diesters of various α, β-unsaturated dicarboxylic acids such as maleic acid, fumaric acid or itaconic acid with monohydric alcohols having 1 to 18 carbon atoms;
various hydrolyzable silyl group-containing monomers such as vinyltrimethoxysilane, vinyltriethoxysilane, vinyltripropoxysilane, vinylmethyldiethoxysilane, vinyltris (β-methoxyethoxy) silane, allyltrimethoxysilane, trimethoxysilylethyl vinyl ether, triethoxysilylethyl vinyl ether, methyldimethoxysilyl ethyl vinyl ether, trimethoxysilylpropyl vinyl ether, triethoxysilylpropyl vinyl ether, methyldiethoxysilylpropyl vinyl ether, γ-(meth)acryloyloxypropyltrimethoxysilane, γ-(meth)acryloyloxypropyltriethoxysilane or γ-(meth)acryloyloxypropylmethyldimethoxysilane;
various fluorine-containing α-olefins such as vinyl fluoride, vinylidene fluoride, trifluoroethylene, tetrafluoroethylene, chlorotrifluoroethylene, bromotrifluoroethylene, pentafluoropropylene or hexafluoropropylene; various fluorine atom-containing monomers such as various perfluoroalkyl perfluorovinyl ether or (per)fluoroalkyl vinyl ether (provided that the alkyl group has 1 to 18 carbon atoms) including trifluoro methyl trifluorovinyl ether, pentafluoroethyl trifluorovinyl ether or heptafluoropropyl trifluorovinyl ether;
various alkyl vinyl ethers or substituted alkyl vinyl ethers such as methyl vinyl ether, ethyl vinyl ether, n-propyl vinyl ether, isopropyl vinyl ether, n-butyl vinyl ether, isobutyl vinyl ether, tert-butyl vinyl ether, n-pentyl vinyl ether, n-hexyl vinyl ether, n-octyl vinyl ether, 2-ethylhexyl vinyl ether, chloromethyl vinyl ether, chloroethyl vinyl ether, benzyl vinyl ether or phenylethyl vinyl ether;
various cycloalkyl vinyl ethers such as cyclopentyl vinyl ether, cyclohexyl vinyl ether or methyl cyclohexyl vinyl ether; various aliphatic carboxylic acid vinyls such as vinyl 2,2-dimethyl propanoate, vinyl 2,2-dimethyl butanoate, vinyl 2,2-dimethyl pentanoate, vinyl 2,2-dimethyl hexanoate, vinyl 2-ethyl-2-methyl butanoate, vinyl 2-ethyl-2-methyl pentanoate, vinyl 3-chloro-2,2-dimethyl propanoate and the like, as well as vinyl acetate, vinyl propionate, vinyl butyrate, vinyl isobutyrate, vinyl caproate, vinyl caprylate, vinyl caprate or vinyl laurate, C₉ branched aliphatic carboxylic acid vinyl, C₁₀ branched aliphatic carboxylic acid vinyl, C₁₁ branched aliphatic carboxylic acid vinyl or vinyl stearate; vinyl esters of carboxylic acids having a cyclic structure such as vinyl cyclohexane carboxylate, vinyl methyl cyclohexane carboxylate, vinyl benzoate or vinyl p-tert-butylbenzoate.

In the present invention, the above-mentioned various monomers of (1-1) to (1-3) can be combined and polymerized as necessary to obtain a compound containing both an alkyl ester group and a hydroxy group, a compound containing an alkyl ester group, and a compound containing a hydroxy group. Further, the above-mentioned functional groups required for water solubilization can also be introduced into a resin in combination in a required ratio depending on the purpose.

The method for manufacturing the polymer is not particularly limited, and the polymer can be manufactured by polymerization by a known method. Specific methods include polymerization methods such as a solution polymerization method in an organic solvent, an emulsion polymerization method in water, a miniemulsion polymerization method in water, an aqueous solution polymerization method, a suspension polymerization method, and a UV curing method.

Further, in a case where solution polymerization is performed in an organic solvent, aqueousness is achieved by performing a known operation after the solution polymerization, and thus a form that can be used for the thermosetting resin composition according to the present invention may be obtained.

In addition, a hydroxy group and/or an alkyl ester group may be introduced into a side chain by reacting a side chain functional group of a polymer obtained by polymerizing a composition containing the above-mentioned monomer. A reaction with a side chain is not particularly limited, and examples thereof may include transesterification, a reaction with isyanate, a reaction with epoxy, a reaction with silane, a reaction with melamine resin, an addition reaction, hydrolysis, dehydration condensation, a substitution reaction, and the like.

The molecular weight of the above polymer is not particularly limited, and for example, a weight average molecular weight can be 3,000 to 1,000,000. An upper limit of the weight average molecular weight is more preferably 300,000, further preferably 100,000, and still further preferably 50,000. A lower limit of the weight average molecular weight is more preferably 3,000, and further preferably 4,000.

A water-soluble acrylic resin having a weight average molecular weight which is usually in the range of 5,000 to 100,000 and preferably 5,000 to 50,000, and acrylic resin particles which are dispersoids of an acrylic resin emulsion having a weight average molecular weight of 50,000 or more and preferably 100,000 or more can be exemplified.

An aqueous acrylic resin preferably contains a hydroxy group, and it is preferable that an aqueous acrylic resin generally have a hydroxyl value in the range of 20 mgKOH/g to 200 mgKOH/g, and particularly 20 mgKOH/g to 150 mgKOH/g, from the viewpoint of water dispersibility or compatibility with other components, curability of a coating film to be formed, and the like. The aqueous acrylic resin preferably has an acid value in the range of 1 mgKOH/g to 100 mgKOH/g, and particularly 10 mgKOH/g to 70 mgKOH/g.

Further, the alkyl ester group is preferably contained in an amount of 5 wt% to 95 wt% as a mixing ratio of each monomer.

### (2) Polyester polyol

The polyester polyol can usually be manufactured by an esterification reaction or a transesterification reaction of an acid component and an alcohol component.

As the above acid component, a compound which is usually used as an acid component in the manufacture of a polyester resin can be mentioned. Examples of the acid component include aliphatic polybasic acids, alicyclic polybasic acids, aromatic polybasic acids and the like, and anhydrides and esterified products thereof.

In addition, a polyester resin may be a resin obtained by reacting α-olefin epoxide such as propylene oxide and butylene oxide, a monoepoxy compound such as Cardura E10 (manufactured by Japan Epoxy Resin Co., Ltd., trade name, glycidyl ester of synthetic highly branched saturated fatty acid), or the like with an acid group of the polyester resin.

In addition, an aqueous polyester resin may be urethane-modified.

The polyester resin can have a weight average molecular weight in the range of 2,000 to 100,000, and preferably 3,000 to 30,000. The weight average molecular weight of the polyester resin can be measured by the same method as that for the weight average molecular weight of the above acrylic resin.

Example of the above aliphatic polybasic acid, and anhydride and esterified product thereof generally include aliphatic compounds containing two or more carboxyl groups in one molecule, an acid anhydride of the aliphatic compound and an esterified product of the aliphatic compound, and include aliphatic polyvalent carboxylic acids such as succinic acid, glutaric acid, adipic acid, pimelic acid, suberic acid, azelaic acid, sebacic acid, undecanedioic acid, dodecanedioic acid, brassylic acid, octadecanedioic acid, citric acid, and butanetetracarboxylic acid; anhydrides of the aliphatic polyvalent carboxylic acids; esterified products of lower alkyl having approximately 1 to approximately 4 carbon atoms of the aliphatic polyvalent carboxylic acid, and the like, and any combinations thereof. The aliphatic polybasic acid is preferably adipic acid and/or adipic anhydride from the viewpoint of the smoothness of the coating film to be obtained.

The above alicyclic polybasic acids, and their anhydrides and esterified products are generally compounds having one or more alicyclic structures and two or more carboxyl groups in one molecule, acid anhydrides of the above compounds and esterified products of the above compounds. The alicyclic structure is mainly a 4- to 6-membered ring structure. Examples of the alicyclic polybasic acid, and their anhydride and esterified product thereof include alicyclic polyvalent carboxylic acids such as 1,2-cyclohexanedicarboxylic acid, 1,3-cyclohexanedicarboxylic acid, 1,4-cyclohexanedicarboxylic acid, 4-cyclohexene-1, 2-dicarboxylic acid, 3-methyl-1,2-cyclohexanedicarboxylic acid, 4-methyl-1,2-cyclohexanedicarboxylic acid, 1,2,4-cyclohexanetricarboxylic acid, 1,3,5-cyclohexanetricarboxylic acid and the like; anhydrides of the alicyclic polyvalent carboxylic acids; esterified products of the lower alkyl having approximately 1 to approximately 4 carbon atoms of the alicyclic polyvalent carboxylic acid, and the like; and any combinations thereof.

From the viewpoint of the smoothness of the coating film to be obtained, the above alicyclic polybasic acids, and their anhydrides and esterified products is more preferably 1,2-cyclohexanedicarboxylic acid, 1,2-cyclohexanedicarboxylic anhydride, 1,3-cyclohexanedicarboxylic acid, 1,4-cyclohexanedicarboxylic acid, 4-cyclohexene-1,2-dicarboxylic acid and 4-cyclohexene-1,2-dicarboxylic anhydride, and 1,2-cyclohexane dicarboxylic acid and/or 1,2-cyclohexanedicarboxylic anhydride.

The above-mentioned aromatic polybasic acid and their anhydride and esterified product generally include an aromatic compound containing two or more carboxyl groups in one molecule, and an acid anhydride of the aromatic compound and an esterified product of the aromatic compound, and examples thereof include: aromatic polyvalent carboxylic acids such as phthalic acid, isophthalic acid, terephthalic acid, naphthalene dicarboxylic acid, 4,4'-biphenyl dicarboxylic acid, trimellitic acid, and pyromellitic acid; acid anhydrides of the aromatic polyvalent carboxylic acids; esterified products of a lower alkyl having approximately 1 to approximately 4 carbon atoms of the aromatic polyvalent carboxylic acid; and any combinations thereof.

As the above-mentioned aromatic polybasic acid and their anhydride and esterified product, phthalic acid, phthalic anhydride, isophthalic acid, trimellitic acid, and trimellitic anhydride are preferable.

Further, as the acid component, acid components other than the aliphatic polybasic acid, the alicyclic polybasic acid and the aromatic polybasic acid, for example, fatty acids such as coconut oil fatty acid, cottonseed oil fatty acid, hemp oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, safflower oil fatty acid and the like; monocarboxylic acids such as lauric acid, myristic acid, palmitic acid, stearic acid, oleic acid acid, linoleic acid, linolenic acid, benzoic acid, p-tert-butylbenzoic acid, cyclohexanoic acid, 10-phenyloctadecanoic acid and the like; hydroxy carboxylic acids such as lactic acid, 3-hydroxybutanoic acid, 3-hydroxy-4-ethoxybenzoic acid, and the like, and any combination thereof may be used.

As the alcohol component, a polyhydric alcohol containing two or more hydroxy groups in one molecule may be used. The polyhydric alcohol may include, for example, dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butane diol, 2-methyl-1,3-propanediol, 3-methyl-1,2-butanediol, 1,1,1-trimethylolpropane, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydroxypivalic acid neopentyl glycol ester, hydrogenated bisphenol A, hydrogenated bisphenol F, and dimethylolpropionic acid; polylactone diol obtained by adding a lactone compound such as ε-caprolactone to the dihydric alcohol; ester diol compounds such as bis (hydroxyethyl) terephthalate; polyether diol compounds such as alkylene oxide adducts of bisphenol A, polyethylene glycol, polypropylene glycol and polybutylene glycol; trihydric or higher alcohol such as glycerin, trimethylolethane, trimethylolpropane, diglycerin, triglycerin, 1,2,6-hexanetriol, pentaerythritol, dipentaerythritol, tris (2-hydroxyethyl) isocyanuric acid, sorbitol, and mannitol; a polylactone polyol compound obtained by adding a lactone compound such as ε-caprolactone to the trihydric or higher alcohol; fatty acid esterified products of glycerin, and the like.

As the above-mentioned alcohol component, an alcohol component other than the polyhydric alcohol, for example, a monoalcohol such as methanol, ethanol, propyl alcohol, butyl alcohol, stearyl alcohol and 2-phenoxyethanol; and an alcohol compound obtained by reacting a monoepoxy compound such as propylene oxide, butylene oxide, "Cardura E10" (trade name, glycidyl esters of synthetic hyperbranched saturated fatty acids, manufactured by HEXION Specialty Chemicals, Inc.) with an acid may be used.

The polyester polyol is not particularly limited, and it can be manufactured by a usual method. For example, the acid component and the alcohol component are heated in a nitrogen stream at approximately 150°C to approximately 250°C for approximately 5 hours to approximately 10 hours to carry out esterification reaction or transesterification reaction of the acid component and the alcohol component, thereby the polyester polyol can be manufactured.

A carboxyl group of the above-mentioned polyester resin can be neutralized using the above-described basic substance as necessary.

An aqueous polyester resin preferably contains a hydroxy group, and it is preferable that an aqueous polyester resin have generally a hydroxyl value in the range of 20 mgKOH/g to 200 mgKOH/g, and particularly 20 mgKOH/g to 150 mgKOH/g, from the viewpoint of water dispersibility or compatibility with other components, curability of a coating film to be formed, and the like. The aqueous polyester resin preferably has an acid value in the range of 1 mgKOH/g to 100 mgKOH/g, and particularly preferably 10 mgKOH/g to 70 mgKOH/g.

### (3) Ester compound

As the component (A) to be used in the present invention, an ester compound containing an alkyl ester group can also be used. Examples of the ester compound include those exemplified below.

### (3-1) (Compound obtained by addition reaction between a compound containing an active methylene group and a vinyl group)

The compound containing an active methylene group represented by the following general formula (61) causes an addition reaction with a vinyl group. 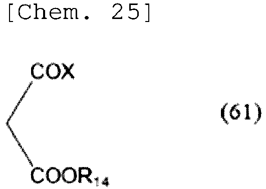 (In the formula, R₁₄ represents an alkyl group having 50 or less carbon atoms.

X represents an OR₁₄ group or a hydrocarbon group having 5 or less carbon atoms.

Although the structure of the alkyl ester group is not particularly limited, but those containing a known ester group such as methyl ester group, ethyl ester group, benzyl ester group, n-propyl ester group, isopropyl ester group, n-butyl ester group, isobutyl ester group, and sec-butyl ester group can be used.

Specific examples of such a compound containing an active methylene group include malonic acid esters and acetoacetic acid esters. Compounds obtained by adding these compounds to a vinyl compound can be used.

A compound containing an active methylene group can be added to a double bond by a Michael addition reaction. A general Michael addition reaction using such a compound containing an active methylene group is represented by the following formula.

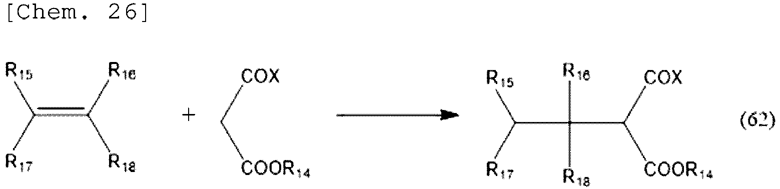

The compound obtained by such a reaction has a structure represented by the general formula (61). The compound is a compound containing two or more alkyl ester groups, and thus can be particularly suitably used for the purpose of the present invention. In particular, when (meth) acrylic acid or a derivative thereof is used as the vinyl compound of the above general formula, the following reaction occurs.

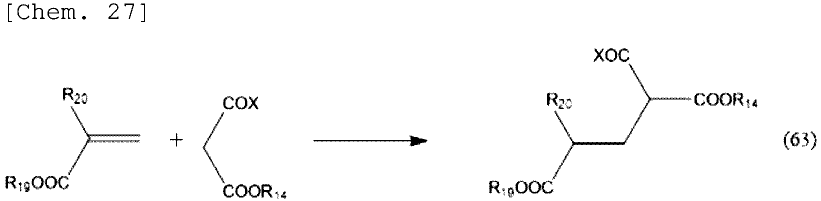

In the above general formula, R₁₄ represents an alkyl group having 50 or less carbon atoms.

R₂₀ represents hydrogen or a methyl group.

R₁₉ is not particularly limited, and may be any functional group depending on the purpose.

The ester compound obtained by such a reaction will have a structural unit represented by the following structure in the molecule.

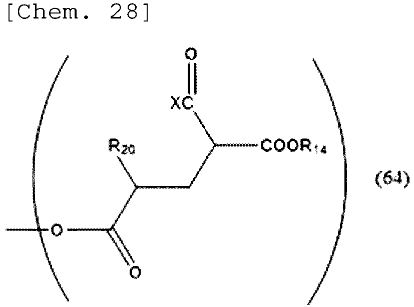

In the above-described reaction, by using an acrylic acid derivative having two or more unsaturated bonds as a raw material, an ester compound having two or more of the structure represented by the general formula (64) in the molecule can be obtained.

That is, a compound containing the functional group, which is a compound having a structure represented by the following general formula, can be preferably used in the present invention.

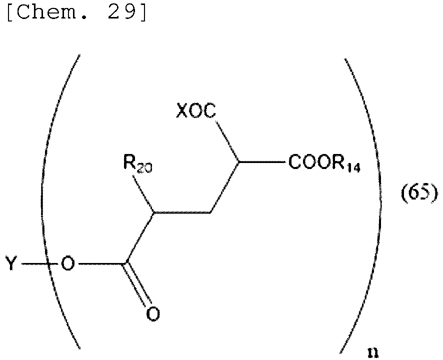

Such a compound is preferable because it has high transesterification reactivity and can obtain good curability because of many COOR groups in the molecule.

Most preferably, n in the above general formula are 2 to 12. Y is not particularly limited as long as the compound has a molecular weight of 3000 or less, and represents a hydrocarbon group which may has any functional group such as a hydroxy group, an ester group, and an ether group.

Many compounds having a structure derived from a ester of a compound containing an active methylene group are known, but the compound having the above structure is particularly preferable because the addition reaction of malonic acid ester with vinyl group can easily proceed, and the compound can be easily synthesized, and the ester group number can be adjusted by selecting the starting raw material so that the curing performances and the resin performances after curing can be easily adjusted.

Specifically, dimethyl malonate, di-n-butyl malonate, and the like can be suitably used.

Such a compound is obtained by performing a Michael addition reaction with a compound containing an active methylene group using various (meth)acrylic acid derivatives having one or more unsaturated bonds as raw materials. The "(meth)acrylic acid derivative having one or more unsaturated bonds" is not particularly limited, and examples thereof include the following.

Examples of the (meth)acrylate containing one functional group include methyl (meth)acrylate, ethyl (meth)acrylate, isopropyl (meth)acrylate, n-butyl (meth)acrylate, isobutyl (meth)acrylate, sec-butyl (meth)acrylate, t-butyl (meth)acrylate and the like.

Examples of the (meth)acrylate containing two functional groups include 1,4-butanediol di(meth)acrylate, 1,3-butanediol di(meth)acrylate, 1,6-hexanediol di(meth)acrylate, ethylene glycol di(meth)acrylate, diethylene glycol di(meth)acrylate, triethylene glycol di(meth)acrylate, polyethylene glycol di(meth)acrylate, dipropylene glycol di(meth)acrylate, tripropylene glycol di(meth)acrylate, polypropylene glycol di(meth)acrylate, neopentyl glycol di(meth)acrylate, hydroxypivalic acid neopentylglycol di(meth)acrylate, 1,6-hexanediol di(meth)acrylate, 1,9-nonanediol di(meth)acrylate, 1,10-decanediol di(meth)acrylate, glycerin di(meth)acrylate, dimethylol-tricyclodecane di(meth)acrylate (DCP-A), EO adduct diacrylate of bisphenol A (Kyoeisha Chemical Co., Ltd.; Light Acrylate BP-4EA, BP-10EA), and PO adduct diacrylate of bisphenol A (Kyoeisha Chemical Co., Ltd.; BP-4PA, BP-10PA). Among them, PO adduct diacrylate of bisphenol A (Kyoeisha Chemical Co., Ltd.; BP-4PA), dimethylol-tricyclodecane di(meth)acrylate (DCP-A) and the like can be preferably used.

Examples of the (meth)acrylate containing three functional groups include trimethylolmethane tri(meth)acrylate, trimethylolpropane tri(meth)acrylate, trimethylolpropane ethylene oxide-modified tri(meth)acrylate, trimethylolpropane propylene oxide-modified tri(meth)acrylate, pentaerythritol tri(meth)acrylate, glycerin propoxy tri(meth)acrylate, tris(2-(meth)acryloyloxyethyl)isocyanurate and the like. Among them, trimethylolpropane trimethacrylate, pentaerythritol trimethacrylate and the like can be preferably used.

Examples of the (meth)acrylate containing four functional groups include dipentaerythritol tetra(meth)acrylate, pentaerythritol tetra(meth)acrylate, pentaerythritol ethylene oxide-modified tetra(meth)acrylate, pentaerythritol propylene oxide-modified tetra(meth)acrylate, and ditrimethylolpropane tetra(meth)acrylate. Among them, ditrimethylolpropane tetra(meth)acrylate, pentaerythritol tetra(meth)acrylate and the like can be preferably used.

Examples of the (meth)acrylates containing four or more functional groups include polyfunctional (meth)acrylates such as pentaerythritol tetra(meth)acrylate, pentaerythritol ethylene oxide-modified tetra(meth)acrylate, ditrimethylolpropane tetra(meth)acrylate, dipentaerythritol tetra(meth)acrylate, dipentaerythritol penta(meth)acrylate, ditrimethylolpropane penta(meth)acrylate, propionic acid-modified dipentaerythritol penta(meth)acrylate, dipentaerythritol hexa(meth)acrylate, ditrimethylolpropane hexa(meth)acrylate, and hexa(meth)acrylate of caprolactone modified dipentaerythritol.

Specific examples of the compounds corresponding to the compounds (3) described above are shown below.

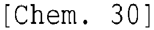

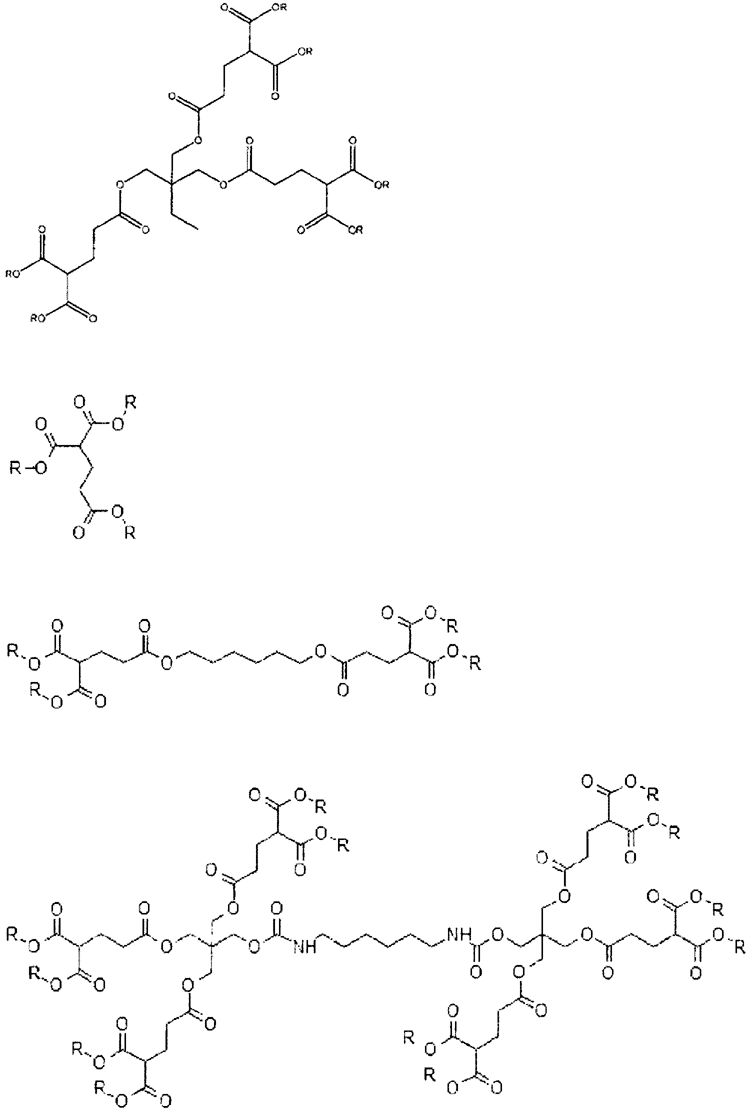

In the formula, R represents an alkyl group having 50 or less carbon atoms.

The compound (3) is preferably a compound in which three or more alkyl esters serving as crosslinking points are present in the molecule. That is, the larger the number of alkyl ester groups in the molecule, the higher the crosslinking density of the cured resin, which is preferable in that the hardness of the cured product is good and a cured product with excellent physical properties can be obtained.

The alkyl ester is more preferably 5 or more in the molecule.

The dissolution or dispersion of such a compound in an aqueous medium can be performed by a method of adding the compound after diluting the compound in a water-soluble solvent, or by emulsification and dispersion using an emulsifier. In this case, a method of mixing the compound with other components to be used in combination and then performing emulsification and dispersion using an emulsifier, and a method of preparing a dispersion in which only the compound is emulsified and dispersed using an emulsifier and mixing the dispersion with other components can be exemplified. Examples of equipment used for emulsification and dispersion include a homomixer, a high-pressure homogenizer, a dispermixer, a ribbon mixer, a propeller mixer, and a high-pressure emulsification method.

### (3-2) Alkyl ester of polyfunctional carboxylic acid

A compound obtained by reacting a polyfunctional carboxylic acid with an alcohol can also be used as the compound containing an alkyl ester according to the present invention. Such a reaction can be represented by the following general formula.

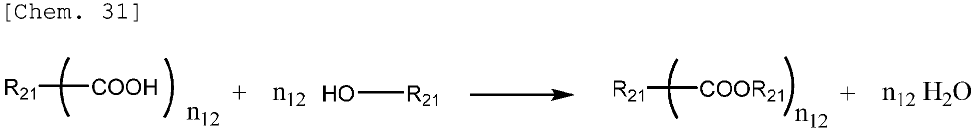

A compound containing an alkyl ester group obtained by performing the same reaction on a carboxylic acid derivative can also be used for the purpose of the present invention.

Various polyfunctional carboxylic acids are general purpose raw materials widely and inexpensively provided in many applications such as polyester raw materials, polyamide raw materials, neutralizing agents, synthetic raw materials and the like. Compounds obtained by alkyl esterification of such polyfunctional carboxylic acids by a known method can also be used in the present invention.

When such a compound is used as the ester compound, it can be esterified inexpensively by a known method and a polyvalent ester group can be introduced with a relatively low molecular weight. Further, by esterification, the compatibility with an organic solvent is improved, so that it is preferred that it can be suitably used.

The polyfunctional carboxylic acid to be used here is not particularly limited and, for example, one having a carbon number of 50 or less can be used.

More specifically, the following compounds can be mentioned;
aliphatic polyvalent carboxylic acids such as malonic acid, succinic acid, glutaric acid, adipic acid, pimelic acid, suberic acid, azelaic acid, sebacic acid, undecanedioic acid, dodecanedioic acid, brassylic acid, octadecanedioic acid, citric acid, butanetetracarboxylic acid and the like;
alicyclic polyvalent carboxylic acids such as 1,2-cyclohexane dicarboxylic acid, 1,3-cyclohexane dicarboxylic acid, 1,4-cyclohexane dicarboxylic acid, 4-cyclohexene-1,2-dicarboxylic acid, 3-methyl-1,2-cyclohexane dicarboxylic acid, 4-methyl-1,2-cyclohexane dicarboxylic acid, 1,2,4-cyclohexane tricarboxylic acid, 1,3,5-cyclohexane tricarboxylic acid and the like;
aromatic polyvalent carboxylic acids such as phthalic acid, isophthalic acid, terephthalic acid, naphthalene dicarboxylic acid, 4,4'-biphenyl dicarboxylic acid, trimellitic acid, pyromellitic acid and the like;
fatty acids such as coconut oil fatty acid, cottonseed oil fatty acid, hemp oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, safflower oil fatty acid, and the like;
monocarboxylic acids such as lauric acid, myristic acid, palmitic acid, stearic acid, oleic acid, linoleic acid, linolenic acid, benzoic acid, p-tert-butylbenzoic acid, cyclohexanoic acid, 10-phenyloctadecanoic acid and the like; and
hydroxycarboxylic acids such as lactic acid, 3-hydroxybutanoic acid, 3-hydroxy-4-ethoxybenzoic acid and the like.

In the present invention, a method for alkyl-esterifying the polyfunctional carboxylic acid is not particularly limited, and a known method such as dehydration condensation with an alcohol can be applied. In addition, a method for alkyl-esterifying a derivative of the polyfunctional carboxylic acid can also be used.

The alkyl ester of polyfunctional carboxylic acid preferably has a molecular weight of 10,000 or less. Such a compound is preferable in that molecules are easy to move and curing proceeds. The molecular weight may be a lower molecular weight such as 6,000 or less, 4,000 or less, or 2,000 or less.

### (3-3) Compound containing two or more functional groups represented by general formula (31)

A compound containing two or more functional groups represented by the above-mentioned general formula (31) can also be used in the present invention.

The functional group represented by the general formula (31) is detailed above. Such a functional group is formed by reacting the compound represented by the general formula (32) with a carboxylic acid. Therefore, when various known polycarboxylic acids are reacted with the compound represented by the general formula (32), a compound containing two or more functional groups represented by the general formula (31) can be obtained. Further, when reacted with a hydroxycarboxylic acid containing a hydroxy group, the compound becomes a compound containing a hydroxy group and the general formula (32), and can also be used as a component of the thermosetting resin composition in which a curing reaction is carried out by transesterification.

The compound is preferably a compound containing two or more functional groups in order to be used in the thermosetting resin composition according to the present invention, and a polycarboxylic acid containing two or more carboxyl groups or a hydroxycarboxylic acid containing a carboxyl group and a hydroxy group can be used.

Various polycarboxylic acids are general-purpose raw materials that are widely and inexpensively provided in many applications such as polyester raw materials, polyamide raw materials, neutralizing agents, and synthetic raw materials. A compound obtained by converting such a polycarboxylic acid into a functional group represented by the general formula (32) by a known method can also be used in the present invention.

When such a compound is used as the compound containing a functional group represented by the general formula (32), it can be esterified inexpensively by a known method and a polyvalent ester group can be introduced with a relatively low molecular weight. In addition, such a compound is preferable in that by esterification, the compatibility with an organic solvent is improved and the compound can be suitably used.

The polycarboxylic acid to be used here is not particularly limited and, for example, one having a carbon number of 50 or less can be used.

More specifically, the following compounds can be mentioned;
aliphatic polyvalent carboxylic acids such as malonic acid, succinic acid, glutaric acid, adipic acid, pimelic acid, suberic acid, azelaic acid, sebacic acid, undecanedioic acid, dodecanedioic acid, brassylic acid, octadecanedioic acid, citric acid, butanetetracarboxylic acid and the like;
alicyclic polyvalent carboxylic acids such as 1,2-cyclohexane dicarboxylic acid, 1,3-cyclohexane dicarboxylic acid, 1,4-cyclohexane dicarboxylic acid, 4-cyclohexene-1,2-dicarboxylic acid, 3-methyl-1,2-cyclohexane dicarboxylic acid, 4-methyl-1,2-cyclohexane dicarboxylic acid, 1,2,4-cyclohexane tricarboxylic acid, 1,3,5-cyclohexane tricarboxylic acid and the like;
aromatic polyvalent carboxylic acids such as phthalic acid, isophthalic acid, terephthalic acid, naphthalene dicarboxylic acid, 4,4'-biphenyl dicarboxylic acid, trimellitic acid, pyromellitic acid and the like;
fatty acids such as coconut oil fatty acid, cottonseed oil fatty acid, hemp oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, safflower oil fatty acid, and the like; monocarboxylic acids such as lauric acid, myristic acid, palmitic acid, stearic acid, oleic acid, linoleic acid, linolenic acid, benzoic acid, p-tert-butylbenzoic acid, cyclohexanoic acid, 10-phenyloctadecanoic acid and the like; and hydroxycarboxylic acids such as lactic acid, 3-hydroxybutanoic acid, 3-hydroxy-4-ethoxybenzoic acid and the like.

A compound in which the carboxylic acid group of the polycarboxylic acid is substituted with the structure represented by the general formula (31) preferably has a molecular weight of 10,000 or less. Such a compound is preferable in that molecules are easy to move and curing proceeds. The molecular weight may be a lower molecular weight such as 6,000 or less, 4,000 or less, or 2,000 or less.

Meanwhile, as an example of such a compound, a general structure of a compound when the above-mentioned reaction is performed using citric acid as polycarboxylic acid is shown below.

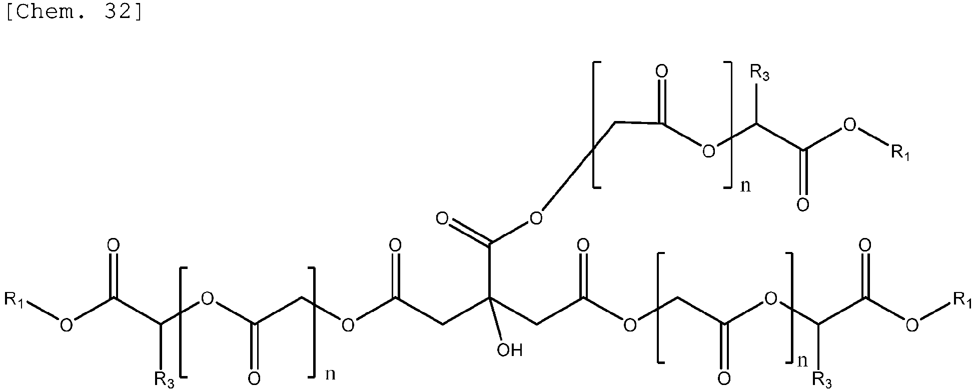

### (3-4) Compound containing two or more functional groups represented by the following general formula (41) and/or functional group represented by the following general formula (42)

The compound containing the functional group represented by the general formula (41) and/or the functional group represented by the general formula (42) can be obtained by the manufacturing method as described above. Such a compound containing two or more functional groups or such a compound containing a functional group and a hydroxy group can be suitably used as a component of the resin composition in which a transesterification reaction is a curing reaction.

A compound containing a functional group represented by the general formula (41) and/or a functional group represented by the general formula (42) is used as a curable functional group in a curable resin composition. Thus, it is preferable that the compound contain two or more functional groups. More specifically, the compound may be a compound containing two or more of functional groups represented by the general formula (41) and/or functional groups represented by the general formula (42), or may be a compound containing a hydroxy group and the like, in addition to the functional group represented by the above-mentioned general formula (41) and/or a functional group represented by the functional group represented by the above-mentioned general formula (42).

As described above, the functional group represented by the above general formula (41) and/or the functional group represented by the general formula (42) can be introduced by performing a reaction represented by the general formula (51) or a reaction represented by the general formula (54) on various epoxy compounds.

Thus, a compound obtained by performing a reaction represented by the above general formula (54) on a known epoxy compound can also be used in the present invention.

An epoxy compound that can be used in such a reaction is not particularly limited, and examples thereof may include an aliphatic polyfunctional liquid epoxy resin, a bisphenol A type epoxy resin, a bisphenol F type epoxy resin, a biphenyl type epoxy resin, a phenol novolac type epoxy resin, a cresol novolac type epoxy resin, a bisphenol derivative epoxy resin, a naphthalene skeleton or alicyclic skeleton-containing novolac epoxy resin, and the like, and may include an epoxy resin whose oxylan ring is glycidyl ether, and the like.

It is preferable that the above epoxy compounds is a compound containing two or more epoxy groups in one molecule.

Further, an epoxy compound can be obtained by performing a reaction represented by the general formula (53) on a carboxylic acid or a derivative thereof as described above.

Then, a compound containing a functional group represented by the general formula (41) and/or a functional group represented by the general formula (42) can be obtained by performing a reaction represented by the general formula (51) and/or the general formula (54) on the epoxy compound.

Thus, it is possible to obtain a compound containing such a functional group or a compound containing such a functional group and a hydroxy group by performing the above-mentioned reaction on various polycarboxylic acids and hydroxy carboxylic acids.

Polycarboxylic acid that can be used as a raw material at the time of obtaining a compound containing a functional group represented by the general formula (41) and/or a functional group represented by the general formula (42) by the above-mentioned reaction is not particularly limited, and for example, polycarboxylic acid having 50 or less carbon atoms can be used.

More specifically, the following compounds can be mentioned;
aliphatic polyvalent carboxylic acids such as malonic acid, succinic acid, glutaric acid, adipic acid, pimelic acid, suberic acid, azelaic acid, sebacic acid, undecanedioic acid, dodecanedioic acid, brassylic acid, octadecanedioic acid, citric acid, butanetetracarboxylic acid and the like;
alicyclic polyvalent carboxylic acids such as 1,2-cyclohexane dicarboxylic acid, 1,3-cyclohexane dicarboxylic acid, 1,4-cyclohexane dicarboxylic acid, 4-cyclohexene-1,2-dicarboxylic acid, 3-methyl-1,2-cyclohexane dicarboxylic acid, 4-methyl-1,2-cyclohexane dicarboxylic acid, 1,2,4-cyclohexane tricarboxylic acid, 1,3,5-cyclohexane tricarboxylic acid and the like;
aromatic polyvalent carboxylic acids such as phthalic acid, isophthalic acid, terephthalic acid, naphthalene dicarboxylic acid, 4,4'-biphenyl dicarboxylic acid, trimellitic acid, pyromellitic acid and the like;
fatty acids such as coconut oil fatty acid, cottonseed oil fatty acid, hemp oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, safflower oil fatty acid, and the like; and monocarboxylic acids such as lauric acid, myristic acid, palmitic acid, stearic acid, oleic acid, linoleic acid, linolenic acid, benzoic acid, p-tert-butylbenzoic acid, cyclohexanoic acid, 10-phenyloctadecanoic acid and the like.

Examples of the hydroxycarboxylic acid containing a carboxyl group and a hydroxy group that can be used as a raw material when a compound containing the functional group represented by the general formula (41) and/or the functional group represented by the general formula (42) is obtained by the above reaction include hydroxycarboxylic acids such as glycolic acid, citric acid, lactic acid, 3-hydroxybutanoic acid, and 3-hydroxy-4-ethoxybenzoic acid.

Specific examples of such a compound may include compounds having a structure which is shown below.

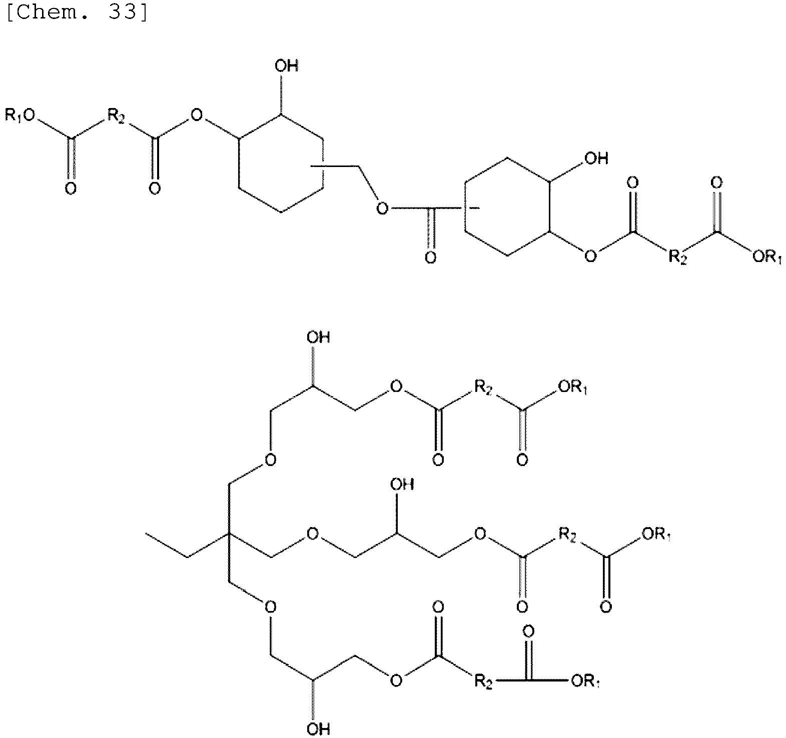

### (3-5) Cyanuric acid-based ester compound

Examples of the ester compound containing an alkyl ester group used in the present invention include cyanuric acid-based ester compounds exemplified below.

One of them is an ester compound having an isocyanuric acid ring represented by the following general formula (71). 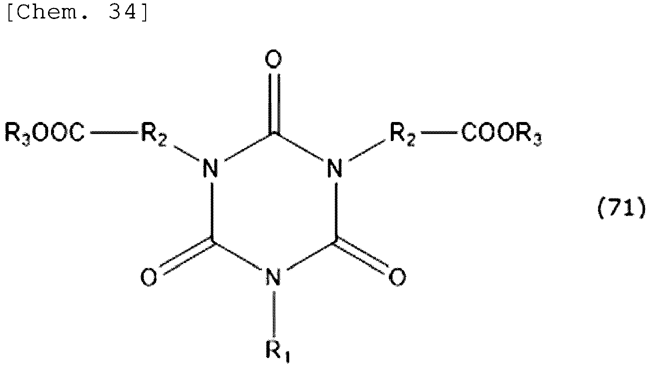
(In the formula, R₁ is hydrogen or a structure represented by R₂-COOR₃.
R₂ is a hydrocarbon group having 50 or less atoms in a main chain, may contain, in the main chain, one or more functional groups selected from the group consisting of an ester group, an ether group, an amide group, and urethane, and may have a side chain.
R₃ is an alkyl group having 50 or less carbon atoms.)

The ester compound represented by the general formula (71) contains two or three alkyl ester groups, and is particularly excellent in transesterification reactivity. Therefore, it is particularly preferable to obtain a resin composition in which the curing start temperature is 130°C or lower and the gel fraction when cured under a condition of baking at 150°C for 30 minutes is 80% or more.

The monomer represented by the general formula (71) is more preferably a monomer in which R₃ contains a primary or secondary alkyl ester group. The primary or secondary alkyl ester group derived from such a monomer easily reacts with a hydroxy group, and thus can sufficiently achieve the object of the present invention.

The alkyl ester group is not particularly limited, and those containing a known ester group such as a methyl ester group, an ethyl ester group, a benzyl ester group, an n-propyl ester group, an isopropyl ester group, an n-butyl ester group, an isobutyl ester group, and a sec-butyl ester group can be used. The alkyl group preferably has 50 or less carbon atoms. Since the alkyl group is preferably produced as an alcohol during the transesterification reaction and volatilizes, the alkyl group preferably has 20 or less carbon atoms, and more preferably 10 or less carbon atoms. A boiling point of the alcohol that volatilizes in the curing reaction is preferably 300°C or lower, and more preferably 200°C or lower.

A method for manufacturing the ester compound represented by the general formula (71) is not particularly limited, and examples thereof include a method of reacting a halogenated carboxylic acid ester with cyanuric acid. When this is represented by a general formula, the following reaction is shown. 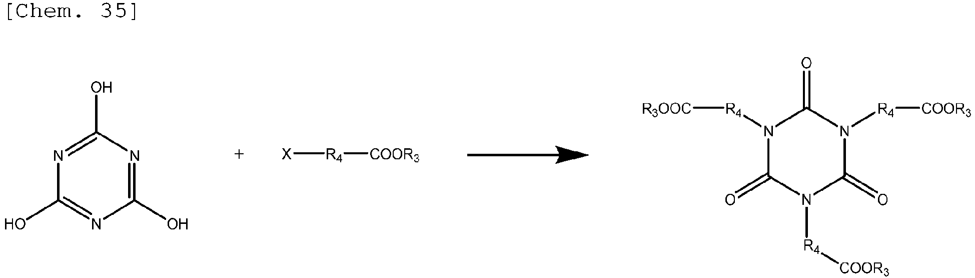
(In the formula, R₃ is an alkyl group having 50 or less carbon atoms.
R₄ is an alkylene group having 50 or less carbon atoms.
X is a halogen element.)

Examples of the halogenated carboxylic acid ester used in the above reaction include any known halogenated carboxylic acid ester, and examples thereof include methyl chloroacetate, ethyl chloroacetate, propyl chloroacetate, isopropyl chloroacetate, methyl 2-chloropropionate, ethyl 2-chloropropionate, propyl 2-chloropropionate, isopropyl 2-chloropropionate, methyl 2-chlorobutyrate, ethyl 2-chlorobutyrate, propyl 2-chlorobutyrate, isopropyl 2-chlorobutyrate, methyl bromoacetate, ethyl bromoacetate, propyl bromoacetate, isopropyl bromoacetate, methyl 2-bromopropionate, ethyl 2-bromopropionate, propyl 2-bromopropionate, isopropyl 2-bromopropionate, methyl 2-bromobutyrate, ethyl 2-bromobutyrate, propyl 2-bromobutyrate, isopropyl 2-bromobutyrate, ethyl iodoacetate, propyl iodoacetate, isopropyl iodoacetate, methyl 2-iodopropionate, ethyl 2-iodopropionate, propyl 2-iodopropionate, isopropyl 2-iodopropionate, methyl 2-iodobutanoate, ethyl 2-iodobutanoate, propyl 2-iodobutanoate, and isopropyl 2-iodobutanoate.

The above reaction is a well-known general reaction, and can be performed under general conditions.

Other examples of the method for manufacturing the ester compound represented by the general formula (71) include a method of reacting an orthoformic acid ester with a carboxylic acid having an isocyanuric acid ring. When this is represented by a general formula, the following reaction is shown. 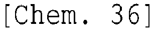 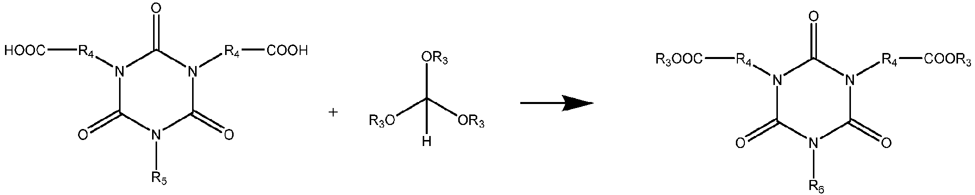
(In the formula, R₅ is hydrogen or a structure represented by R₄-COOH.
R₄ is an alkylene group having 50 or less carbon atoms.
R₆ is hydrogen or a structure represented by R₄-COOR₃.)

Examples of the carboxylic acid having a isocyanuric acid ring used in the above reaction ring include tris(2-carboxyethyl) isocyanurate and bis(2-carboxyethyl) isocyanurate.

Examples of the orthoformic acid ester used in the above reaction include methyl orthoformate and ethyl orthoformate.

The above reaction is a well-known general reaction, and can be performed under general conditions.

Specific examples of a chemical structure of the ester compound having an isocyanuric acid ring represented by the general formula (71) are shown below. The present invention is not limited to the compounds exemplified below.

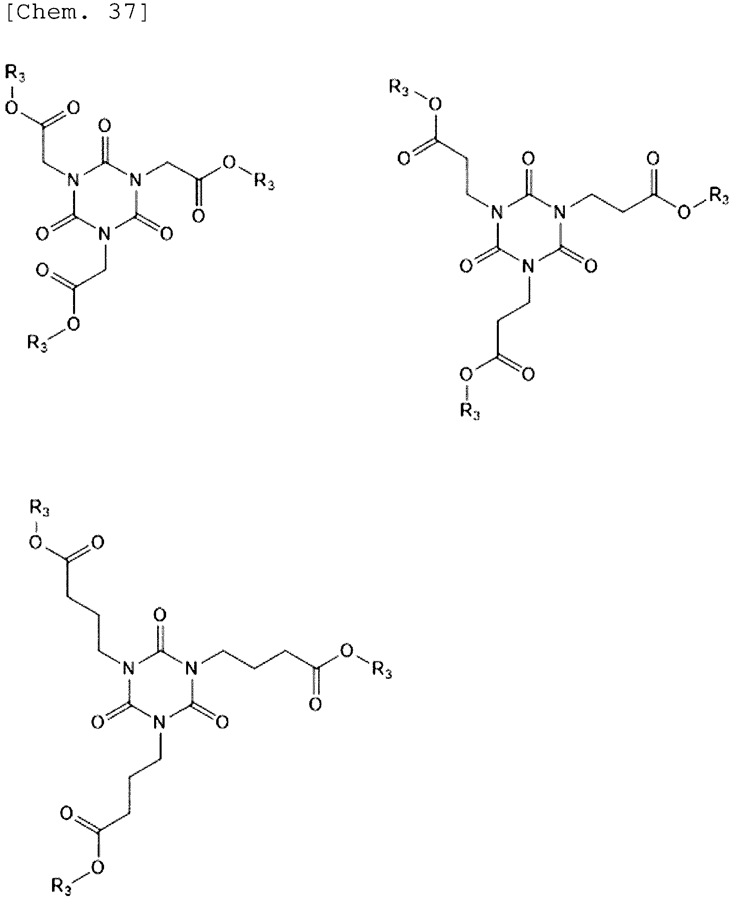

Examples of the cyanuric acid-based ester compound used in the present invention include, in addition to the above, a cyanuric acid-based ester compound exemplified below. 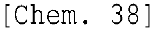 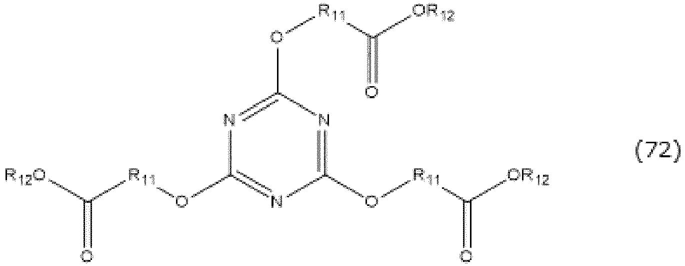
(In the formula, R₁₁ is an alkylene group having 50 or less carbon atoms.
R₁₂ is an alkyl group having 50 or less carbon atoms.)

The ester compound represented by the general formula (72) is also particularly excellent in transesterification reactivity. Therefore, it is particularly preferable to obtain a resin composition in which the curing start temperature is 130°C or lower and the gel fraction when cured under a condition of baking at 150°C for 30 minutes is 80% or more.

A method for manufacturing the ester compound represented by the general formula (72) is not particularly limited, and examples thereof include a method of reacting a hydroxycarboxylic acid ester with cyanuric acid chloride. When this is represented by a general formula, the following reaction is shown.

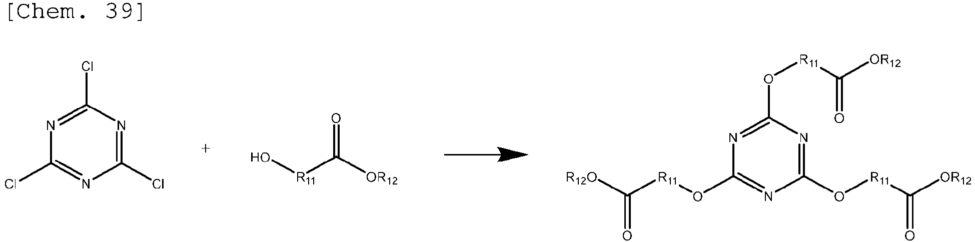

Examples of a hydroxy acid ester used in the above reaction include methyl glycolate, ethyl glycolate, butyl glycolate, methyl hydroxypropionate, ethyl hydroxypropionate, butyl hydroxypropionate, methyl hydroxybutyrate, ethyl hydroxybutyrate, butyl hydroxybutyrate, methyl lactate, ethyl lactate, and butyl lactate.

Various cyanuric acid-based compounds have an advantage in that when used in the present invention, a coating film exhibiting excellent film physical properties with high crosslink density can be obtained even in low-temperature curing.

When such a compound is used as the compound containing an alkyl ester group, it can be esterified inexpensively by a known method and a polyvalent ester group can be introduced with a relatively low molecular weight.

### (4) Low molecular weight polyol

A low molecular weight polyol (specifically, a molecular weight of 2,000 or less) may be used as the compound containing at least two hydroxy groups in one molecule.

Examples of the low molecular weight polyol include dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 1,1,1-trimethylolpropane, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydroxypivalic acid neopentyl glycol ester, hydrogenated bisphenol A, hydrogenated bisphenol F, and dimethylolpropionic acid; polylactone diols obtained by adding a lactone compound such as ε-caprolactone to the dihydric alcohols; ester diol compounds such as bis (hydroxyethyl) terephthalate; polyether diol compounds such as alkylene oxide adducts of bisphenol A, polyethylene glycol, polypropylene glycol and polybutylene glycol; trihydric or higher hydric alcohol such as glycerin, trimethylolethane, trimethylolpropane, diglycerin, triglycerin, 1,2,6-hexanetriol, pentaerythritol, dipentaerythritol, tris (2-hydroxyethyl) isocyanuric acid, sorbitol, mannitol, and the like.

Such a low molecular weight polyol is known as a general-purpose product, and is available at a low cost. Further, the low molecular weight polyol has high water solubility, and can be suitably used as a crosslinking agent for the purpose of curing in an aqueous system.

The thermosetting resin composition according to the present invention can be cured at a low temperature, particularly preferable resins for forming a resin composition having such properties are as follows.

The resin has the structures represented by the general formula (12), (31), or (64), and particularly preferably have the structure represented by the general formula (31). It is preferable to use, as a catalyst, zinc acetylacetonate or zirconium acetylacetonate, or both of zinc acetylacetonate and zirconium acetylacetonate, and it is more preferable to use zinc acetylacetonate or zirconium acetylacetonate in combination with an organic phosphine oxide or alkylated (thio)urea.

The thermosetting resin composition according to the present invention may further be used in combination with other crosslinking agents commonly used in the fields of coating materials and adhesives in addition to the above-mentioned resin components. The crosslinking agent that can be used is not particularly limited, and examples thereof include an isocyanate compound, a blocked isocyanate compound, a melamine resin, an epoxy resin, a silane compound, and the like. In addition, vinyl ether, an anionic polymerizable monomer, a cationic polymerizable monomer, and a radical polymerizable monomer, and the like may be used in combination. A curing agent for accelerating the reaction of the used crosslinking agent may be used in combination.

Meanwhile, the above-mentioned other crosslinking agents are not essential, and the thermosetting resin composition according to the present invention is preferable in that good curability can be obtained even when the thermosetting resin composition does not contain the crosslinking agent.

When the crosslinking agent is a polyisocyanate compound and/or a melamine resin, the blending amount (that is, (amount of crosslinking agent)/(amount of crosslinking agent + amount of resin component)) with respect to the total amount of the resin component (A) and the crosslinking agent is preferably 0.01 wt% to 50 wt%. Such a range of the blending amount is preferable in that the curing reaction by the transesterification reaction and the curing reaction by another curing agent are simultaneously carried out.

The lower limit is more preferably 0.01 wt%, and still more preferably 1 wt%. The upper limit is more preferably 30 wt%, and still more preferably 20 wt%.

The thermosetting resin composition according to the present invention can be suitably used in the fields of thermosetting coating materials, thermosetting adhesives, and the like. Further, it can also be used as an ambient temperature curable resin composition.

When the composition is used as a thermosetting coating material, additives generally used in the field of coating materials may be used in combination with the above-mentioned components. For example, a leveling agent, an antifoaming agent, a coloring pigment, an extender pigment, a bright pigment, a pigment dispersant, a rheology control agent, a UV absorbent, or any combination thereof may be used in combination.

When a pigment is used, it is preferably contained in a total amount of 1 wt% to 500 wt%, based on 100 wt% of the total solid content of the resin component. The lower limit is more preferably 3 wt%, and still more preferably 5 parts by weight. The upper limit is more preferably 400 wt%, and still more preferably 300 wt%.

Examples of the coloring pigment include titanium oxide, zinc white, carbon black, molybdenum red, prussian blue, cobalt blue, azo pigment, phthalocyanine pigment, quinacridone pigment, isoindoline pigment, threne pigment, perylene pigment, dioxazine type pigment, diketopyrrolopyrrole type pigment, and any combination thereof.

Examples of the extender pigment include clay, kaolin, barium sulfate, barium carbonate, calcium carbonate, talc, silica, alumina white and the like, and barium sulfate and/or talc is preferable, and barium sulfate is more preferable.

Examples of the bright pigment include, for example, aluminum (including vapor-deposited aluminum), copper, zinc, brass, nickel, aluminum oxide, mica, aluminum oxide coated with titanium oxide or iron oxide, mica coated with titanium oxide or iron oxide, glass flakes, hologram pigments, and the like, and any combinations thereof. The aluminum pigment includes nonleafing type aluminum and leafing type aluminum.

The coloring pigment is preferably blended in the thermosetting resin composition in a state of being dispersed in a pigment dispersion resin. The amount of the coloring pigment may vary depending on the type of the pigment and the like, and is generally within a range of preferably about 0.1 parts by weight to about 300 parts by weight and more preferably about 1 part by weight to about 150 parts by weight with respect to 100 parts by weight of a solid content of the resin component contained in the pigment dispersing resin.

The thermosetting coating material may further contain, if desired, a coating material additive such as an organic solvent, a thickener, an ultraviolet absorber, a light stabilizer, an antifoaming agent, a plasticizer, a surface conditioner, an anti-settling agent, a dispersant, a color separation inhibitor, a rheology control agent, a leveling agent, a substrate wetting agent, and a slipping agent.

Examples of the thickener include inorganic thickeners such as silicate, metal silicate, montmorillonite, colloidal alumina and the like; polyacrylic acid thickeners such as copolymers of (meth)acrylic acid and (meth)acrylic acid ester, and sodium polyacrylate; an associative type thickener having a hydrophilic part and a hydrophobic part in one molecule and showing a thickening effect by an adsorption of the hydrophobic portion on the surface of the pigment or emulsion particle in the coating, or an association of the hydrophobic parts, in an aqueous medium; cellulose derivative thickeners such as carboxymethylcellulose, methylcellulose, hydroxyethylcellulose and the like; protein type thickeners such as casein, sodium caseinate, ammonium caseinate and the like; alginic acid thickeners such as sodium alginate; polyvinyl thickeners such as polyvinyl alcohol, polyvinyl pyrrolidone, polyvinyl benzyl ether copolymers; polyether thickeners such as pluronic polyethers, polyether dialkyl esters, polyether dialkyl ethers, polyether epoxy modified products and the like; maleic anhydride copolymer type thickener such as a partial ester of vinyl methyl ethermaleic anhydride copolymer; polyamide type thickeners such as a polyamide amine salt, and the like, and any combination thereof.

The polyacrylic acid thickener is commercially available, and examples thereof include "ACRYSOLASE-60", "ACRYSOLTT-615", and "ACRYSOLRM-5" (trade names) manufactured by Rohm and Haas Company, and "SN Thickener 613", "SN Thickener 618", "SN Thickener 630", "SN Thickener 634", and "SN Thickener 636" (trade names) manufactured by San Nopco CO., LTD..

The associative type thickener is commercially available, and examples thereof include "UH-420", "UH-450", "UH-462", "UH-472", "UH-540", "UH-752", "UH-756VF", and "UH-814N" (trade names) manufactured by ADEKA Corporation, "ACRYSOLRM-8W", "ACRYSOLRM-825", "ACRYSOLRM-2020NPR", "ACRYSOLRM-12W", and "ACRYSOLSCT-275" (trade names) manufactured by Rohm and Haas Company, "SN Thickner 612", "SN Thickener 621 N", "SN Thickener 625 N", "SN Thickener 627 N", and "SN Thickener 660 T" (trade names) manufactured by SAN NOPCO CO., LTD. and the like.

As the pigment dispersing resin, an acrylic pigment dispersing resin is preferably used. More specifically, examples thereof include an acrylic resin obtained by polymerizing a polymerizable unsaturated monomer with a polymerization initiator in the presence of a hydrophilic organic solvent.

Examples of the polymerizable unsaturated monomer include the compounds exemplified in the synthesis of the resin described above, and may be appropriately used in combination.

The pigment dispersing resin is preferably a resin that is soluble or dispersible in water, and specifically has a hydroxyl value of preferably 10 mgKOH/g to 100 mgKOH/g and more preferably 20 mgKOH/g to 70 mgKOH/g, and an acid value of preferably 10 mgKOH/g to 80 mgKOH/g and more preferably 20 mgKOH/g to 60 mgKOH/g.

The thermosetting resin composition according to the present invention preferably contains the pigment dispersing resin in an amount of 5 mass% to 70 mass%, and more preferably 7 mass% to 61 mass%, in terms of solid content, based on a total solid content mass of the resin and the pigment dispersing resin. The above range is preferable from the viewpoint of the storage stability of the thermosetting resin composition, and the finishing property, water resistance, and the medium grinding property of a colored coating film formed using a colored coating composition according to the present invention.

The thermosetting resin composition according to the present invention may be an aqueous composition. The method for making the composition aqueous is not particularly limited, and the composition can be made aqueous by a general method using the above components. When the composition is made aqueous, the transesterification reaction can also suitably proceed using the transesterification catalyst according to the present invention.

The object to which the thermosetting coating can be applied is not particularly limited, and examples thereof include an outer plate portion of an automobile body such as a passenger car, a truck, a motorcycle, and a bus; an automobile part; house electrical products such as a mobile phone, an audio device, and the like, building materials, furniture, adhesives, film and glass coating agents, and the like. In addition, examples thereof include coating on a precoated metal or a metal can which forms a coating film by short-time curing at a high temperature. Further, examples thereof include use for an electrodeposition coating material, an adhesive, and a particle board.

The thermosetting resin composition can also be used as an electrodeposition coating material composition. Examples of the electrodeposition coating material include a cationic electrodeposition coating material and an anionic electrodeposition coating material, and can be any one of the above.

The object to be coated may be one obtained by applying a surface treatment such as a phosphate treatment, a chromate treatment, a composite oxide treatment or the like to the metal surface of the metal material and a car body molded therefrom, or may be a substrate to be coated having a coating film.

As the above-mentioned substrate to be coated having the coating film, there can be mentioned a substrate which is subjected to a surface treatment as desired and has an undercoating film formed thereon. In particular, a car body having an undercoating film formed by an electrodeposition coating is preferable, and a car body having an undercoating film formed by a cationic electrodeposition coating is more preferable.

The object to be coated may be one obtained by subjecting the surface of plastic such as plastic material and automobile part molded therefrom to surface treatment, primer coating or the like as desired. Further, the plastic material and the metal material may be combined.

The method for applying the thermosetting coating is not particularly limited, and examples thereof include an air spray coating, an airless spray coating, a rotary atomization coating, a curtain coating and the like, and air spray coating, rotary atomization coating, and the like are preferable. At the time of coating, electrostatic application may be performed as desired. By the above coating method, a wet coating film can be formed from the water-borne coating material composition.

The wet coating film can be cured by heating. The curing can be carried out by a known heating means, for example, a drying oven such as an air-heating furnace, an electric furnace, an infrared induction heating furnace or the like. The wet coating film is preferably cured by heating at a temperature in the range of about 80°C to about 180°C, more preferably about 100°C to about 170°C, and even more preferably about 120°C to about 160°C, and preferably for about 10 minutes to about 60 minutes, and more preferably for about 15 minutes to about 40 minutes. It is also preferable in that it can cope with low temperature curing at 80°C to 140°C.

The thermosetting resin composition according to the present invention can also be used in a wet-on-wet method for forming a multilayer coating film. In this case, examples thereof include a method for forming a multilayer coating film by coating a coating material composed of the thermosetting resin composition according to the present invention, then coating another coating material composition on the coating material without curing, and simultaneously baking the coating films of the two layers. In such a coating method, as a multilayer coating film of three or more layers, at least one of the layers may be formed of the thermosetting resin composition according to the present invention.

When the thermosetting resin composition according to the present invention is used for forming such a multilayer coating film, the coating material used in combination may be aqueous or solvent-based. Further, the curing system may be a curing system by the transesterification reaction as described above, or may be other curing systems such as melamine curing and isocyanate curing.

When the thermosetting resin composition according to the present invention is used in the field of coating materials, it is required to have sufficient curing performance such as smoothness, water resistance, and acid resistance.

On the other hand, when used in the field of adhesives, pressure-sensitive adhesives, or the like, high curing performance required for a coating material is not required. The thermosetting resin composition according to the present invention can reach a level that can be used as a coating material, and even a composition that does not reach such a level may be used in the field of adhesives, pressure-sensitive adhesives, or the like.

A cured film is obtained by three-dimensionally crosslinking the thermosetting resin composition according to the present invention.

Such a cured film has sufficient performance so that it can be used as a coating/adhesive.

The cured film also includes a cured film formed by the method for forming a multilayer coating film described above.

### Examples

Hereinafter, the present disclosure will be explained with reference to examples. However, the present disclosure is not limited to these examples. In addition, "part(s)" means "part(s) by weight" in the examples.

### Synthesis Example 1

35 parts of n-butyl methacrylate (Light Ester NB, manufactured by Kyoeisha Chemical Co., Ltd.), 30 parts of methoxycarbonylmethyl methacrylate, 25 parts of 4-hydroxybutyl acrylate, and 10 parts of styrene were mixed to obtain a monomer mixed solution, and 5 parts of AIBN as an initiator was dissolved in 20 parts of aromatic hydrocarbon (T-SOL 100) to prepare an initiator solution.

Into a stirrable flask, 80 parts of aromatic hydrocarbon (T-SOL 100) was charged, and the monomer solution and the initiator solution were added dropwise while nitrogen was charged thereto. A polymerization temperature at this time was set to 100°C. The dropwise addition was performed for 2 hours, and aging was further performed at 100°C for 4 hours to obtain a polymer solution A having a weight average molecular weight of 9400 and a dispersity of 1.80.

### Synthesis Example 2

60 parts of ethylene glycol monoacetoacetate monomethacrylate, 48 parts of methyl acrylate, 43 parts of potassium carbonate, 3 parts of 18-crown-6 ether, and 108 parts of tetrahydrofuran were mixed and were stirred at 50°C for 3 hours. After completion of the reaction, cyclohexane and water were added and the reaction product was washed with water. An organic layer was neutralized with a saturated ammonium chloride aqueous solution and was washed with water twice, and the obtained organic layer was concentrated under a reduced pressure to obtain a monomer A.

### Synthesis Example 3

35 parts of n-butyl methacrylate (Light Ester NB, manufactured by Kyoeisha Chemical Co., Ltd.), 30 parts of the monomer A, 25 parts of 4-hydroxybutyl acrylate, and 10 parts of styrene were mixed to obtain a monomer mixed solution, and 5 parts of AIBN as an initiator was dissolved in 20 parts of aromatic hydrocarbon (T-SOL 100) to prepare an initiator solution.

Into a stirrable flask, 80 parts of aromatic hydrocarbon (T-SOL 100) was charged, and the monomer solution and the initiator solution were added dropwise while nitrogen was charged thereto. A polymerization temperature at this time was set to 100°C. The dropwise addition was performed for 2 hours, and aging was further performed for 4 hours at 100°C to obtain a polymer solution B having a weight average molecular weight of 10700 and a dispersity of 1.73.

### Synthesis Example 4

Into a four-necked flask, 180 parts of succinic acid anhydride and 173 parts of methanol were charged and were reacted at 60°C to 70°C for 5 hours. Thereafter, methanol was removed under a reduced pressure at 60°C or higher to prepare monomethyl succinate.

190 parts of monomethyl succinate, 205 parts of glycidyl methacrylate, 2 parts of triethylbenzylammonium chloride, and a polymerization inhibitor were added and were reacted at 90°C for 10 hours or longer to obtain a monomer B.

### Synthesis Example 5

35 parts of n-butyl methacrylate (Light Ester NB, manufactured by Kyoeisha Chemical Co., Ltd.), 30 parts of the monomer B, 25 parts of 4-hydroxybutyl acrylate, and 10 parts of styrene were mixed to obtain a monomer mixed solution, and 5 parts of AIBN as an initiator was dissolved in 20 parts of aromatic hydrocarbon (T-SOL 100) to prepare an initiator solution.

Into a stirrable flask, 80 parts of aromatic hydrocarbon (T-SOL 100) was charged, and the monomer solution and the initiator solution were added dropwise while nitrogen was charged thereto. A polymerization temperature at this time was set to 100°C. The dropwise addition was performed for 2 hours, and aging was further performed for 4 hours at 100°C to obtain a polymer solution C having a weight average molecular weight of 10300 and a dispersity of 2.00.

### Synthesis Example 6

50 parts of n-butyl methacrylate (Light Ester NB, manufactured by Kyoeisha Chemical Co., Ltd.), 35 parts of 2-hydroxyethyl acrylate, and 15 parts of styrene were mixed to obtain a monomer mixed solution, and 5 parts of AIBN as an initiator was dissolved in 20 parts of aromatic hydrocarbon (T-SOL 100) to prepare an initiator solution.

Into a stirrable flask, 80 parts of aromatic hydrocarbon (T-SOL 100) was charged, and the monomer solution and the initiator solution were added dropwise while nitrogen was charged thereto. A polymerization temperature at this time was set to 100°C. The dropwise addition was performed for 2 hours, and further aging was performed for 4 hours at 100°C to obtain a polymer solution D having a weight average molecular weight of 7800 and a dispersity of 2.08.

### Synthesis Example 7

50 parts of methyl methacrylate (Light Ester M, manufactured by Kyoeisha Chemical Co., Ltd.), 35 parts of 4-hydroxybutyl acrylate, and 15 parts of styrene were used as a monomer mixed solution, and 5 parts of AIBN as an initiator was dissolved in 20 parts of propylene glycol monomethyl ether acetate to prepare an initiator solution.

Into a stirrable flask, 80 parts of propylene glycol monomethyl ether acetate was charged, and the monomer solution and the initiator solution were added dropwise while nitrogen was charged thereto. A polymerization temperature at this time was set to 100°C. The dropwise addition was performed for 2 hours, and further aging was performed for 4 hours at 100°C to obtain a polymer solution E having a weight average molecular weight of 6400 and a dispersity of 1.97.

### Synthesis Example 8

20 parts of 2-ethylhexyl methacrylate (Light Ester EH, manufactured by Kyoeisha Chemical Co., Ltd.), 30 parts of dimethyl itaconate, 25 parts of 2-hydroxyethyl acrylate, and 25 parts of styrene were used as a monomer mixed solution, and 5 parts of AIBN as an initiator was dissolved in 20 parts of aromatic hydrocarbon (T-SOL 100) to prepare an initiator solution.

Into a stirrable flask, 80 parts of aromatic hydrocarbon (T-SOL 100) was charged, and the monomer solution and the initiator solution were added dropwise while nitrogen was charged thereto. A polymerization temperature at this time was set to 100°C. The dropwise addition was performed for 2 hours, and aging was further performed for 4 hours at 100°C to obtain a polymer solution F having a weight average molecular weight of 6700 and a dispersity of 1.95.

In the examples, the weight average molecular weight and the dispersity were values of a molecular weight in terms of polystyrene and an area ratio measured by gel permeation chromatography (GPC). GPC KF-804L was used as a column, and tetrahydrofuran was used as a solvent.

### Examples 1 to 32 and Comparative Examples 1 to 3

Components shown in Tables 1 to 5 were mixed, and a coating film having a thickness of 400 µm was prepared by WET using an applicator and was cured at temperatures shown in the tables for 30 minutes. Thereafter, a gel fraction measurement, a xylene rubbing test, and a rigid pendulum test using an adjusting solution were performed.

Examples 29 to 32 shown in Table 5 show the effectiveness of the transesterification catalyst according to the present invention.

### Evaluation was performed as follows.

The gel fraction was measured by dissolving the film obtained in Examples in an acetone reflux for 30 minutes using a Soxhlet and measuring the remaining wt% of the film.

In the xylene rubbing test, a baked coated plate was rubbed ten times with a pharmacy gauze impregnated with xylene. After drying xylene, a surface state was visually observed and evaluated.
A: no change at all.
B: slight scratches were formed.
C: slightly dissolved.
D: the surface was whitened and dissolved.

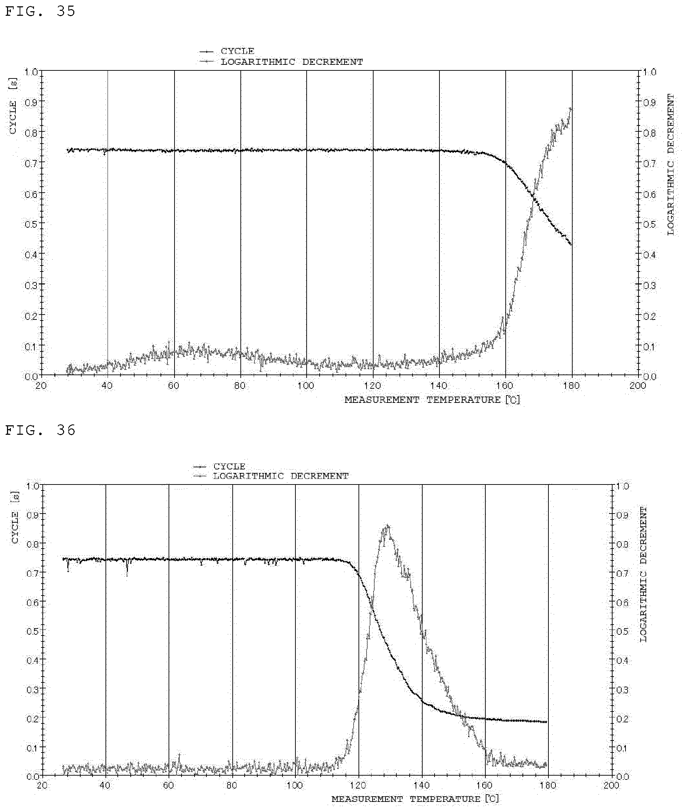

In the rigid pendulum test, a rigid pendulum tester (model number: RPT-3000W) manufactured by A&D Co., Ltd., was used, the temperature was increased at a temperature increase rate of 3°C/min, and a chart was created with a horizontal axis being the temperature increase rate and a vertical axis being a logarithmic decrement. From the measurement results, the curing start temperature was obtained as shown in FIG. 36.
Pendulum: FRB-100
Film thickness (WET): 100 µm

**Table 1**

| | Example 1 | Example 2 | Example 3 | Example 4 | Example 5 | Example 6 | Example 7 | Example 8 |
|---|---|---|---|---|---|---|---|---|
| Polymer solution A | 100 | 100 | 100 | 100 | 100 | 100 | 100 | 100 |
| Zinc acetylacetonate | 1.5 | 1.5 | 1.5 | 1.5 | 1.5 | 1.5 | 1.5 | 1.5 |
| Dioctylzinc mineral spirit solution (Zn 15%) | | | | | | | | |
| Ferric acetylacetonate | | | | | | | | |
| Aluminum acetylacetonate | | | | | | | | |
| Titanium acetylacetonate | | | | | | | | |
| Trioctylphosphine | 1.5 | | | | | | | |
| Triphenylphosphine | | 1.5 | | | | | | |
| Trioctylphosphine oxide | | | 1.5 | | | | | |
| Tricyclohexylphosphine oxide | | | | 1.5 | | | | |
| Diethyl 3,5-di-t-butyl-4-hydroxybenzyl phosphonate | | | | | 1.5 | | | |
| Hexamethylphosphoric triamide | | | | | | 1.5 | | |
| Triphenylphosphine sulfide | | | | | | | 1.5 | |
| Bakinp temperature | 150°C | 150°C | 150°C | 150°C | 150°C | 150°C | 150°C | 150°C |
| Gel fraction (%) | 100 | 100 | 100 | 100 | 99 | 97 | 97 | 96 |
| Xylene rubbing | A | A | A | A | A | A | A | A |
| Rigid pendulum test | FIG. 1 | FIG. 2 | FIG. 3 | FIG. 4 | FIG. 5 | FIG. 6 | FIG. 7 | FIG. 8 |
| Curing start temperature (°C) | 71 | 92 | 80 | 78 | 94 | 75 | 95 | 100 |

**Table 2**

| | Example 9 | Example 10 | Example 11 | Example 12 | Example 13 | Comparative Example 1 | Comparative Example 2 |
|---|---|---|---|---|---|---|---|
| Polymer solution A | 100 | 100 | 100 | 100 | 100 | 100 | 100 |
| Zinc acetylacetonate | | | | | | | |
| Dioctylzinc mineral spirit solution (Zn 15%) | 1.85 | | | | | | 1.85 |
| Ferric acetylacetonate | | 1.5 | | | | | |
| Aluminum acetylacetonate | | | 1.5 | | | | |
| Titanium acetylacetonate | | | | 1.5 | 1.5 | | |
| Trioctylphosphine | | | | | | | |
| Triphenylphosphine | | | | | | | |
| Ttrioctylphosphine oxide | 1.5 | 1.5 | 1.5 | 1.5 | | 1.5 | |
| Tricyclohexylphosphine oxide | | | | | | | |
| Diethyl 3,5-di-t-butyl-4-hydroxybenzyl phosphonate | | | | | | | |
| Hexamethylphosphoric triamide | | | | | | | |
| Triphenylphosphine sulfide | | | | | | | |
| Baking temperature | 150°C | 150°C | 150°C | 150°C | 150°C | 150°C | 150°C |
| Gel fraction (%) | 96 | 100 | 100 | 100 | 100 | 1 | 93 |
| Xylene rubbing | A | A | A | A | A | D | C |
| Rigid pendulum test | FIG. 9 | FIG. 10 | FIG. 11 | FIG. 12 | FIG. 13 | FIG. 14 | FIG. 15 |
| Curing start temperature (°C) | 119 | 99 | 118 | 118 | 120 | 157 | 147 |

**Table 3**

| | Example 14 | Example 15 | Example 16 | Example 17 | Example 18 | Example 19 | Example 20 | Example 21 | Comparative Example 3 |
|---|---|---|---|---|---|---|---|---|---|
| Polymer solution A | 100 | 100 | 100 | 100 | 100 | 100 | 100 | 100 | 100 |
| Zinc acetylacetonate | 1.5 | 1.5 | 1 | 1.5 | 1.5 | 1.5 | 1.5 | | |
| Zirconium acetylacetonate | | | | | | | | 1.5 | |
| Urea | 0.3 | | | | | | | | |
| Diethylthiourea | | 1.5 | 1 | 1.5 | | | | | 1.5 |
| Isoquinoline | | | | | 1.5 | | | | |
| Dimethylaminopyridine | | | | | | 0.75 | | | |
| Dimethyl sulfoxide | | | | | | | 1.5 | | |
| Baking temperature | 150°C | 150°C | 100°C | 80°C | 150°C | 150°C | 150°C | 150°C | 150°C |
| Gel fraction (%) | 98 | 100 | 98 | 91 | 100 | 100 | 99 | 100 | 4 |
| Xylene rubbing | A | A | A | A | A | A | A | A | D |
| Rigid pendulum test | FIG. 16 | FIG. 17 | FIG. 18 | FIG. 19 | FIG. 20 | FIG. 21 | FIG. 22 | FIG. 23 | FIG. 24 |
| Curing start temperature (°C) | 74 | 70 | | | 72 | 93 | 86 | 67 | 158 |

**Table 4**

| | Example 22 | Example 23 | Example 24 | Example 25 | Example 26 | Example 27 | Example 28 |
|---|---|---|---|---|---|---|---|
| Polymer solution B | 100 | 100 | 100 | 100 | 100 | | |
| Polymer solution C | | | | | | 100 | |
| Polymer solution D | | | | | | | 70 |
| Tributyl citrate | | | | | | | 15 |
| Zinc acetylacetonate | 1.5 | 1.5 | | | | 1.5 | 1.5 |
| Dioctyltin diacetate | | | 1.5 | 1.5 | | | |
| Zirconium acetylacetonate | | | | | 1.5 | | |
| Trioctylphosphine oxide | 1.5 | | 1.5 | | | 1.5 | 1.5 |
| Diethylthiourea | | | | 1.5 | | | |
| Isoquinoline | | | | | | | |
| Baking temperature | 150°C | 150°C | 150°C | 150°C | 150°C | 150°C | 150°C |
| Gel fraction (%) | 98 | 99 | 98 | 96 | 100 | 97 | 91 |
| Xylene rubbing | A | A | A | A | A | A | A |
| Rigid pendulum test | FIG. 25 | FIG. 26 | FIG. 27 | FIG. 28 | FIG. 29 | FIG. 30 | FIG. 31 |
| Curing start temperature (°C) | 108 | 117 | 124 | 125 | 83 | 124 | 122 |

**Table 5**

| | Example 29 | Example 30 | Example 31 | Example 32 |
|---|---|---|---|---|
| Polymer solution D | 70 | 100 | | |
| Polymer solution E | | | 100 | |
| Polymer solution F | | | | 100 |
| Tributyl citrate | 15 | | | |
| Zinc acetylacetonate | 1.5 | 1.5 | 1.5 | 1.5 |
| Trioctylphosphine oxide | | 1.5 | 1.5 | 1.5 |
| Baking temperature | 150°C | 150°C | 150°C | 150°C |
| Gel fraction (%) | 95 | 85 | 90 | 77 |
| Xylene rubbing | C | D | D | D |
| Rigid pendulum test | FIG. 32 | FIG. 33 | FIG. 34 | FIG. 35 |
| Curing start temperature (°C) | 136 | 166 | 169 | 158 |

### Synthesis Example 9

In a stirrable flask, 20 parts of cyanuric acid was dissolved in a mixed solution of 150 parts of N-methylpyrrolidone and 47 parts of triethylamine, and the temperature was increased to 90°C. 50 parts of methyl chloroacetate was added dropwise at 90°C for 1 hour, and then was stirred at 90°C for 2 hours. After completion of the reaction, 300 parts of toluene and 150 parts of water were added for washing, and then an organic layer was washed with 150 parts of 3% aqueous sodium hydrogencarbonate once and with 150 parts of water twice. The obtained organic layer was concentrated under a reduced pressure to obtain an ester compound A.

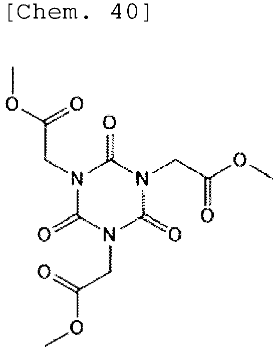

### Synthesis Example 10

In a stirrable flask, 20 parts of cyanuric acid was dissolved in a mixed solution of 150 parts of N-methylpyrrolidone and 47 parts of triethylamine, and the temperature was increased to 90°C. 63 parts of methyl chlorobutyrate was added dropwise at 90°C for 1 hour, and then was stirred at 90°C for 15 hours. After completion of the reaction, 300 parts of toluene and 150 parts of water were added for washing, and then an organic layer was washed with 150 parts of 3% aqueous sodium hydrogencarbonate once and with 150 parts of water twice. The obtained organic layer was concentrated under a reduced pressure to obtain an ester compound B.

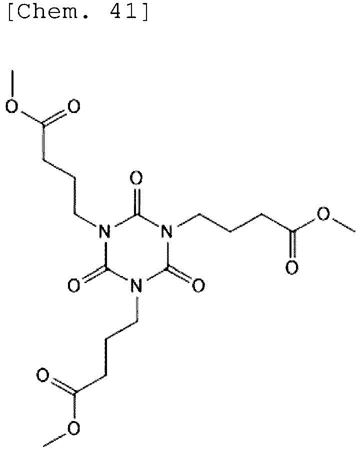

### Synthesis Example 11

Into a stirrable flask, 25 parts of tris(2-carboxyethyl) isocyanurate, 100 parts of methanol, 100 parts of trimethyl orthoformate, and 0.8 parts of p-toluenesulfonic acid were charged, and were reacted at 80°C for 5 hours. After completion of the reaction, 200 parts of toluene and 100 parts of water were added for washing, and then an organic layer was washed with 100 parts of 3% aqueous sodium hydrogencarbonate once and with 100 parts of water twice. The obtained organic layer was concentrated under a reduced pressure to obtain an ester compound C.

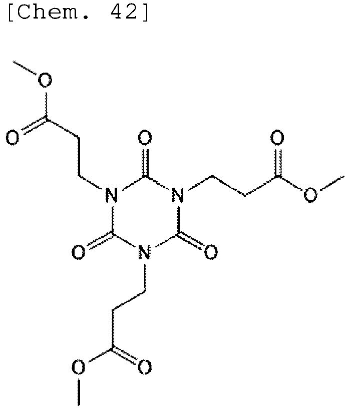

### Synthesis Example 12

In a stirrable flask, 75 parts of methyl glycolate and 30 parts of potassium carbonate were cooled to 5°C, and 25 parts of cyanuric acid chloride was charged thereto while maintaining a solution temperature at 10°C or lower. After completion of the reaction, 200 parts of water was charged thereto, and the generated precipitate was collected by filtration. The obtained solid was washed with water several times and then was dried under a reduced pressure to obtain an ester compound D.

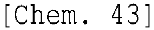

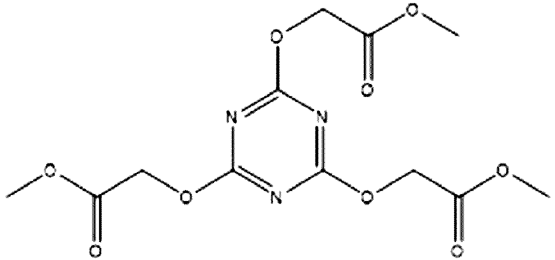

### Examples 33 to 36

Components shown in Table 6 were mixed, and a coating film having a thickness of 400 µm was formed by WET using an applicator and was cured at temperatures shown in Table 6 for 30 minutes. Thereafter, a gel fraction measurement, a xylene rubbing test, and a rigid pendulum test using an adjusting solution were performed.

**Table 6**

| | Example 33 | Example 34 | Example 35 | Example 36 |
|---|---|---|---|---|
| Polymer solution D | | | 70 | |
| Polymer solution E | 70 | 70 | | 70 |
| Ester compound A | 15 | | | |
| Ester compound B | | 15 | | |
| Ester compound C | | | 15 | |
| Ester compound D | | | | 15 |
| Zinc acetylacetonate | 1.5 | 1.5 | 1.5 | 1.5 |
| Trioctylphosphine oxide | 1.5 | 1.5 | 1.5 | 1.5 |
| Baking temperature | 150°C | 150°C | 150°C | 150°C |
| Gel fraction (%) | 95 | 97 | 96 | 96 |
| Xylene rubbing | A | A | A | A |
| Rigid pendulum test | FIG. 36 | FIG. 37 | FIG. 38 | FIG. 39 |
| Curing start temperature (°C) | 119 | 119 | 118 | 90 |

### Examples 37 to 50

Components shown in Tables 7 and 8 were mixed, and a coating film having a thickness of 400 µm was prepared by WET using an applicator and was cured at temperatures shown in the tables for 30 minutes. Thereafter, a gel fraction measurement, a xylene rubbing test, and a rigid pendulum test using an adjusting solution were performed.

**Table 7**

| | Example 37 | Example 38 | Example 39 | Example 40 | Example 41 | Example 42 | Example 43 |
|---|---|---|---|---|---|---|---|
| Polymer solution A | 100 | 100 | 100 | 100 | 100 | 100 | 100 |
| Polymer solution C | | | | | | | |
| Zinc acetylacetonate | 1.5 | 1.5 | 1.5 | | 1.5 | 1.5 | 1.5 |
| Zinc oxide acethylacetone dispersion (Zn 10%) | | | | 3 | | | |
| Dodecyltrimethylammonium bromide | 1.5 | | | | | | |
| Dodecyltributylphosphonium bromide | | 1.5 | | | | | |
| Triethylbenzylammonium chloride | | | 1.5 | 0.75 | | | |
| Tetrabutylammonium acetate | | | | | 1.5 | | |
| Tetrabutylammonium hydroxide | | | | | | 1.5 | |
| Tetrabutylphosphonium hydroxide | | | | | | | 1.5 |
| Tetrabutylammonium fluoride | | | | | | | |
| Tetrabutylammonium iodide | | | | | | | |
| Tetramethylammonium chloride | | | | | | | |
| Choline chloride | | | | | | | |
| Baking temperature | 100°C | 100°C | 100°C | 100°C | 100°C | 100°C | 100°C |
| Gel fraction (%) | 97 | 98 | 98 | 97 | 98 | 99 | 99 |
| Xylene rubbing | A | A | A | A | A | A | A |
| Rigid pendulum test | FIG. 40 | FIG. 41 | FIG. 42 | FIG. 43 | FIG. 44 | FIG. 45 | FIG. 46 |
| Curing start temperature (°C) | 67 | 68 | 58 | 67 | 82 | 60 | 63 |

**Table 8**

| | Example 44 | Example 45 | Example 46 | Example 47 | Example 48 | Example 49 | Example 50 |
|---|---|---|---|---|---|---|---|
| Polymer solution A | | | | | | | |
| Polymer solution C | 100 | 100 | 100 | 100 | 100 | 100 | 100 |
| Zinc acetylacetonate | 1.5 | 1.5 | 1.5 | 1.5 | 1.5 | 1.5 | 1.5 |
| Zinc oxide acethylacetone dispersion (Zn 10%) | | | | | | | |
| Dodecyltri methylammoni um bromide | | | | | | | |
| Dodecyltributylphosphonium bromide | 1.5 | | | | | | |
| Triethylbenzylammonium chloride | | 1.5 | | | | | |
| Tetrabutylammonium acetate | | | | | | | |
| Tetrabutylammonium hydroxide | | | 1.5 | | | | |
| Tetrabutylphosphonium hydroxide | | | | | | | |
| Tetrabutylammonium fluoride | | | | 1.5 | | | |
| Tetrabutylammonium iodide | | | | | 1.5 | | |
| Tetramethylammonium chloride | | | | | | 1.5 | |
| Choline chloride | | | | | | | 1.5 |
| Baking temperature | 150°C | 150°C | 150°C | 150°C | 150°C | 150°C | 150°C |
| Gel fraction (%) | 97 | 97 | 99 | 98 | 96 | 99 | 99 |
| Xylene rubbing | A | A | A | A | A | A | A |
| Rigid pendulum test | FIG. 47 | FIG. 48 | FIG. 49 | FIG. 50 | FIG. 51 | FIG. 52 | FIG. 53 |
| Curing start temperature (°C) | 121 | 102 | 92 | 113 | 124 | 93 | 93 |

### Synthesis Example 13

40 parts of n-butyl methacrylate (Light Ester NB, manufactured by Kyoeisha Chemical Co., Ltd.), 50 parts of 4-hydroxybutyl acrylate, and 10 parts of styrene were mixed to obtain a monomer mixed solution, and 5 parts of AIBN as an initiator was dissolved in 20 parts of aromatic hydrocarbon (T-SOL 100) to prepare an initiator solution. Into a stirrable flask, 80 parts of aromatic hydrocarbon (T-SOL 100) was charged, and the monomer solution and the initiator solution were added dropwise while nitrogen was charged thereto. A polymerization temperature at this time was set to 100°C. The dropwise addition was performed for 2 hours, and aging was further performed for 4 hours at 100°C to obtain a polymer solution G having a weight average molecular weight of 8000 and a dispersity of 1.97.

### Synthesis Example 14

40 parts of trimethylolpropane triacrylate, 55 parts of dimethyl malonate, 56 parts of potassium carbonate, 1.5 parts of 18-crown-6 ether, and 95 parts of tetrahydrofuran were mixed and were stirred at 50°C for 3 hours. After completion of the reaction, cyclohexane and water were added and the reaction product was washed with water. An organic layer was neutralized with a saturated ammonium chloride aqueous solution and then was washed with water twice, and the obtained organic layer was concentrated under a reduced pressure to obtain an ester compound E.

### Synthesis Example 15

To 190 parts of monomethyl succinate produced under the same conditions as in Synthesis Example 4 and 201.5 parts of trimethylolpropane triglycidyl ether (EPOLITE 100MF, manufactured by Kyoeisha Chemical Co., Ltd.), 2 parts of triethylbenzylammonium chloride and a polymerization inhibitor were added and were reacted at 90°C for 10 hours or longer to obtain an ester compound F.

### Examples 51 to 53 and Comparative Examples 4 and 5

Components shown in Table 9 were mixed, a coating film having a thickness of 400 µm was formed by WET using an applicator and was cured at temperatures shown in Table 9 for 30 minutes. Thereafter, a gel fraction measurement, a xylene rubbing test, and a rigid pendulum test using an adjusting solution were performed.

**Table 9**

| | Example 51 | Example 52 | Comparative Example 4 | Example 53 | Comparative Example 5 |
|---|---|---|---|---|---|
| Polymer solution A | 200 | | | | |
| Polymer solution G | | 140 | 140 | 100 | 100 |
| Ester compound E | | 30 | 30 | | |
| Ester compound F | | | | 50 | 50 |
| Methanol | | 15 | 15 | 15 | 15 |
| Zinc acetylacetonate | 3 | 3 | 3 | 3 | 3 |
| 1,10-phenanthroline monohydrate | 1.5 | 1.5 | | 1.5 | |
| Acetic acid | 3 | 3 | 3 | 3 | 3 |
| Baking temperature | 150°C | 150°C | 150°C | 150°C | 150°C |
| Gel fraction (%) | 99 | 98 | 95 | 95 | 94 |
| Xylene rubbing | A | A | C | A | C |
| Rigid pendulum test | FIG. 54 | FIG. 55 | FIG. 56 | FIG. 57 | FIG. 58 |
| Curing start temperature (°C) | 105 | 122 | 148 | 128 | 143 |

From the results of Tables 1 to 4 and 6 to 9, it can be seen that a thermosetting resin composition exhibiting a low-temperature curing reaction can be obtained by using the resin component (A) and the transesterification catalyst (B) in combination, which are excellent in curing reactivity.

In addition, from the results of the above Examples, the transesterification catalyst according to the present invention is not limited to low-temperature curing, and can be suitably used as a transesterification catalyst in a thermosetting resin composition in which curing is performed by a transesterification reaction. Further, the transesterification catalyst according to the present invention has good transesterification performance, and can be used as a catalyst when various transesterification reactions are performed.

### Industrial Applicability

The thermosetting resin composition according to the present invention can be adapted to various curing conditions and has extremely high versatility.

The transesterification catalyst according to the present invention can be used for various transesterification reactions. Particularly preferably, the transesterification catalyst according to the present invention can be suitably used as a curing catalyst in a thermosetting resin composition in which a transesterification reaction is an exchange reaction.

## Claims

1. A thermosetting resin composition comprising:
a resin component (A) containing -COOR (R is an alkyl group having 50 or less carbon atoms) and a hydroxy group; and
a transesterification catalyst (B), wherein
a curing start temperature is 130°C or lower, and
a gel fraction when cured by baking at 150°C for 30 minutes is 80% or more.

2. The thermosetting resin composition according to claim 1, wherein
the transesterification catalyst (B) contains
a compound (B-1) containing at least one metal element selected from the group consisting of zinc, tin, titanium, aluminum, zirconium, and iron, and
at least one compound (B-2) selected from the group consisting of an organophosphorus compound, urea, alkylated urea, thiourea, alkylated thiourea, a sulfoxide compound, a quaternary ammonium compound, a quaternary phosphonium compound, and pyridine, quinoline, isoquinoline, phenanthroline, and a derivative thereof.

3. A thermosetting resin composition comprising:
a resin component (A) containing -COOR (R is an alkyl group having 50 or less carbon atoms) and a hydroxy group; and
a transesterification catalyst (B), wherein
the transesterification catalyst (B) is a zirconium compound.

4. A thermosetting resin composition comprising:
a resin component (A) containing -COOR (R is an alkyl group having 50 or less carbon atoms) and a hydroxy group; and
a transesterification catalyst (B), wherein
the transesterification catalyst (B) contains
a compound (B-1) containing at least one metal element selected from the group consisting of zinc, tin, titanium, aluminum, zirconium, and iron, and
at least one compound (B-2) selected from the group consisting of an organophosphorus compound, urea, alkylated urea, thiourea, alkylated thiourea, a sulfoxide compound, a quaternary ammonium compound, a quaternary phosphonium compound, and pyridine, quinoline, isoquinoline, phenanthroline, and a derivative thereof.

5. A transesterification catalyst comprising:
a compound (B-1) containing at least one metal element selected from the group consisting of zinc, tin, titanium, aluminum, zirconium, and iron; and
at least one compound (B-2) selected from the group consisting of an organophosphorus compound, urea, alkylated urea, thiourea, alkylated thiourea, a sulfoxide compound, a quaternary ammonium compound, a quaternary phosphonium compound, phenanthroline, and a phenanthroline derivative.
